(19) Europäisches Patentamt
European Patent Office
Office européen des brevets

(11) EP 4 306 553 A1

(12) EUROPEAN PATENT APPLICATION
published in accordance with Art. 153(4) EPC

(43) Date of publication:
**17.01.2024 Bulletin 2024/03**

(21) Application number: **22767227.6**

(22) Date of filing: **10.03.2022**

(51) International Patent Classification (IPC):
***C08F 14/18*** (2006.01) ***C08F 259/08*** (2006.01)
***C08F 214/18*** (2006.01) ***C08L 27/12*** (2006.01)
***C08L 81/02*** (2006.01) ***C08L 81/06*** (2006.01)
***C09D 127/12*** (2006.01) ***C08L 79/08*** (2006.01)
***C09D 7/63*** (2018.01) ***C09D 7/65*** (2018.01)

(52) Cooperative Patent Classification (CPC):
**C08F 14/18; C08F 214/18; C08F 259/08; C08L 27/12; C08L 79/08; C08L 81/02; C08L 81/06; C09D 7/63; C09D 7/65; C09D 127/12**

(86) International application number:
**PCT/JP2022/010512**

(87) International publication number:
**WO 2022/191273 (15.09.2022 Gazette 2022/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.03.2021 JP 2021038786**

(71) Applicant: **Daikin Industries, Ltd.**
**Osaka 530-0001 (JP)**

(72) Inventors:
- **MOMOSE, Hiromichi**
  **Osaka-shi, Osaka 530-0001 (JP)**
- **SHIBATA, Ozora**
  **Osaka-shi, Osaka 530-0001 (JP)**
- **YAMAMOTO, Emi**
  **Osaka-shi, Osaka 530-0001 (JP)**
- **KATO, Taketo**
  **Osaka-shi, Osaka 530-0001 (JP)**
- **NAKATANI, Yasukazu**
  **Osaka-shi, Osaka 530-0001 (JP)**

(74) Representative: **Hoffmann Eitle**
**Patent- und Rechtsanwälte PartmbB**
**Arabellastraße 30**
**81925 München (DE)**

# (54) COATING COMPOSITION, COATING FILM, LAYERED PRODUCT, AND COATED ARTICLE

(57) Provided is a coating material composition comprising a fluororesin, a polymer (I) containing a polymerization unit (I) derived from a monomer represented by the general formula (I) below, and an aqueous medium, wherein the content of the polymer (I) is 2,000 ppm by mass or less based on the coating material composition:

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

EP 4 306 553 A1

## Description

TECHNICAL FIELD

The present disclosure relates to a coating material composition, a coating film, a laminated product, and a coated article.

BACKGROUND ART

Polytetrafluoroethylene (PTFE) is excellent in heat resistance, chemical resistance, water- and oilrepellency, releasability, and slidability. For this reason, aqueous dispersions containing PTFE are used as coating material compositions in the fields of molding metal mold releasing materials, rolls for office automation (OA) equipment, household products such as irons, kitchen utensils such as frying pans and hot plates, food industry, electrical industry, machinery industry, and so on.

Patent Document 1 describes an aqueous dispersion composition for a primer for a fluororesin coating film layer, comprising a water-soluble and curable polyamide-imide-based and/or polyimide-based binder polymer (A), ceramic spherical particles (B), modified polytetrafluoroethylene particles (C), and an aqueous medium (D), characterized in that the modified polytetrafluoroethylene particles (C) are modified polytetrafluoroethylene particles having a melt creep viscosity at 380°C in the range of $8 \times 10^9$ or more and $1.0 \times 10^{10}$ Pa·s or less and a standard specific gravity of 2.146 or more and 2.170 or less.

Patent Document 2 describes a laminated product composed of: a substrate; a primer layer that is formed on the substrate, contains inorganic particles (a) with an average particle size of 3 $\mu$m or more and a heat-resistant resin (a), and does not contain a fluororesin; an intermediate layer that is formed on the primer layer and contains a fluororesin (b) and a heat-resistant resin (b); and a topcoat layer that is formed on the intermediate layer and contains a fluororesin (c).

Patent Document 3 describes a method for producing a fluoropolymer, comprising carrying out polymerization of a fluoromonomer in an aqueous medium in the presence of a polymer (1) to obtain a fluoropolymer, the polymer (1) containing a polymerization unit (1) derived from a monomer represented by the following general formula (1): $CX_2=CY(-CZ_2-O-Rf-A)$ (1) wherein X is the same or different and is -H or -F; Y is -H, -F, an alkyl group, or a fluorine-containing alkyl group; Z is the same or different and is -H, -F, an alkyl group, or a fluoroalkyl group; Rf is a fluorine-containing alkylene group having 1 to 40 carbon atoms or a fluorine-containing alkylene group having 2 to 100 carbon atoms and having an ether bond; and A is -COOM, - $SO_3M$, or -$OSO_3M$, where M is -H, a metal atom, - $NR^7_4$, imidazolium optionally having a substituent, pyridinium optionally having a substituent, or phosphonium optionally having a substituent, and $R^7$ is H or an organic group, with the proviso that at least one of X, Y, and Z contains a fluorine atom.

Patent Document 4 describes a method for producing a fluoropolymer aqueous dispersion, characterized in that the method comprises step A in which ultrafiltration, microfiltration, or dialysis membrane treatment, or a combination thereof, is performed on a pretreatment aqueous dispersion containing a fluoropolymer obtained by polymerization in the presence of a polymer (I) (with the proviso that the polymer (I) is excluded), the polymer (I) containing a polymerization unit (I) derived from a monomer represented by the following general formula (I):

$$CX^1X^3=CX^2R(-CZ^1Z^2-A^0)_m \quad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

RELATED ART

PATENT DOCUMENTS

Patent Document 1: Japanese Patent No. 4853081
Patent Document 2: Japanese Patent Laid-Open No. 2015-127142
Patent Document 3: International Publication No. WO 2019/168183
Patent Document 4: International Publication No. WO 2020/218620

SUMMARY OF THE INVENTION

PROBLEM TO BE SOLVED BY THE INVENTION

An object of the present disclosure is to provide a novel coating material composition.

MEANS FOR SOLVING THE PROBLEM

According to the present disclosure, there is provided a coating material composition comprising a fluororesin, a polymer (I) containing a polymerization unit (I) derived from a monomer represented by the general formula (I) below, and an aqueous medium, wherein the content of the polymer (I) is 2,000 ppm by mass or less based on the coating material composition (in the present disclosure, this may be referred to as the "first coating material composition"):

$$CX^1X^3=CX^2R\ (-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

It is preferable that the viscosity of the first coating material composition of the present disclosure be 100 mPa·s or more and 1,000 mPa·s or less.

In the first coating material composition of the present disclosure, it is preferable that the content of the fluororesin be 15.0% by mass or more and 52.0% by mass or less based on the coating material composition.

In the first coating material composition of the present disclosure, it is preferable that the fluororesin be at least one selected from the group consisting of a polytetrafluoroethylene, a tetrafluoroethylene/hexafluoropropylene copolymer, a tetrafluoroethylene/perfluoro(alkyl vinyl ether) copolymer, an ethylene/tetrafluoroethylene copolymer, and an ethylene/chlorotrifluoroethylene copolymer.

It is preferable that the stability retention time of the first coating material composition of the present disclosure as measured by a stirring test be 10 minutes or longer.

In the first coating material composition of the present disclosure, it is preferable that the content of the polymer (I) be 0.1 ppm by mass or more based on the coating material composition.

It is preferable that the first coating material composition of the present disclosure further comprise a nonionic surfactant.

According to the present disclosure, there is also provided a coating material composition comprising a fluororesin and an aqueous medium, and having a stability retention time as measured by a stirring test of 10 minutes or longer and a viscosity of 50 mPa·s or more and 1,000 mPa·s or less (in the present disclosure, this may be referred to as the "second coating material composition").

In the second coating material composition of the present disclosure, it is preferable that the content of the fluororesin be 15.0% by mass or more and 52.0% by mass or less based on the coating material composition.

It is preferable that the second coating material composition of the present disclosure comprise, as the fluororesin, at least one selected from the group consisting of a polytetrafluoroethylene, a tetrafluoroethylene/hexafluoropropylene copolymer, and a tetrafluoroethylene/perfluoro(alkyl vinyl ether) copolymer.

It is preferable that the second coating material composition of the present disclosure comprise, as the fluororesin, at least a polytetrafluoroethylene.

In the second coating material composition of the present disclosure, it is preferable that the content of the polytetrafluoroethylene in the coating material composition be 60% by mass or more based on the fluororesin.

It is preferable that the second coating material composition of the present disclosure comprise, as the fluororesin, only a tetrafluoroethylene/hexafluoropropylene copolymer, and that the content of the fluororesin be 30.0% by mass or more and 50.0% by mass or less based on the coating material composition.

It is preferable that the second coating material composition of the present disclosure comprise, as the fluororesin, only a tetrafluoroethylene/perfluoro(alkyl vinyl ether) copolymer, and that the content of the fluororesin be 30.0% by mass or more and 50.0% by mass or less based on the coating material composition.

According to the present disclosure, there is also provided a coating material composition comprising a fluororesin, a nonionic surfactant, an anionic hydrocarbon-based surfactant, and an aqueous medium, and being substantially free from a fluorine-containing compound containing a hydrophilic group (in the present disclosure, this may be referred to as the "third coating material composition").

In the third coating material composition of the present disclosure, it is preferable that the fluorine-containing compound containing a hydrophilic group be an anionic fluorine-containing surfactant containing fluorine in which the anionic moiety has a molecular weight of 800 or less.

In the third coating material composition of the present disclosure, it is preferable that the content of the fluorine-containing compound containing a hydrophilic group be 100 ppb by mass or less.

In the third coating material composition of the present disclosure, it is preferable that the fluorine-containing compound containing a hydrophilic group be a compound represented by any of the following formulas:

$H(CF_2)_7COOM$;

$F(CF_2)_7COOM$;

$F(CF_2)_5COOM$;

$H(CF_2)_6COOM$;

$CF_3O(CF_2)_3OCHFCF_2COOM$;

$C_3F_7OCF(CF_3)CF_2OCF(CF_3)COOM$;

$CF_3CF_2CF_2OCF(CF_3)COOM$;

$CF_3CF_2OCF_2CF_2OCF_2COOM$;

$C_2F_5OCF(CF_3)CF_2OCF(CF_3)COOM$;

$CF_3OCF(CF_3)CF_2OCF(CF_3)COOM$;

$CF_2ClCF_2CF_2OCF(CF_3)CF_2OCF_2COOM$;

$CF_2ClCF_2CF_2OCF_2CF(CF_3)OCF_2COOM$;

$CF_2ClCF(CF_3)OCF(CF_3)CF_2OCF_2COOM$;

$CF_2ClCF(CF_3)OCF_2CF(CF_3)OCF_2COOM$;

and

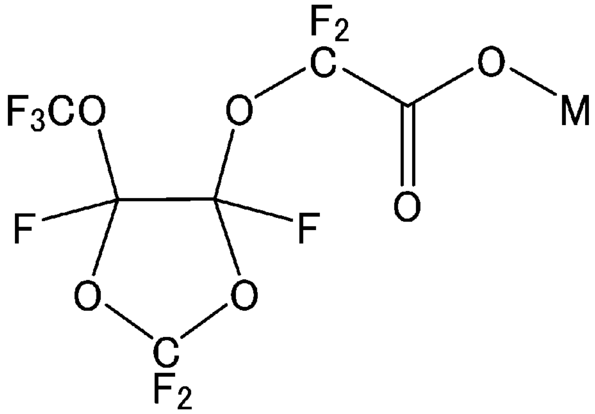

wherein M is H, a metal atom, $NR^7_4$, imidazolium optionally having a substituent, pyridinium optionally having a substituent, or phosphonium optionally having a substituent, and $R^7$ is H or an organic group.

In the third coating material composition of the present disclosure, it is preferable that the content of the fluororesin be 15.0% by mass or more and 52.0% by mass or less based on the coating material composition.

It is preferable that the third coating material composition of the present disclosure comprise, as the fluororesin, at least one selected from the group consisting of a polytetrafluoroethylene, a tetrafluoroethylene/hexafluoropropylene copolymer, and a tetrafluoroethylene/perfluoro(alkyl vinyl ether) copolymer.

It is preferable that the third coating material composition of the present disclosure comprise, as the fluororesin,

at least a polytetrafluoroethylene.

In the third coating material composition of the present disclosure, it is preferable that the content of the polytetrafluoroethylene in the coating material composition be 60% by mass or more based on the fluororesin.

It is preferable that the coating material composition of the present disclosure (in the present disclosure, the first coating material composition, the second coating material composition, and the third coating material composition of the present disclosure may be referred to as the "coating material composition of the present disclosure") further comprise a film forming agent.

It is preferable that the coating material composition of the present disclosure further comprise a binder resin, and that the binder resin be at least one selected from the group consisting of polyamide-imide, polyimide, polyethersulfone, and polyphenylene sulfide.

According to the present disclosure, there is also provided a coating film obtained by applying the above coating material composition.

According to the present disclosure, there is also provided a laminated product comprising the above coating film.

According to the present disclosure, there is also provided a coated article comprising the above coating film or the above laminated product.

EFFECTS OF INVENTION

According to the present disclosure, a new coating material composition can be provided.

BRIEF DESCRIPTION OF DRAWING

Figure 1(a) is a front view of a stirring blade used in a stirring test. Figure 1(b) is a left side view of the stirring blade used in the stirring test.

DESCRIPTION OF EMBODIMENTS

Hereinafter, specific embodiments of the present disclosure will be described in detail, but the present disclosure is not limited to the following embodiments.

The term "organic group" as used herein means a group containing one or more carbon atoms or a group formed by removing one hydrogen atom from an organic compound.

Examples of the "organic group" include:

an alkyl group optionally having one or more substituents;
an alkenyl group optionally having one or more substituents;
an alkynyl group optionally having one or more substituents;
a cycloalkyl group optionally having one or more substituents;
a cycloalkenyl group optionally having one or more substituents;
a cycloalkadienyl group optionally having one or more substituents;
an aryl group optionally having one or more substituents;
an aralkyl group optionally having one or more substituents;
a non-aromatic heterocyclic group optionally having one or more substituents;
a heteroaryl group optionally having one or more substituents;
a cyano group;
a formyl group;

RaO-;

RaCO-;

$RaSO_2$-;

RaCOO-;

RaNRaCO-;

RaCONRa-;

RaOCO-;

$RaOSO_2$-;

and

$RaNRbSO_2$-,

wherein Ra is independently
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents, an aralkyl group optionally having one or more substituents,
a non-aromatic heterocyclic group optionally having one or more substituents, or
a heteroaryl group optionally having one or more substituents, and
Rb is independently H or an alkyl group optionally having one or more substituents.

The above organic group is preferably an alkyl group optionally having one or more substituents.

In addition, the term "substituent" as used herein means a group that is capable of replacing another atom or group. Examples of the "substituent" include an aliphatic group, an aromatic group, a heterocyclic group, an acyl group, an acyloxy group, an acylamino group, an aliphatic oxy group, an aromatic oxy group, a heterocyclic oxy group, an aliphatic oxycarbonyl group, an aromatic oxycarbonyl group, a heterocyclic oxycarbonyl group, a carbamoyl group, an aliphatic sulfonyl group, an aromatic sulfonyl group, a heterocyclic sulfonyl group, an aliphatic sulfonyloxy group, an aromatic sulfonyloxy group, a heterocyclic sulfonyloxy group, a sulfamoyl group, an aliphatic sulfonamide group, an aromatic sulfonamide group, a heterocyclic sulfonamide group, an amino group, an aliphatic amino group, an aromatic amino group, a heterocyclic amino group, an aliphatic oxycarbonylamino group, an aromatic oxycarbonylamino group, a heterocyclic oxycarbonylamino group, an aliphatic sulfinyl group, an aromatic sulfinyl group, an aliphatic thio group, an aromatic thio group, a hydroxy group, a cyano group, a sulfo group, a carboxy group, an aliphatic oxyamino group, an aromatic oxy amino group, a carbamoylamino group, a sulfamoylamino group, a halogen atom, a sulfamoylcarbamoyl group, a carbamoyl sulfamoyl group, a dialiphatic oxyphosphinyl group, and a diaromatic oxyphosphinyl group.

The above aliphatic group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the above aliphatic group include an alkyl group having 1 to 8, preferably 1 to 4, carbon atoms in total, such as a methyl group, an ethyl group, a vinyl group, a cyclohexyl group, and a carbamoylmethyl group.

The above aromatic group may have, for example, a nitro group, a halogen atom, an aliphatic oxy group, a carbamoyl group, an aliphatic oxycarbonyl group, an aliphatic thio group, an amino group, an aliphatic amino group, an acylamino group, a carbamoylamino group, or the like. Examples of the above aromatic group include an aryl group having 6 to 12 carbon atoms, preferably 6 to 10 carbon atoms in total, such as a phenyl group, a 4-nitrophenyl group,

a 4-acetylaminophenyl group, and a 4-methanesulfonylphenyl group.

The above heterocyclic group may have a halogen atom, a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the above heterocyclic group include a 5- or 6-membered heterocyclic group having 2 to 12, preferably 2 to 10, carbon atoms in total, such as a 2-tetrahydrofuryl group and a 2-pyrimidyl group.

The above acyl group may have an aliphatic carbonyl group, an arylcarbonyl group, a heterocyclic carbonyl group, a hydroxy group, a halogen atom, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the above acyl group include an acyl group having 2 to 8, preferably 2 to 4, carbon atoms in total, such as an acetyl group, a propanoyl group, a benzoyl group, and a 3-pyridinecarbonyl group.

The above acylamino group may have an aliphatic group, an aromatic group, a heterocyclic group, or the like, and may have, for example, an acetylamino group, a benzoylamino group, a 2-pyridinecarbonylamino group, a propanoylamino group, or the like. Examples of the above acylamino group include an acylamino group having 2 to 12, preferably 2 to 8, carbon atoms in total and an alkylcarbonylamino group having 2 to 8 carbon atoms in total, such as an acetylamino group, a benzoylamino group, a 2-pyridinecarbonylamino group, and a propanoylamino group.

The above aliphatic oxycarbonyl group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the above aliphatic oxycarbonyl group include an alkoxycarbonyl group having 2 to 8, preferably 2 to 4, carbon atoms in total, such as a methoxycarbonyl group, an ethoxycarbonyl group, and a (t)-butoxycarbonyl group.

The above carbamoyl group may have an aliphatic group, an aromatic group, a heterocyclic group, or the like. Examples of the above carbamoyl group include an unsubstituted carbamoyl group and an alkylcarbamoyl group having 2 to 9 carbon atoms in total, preferably an unsubstituted carbamoyl group and an alkylcarbamoyl group having 2 to 5 carbon atoms in total, such as a N-methylcarbamoyl group, a N,N-dimethylcarbamoyl group, and a N-phenylcarbamoyl group.

The above aliphatic sulfonyl group may be saturated or unsaturated, and may have a hydroxy group, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the above aliphatic sulfonyl group include an alkylsulfonyl group having 1 to 6 carbon atoms in total, preferably 1 to 4 carbon atoms in total, such as a methanesulfonyl group.

The above aromatic sulfonyl group may have a hydroxy group, an aliphatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the above aromatic sulfonyl group include an arylsulfonyl group having 6 to 10 carbon atoms in total, such as a benzenesulfonyl group.

The above amino group may have an aliphatic group, an aromatic group, a heterocyclic group, or the like.

The above acylamino group may have, for example, an acetylamino group, a benzoylamino group, a 2-pyridinecarbonylamino group, a propanoylamino group, or the like. Examples of the above acylamino group include an acylamino group having 2 to 12 carbon atoms in total, preferably 2 to 8 carbon atoms in total, and more preferably an alkylcarbonylamino group having 2 to 8 carbon atoms in total, such as an acetylamino group, a benzoylamino group, a 2-pyridinecarbonylamino group, and a propanoylamino group.

The above aliphatic sulfonamide group, the above aromatic sulfonamide group, and the above heterocyclic sulfonamide group may be, for example, a methanesulfonamide group, a benzenesulfonamide group, and a 2-pyridinesulfonamide group, respectively.

The above sulfamoyl group may have an aliphatic group, an aromatic group, a heterocyclic group, or the like. Examples of the above sulfamoyl group include a sulfamoyl group, an alkylsulfamoyl group having 1 to 9 carbon atoms in total, a dialkylsulfamoyl group having 2 to 10 carbon atoms in total, an arylsulfamoyl group having 7 to 13 carbon atoms in total, and a heterocyclic sulfamoyl group having 2 to 12 carbon atoms in total, more preferably a sulfamoyl group, an alkylsulfamoyl group having 1 to 7 carbon atoms in total, a dialkylsulfamoyl group having 3 to 6 carbon atoms in total, an arylsulfamoyl group having 6 to 11 carbon atoms in total, and a heterocyclic sulfamoyl group having 2 to 10 carbon atoms in total, such as a sulfamoyl group, a methylsulfamoyl group, a N,N-dimethylsulfamoyl group, a phenylsulfamoyl group, and a 4-pyridinesulfamoyl group.

The above aliphatic oxy group may be saturated or unsaturated, and may have a methoxy group, an ethoxy group, an i-propyloxy group, a cyclohexyloxy group, a methoxyethoxy group, or the like. Examples of the above aliphatic oxy group include an alkoxy group having 1 to 8, preferably 1 to 6, carbon atoms in total, such as a methoxy group, an ethoxy group, an i-propyloxy group, a cyclohexyloxy group, and a methoxyethoxy group.

The above aromatic amino group and the above heterocyclic amino group may have an aliphatic group, an aliphatic oxy group, a halogen atom, a carbamoyl group, a heterocyclic group ring-fused with the aryl group, and an

aliphatic oxycarbonyl group, preferably an aliphatic group having 1 to 4 carbon atoms in total, an aliphatic oxy group having 1 to 4 carbon atoms in total, a halogen atom, a carbamoyl group having 1 to 4 carbon atoms in total, a nitro group, or an aliphatic oxycarbonyl group having 2 to 4 carbon atoms in total.

The above aliphatic thio group may be saturated or unsaturated, and examples thereof include an alkylthio group having 1 to 8 carbon atoms in total, more preferably 1 to 6 carbon atoms in total, such as a methylthio group, an ethylthio group, a carbamoylmethylthio group, and a t-butylthio group.

The above carbamoylamino group may have an aliphatic group, an aryl group, a heterocyclic group, or the like. Examples of the above carbamoylamino group include a carbamoylamino group, an alkylcarbamoylamino group having 2 to 9 carbon atoms in total, a dialkylcarbamoylamino group having 3 to 10 carbon atoms in total, an arylcarbamoylamino group having 7 to 13 carbon atoms in total, and a heterocyclic carbamoylamino group having 3 to 12 carbon atoms in total, preferably a carbamoylamino group, an alkylcarbamoylamino group having 2 to 7 carbon atoms in total, a dialkylcarbamoylamino group having 3 to 6 carbon atoms in total, an arylcarbamoylamino group having 7 to 11 carbon atoms in total, and a heterocyclic carbamoylamino group having 3 to 10 carbon atoms in total, such as a carbamoylamino group, a methylcarbamoylamino group, a N,N-dimethylcarbamoylamino group, a phenylcarbamoylamino group, and a 4-pyridinecarbamoylamino group.

In the present disclosure, the range expressed by endpoints includes all numerical values that fall within that range (for example, 1 to 10 includes 1.4, 1.9, 2.33, 5.75, 9.98, and the like).

In the present disclosure, the description of "at least one" includes all numerical values of 1 or more (for example, at least 2, at least 4, at least 6, at least 8, at least 10, at least 25, at least 50, at least 100, and the like).

Next, the coating material composition of the present disclosure will be specifically described.

The first coating material composition of the present disclosure comprises a fluororesin, a polymer (I) containing a polymerization unit (I) derived from a monomer represented by the general formula (I), and an aqueous medium, and the content of the polymer (I) is 2,000 ppm by mass or less based on the composition.

It is preferable that the first coating material composition of the present disclosure have a viscosity of 50 to 1,000 mPa·s. The viscosity of the first coating material composition of the present disclosure is more preferably 100 mPa·s or more, still more preferably 110 mPa·s or more, and particularly preferably 120 mPa·s or more, and it is more preferably 900 mPa·s or less, and still more preferably 750 mPa·s or less. The coating material composition having a viscosity within the above range is excellent in an agglomeration suppressing property at the time of stirring, and can also suppress formation defects such as dripping at the time of application, thus providing a beautiful coating film. In the present specification, the viscosity of the coating material composition is measured using a B-type viscometer under the following conditions: rotor No. 2, liquid temperature 25°C, and 60 rpm.

It is preferable that the stability retention time of the first coating material composition of the present disclosure as measured by a stirring test be 10 minutes or longer. The preferred stability retention time is, in the order of preference, 10 minutes or longer, 12 minutes or longer, 15 minutes or longer, 20 minutes or longer, or 30 minutes or longer. The coating material composition with a stability retention time within the above range is excellent in an agglomeration suppressing property at the time of stirring. In addition, the upper limit value of the stability retention time is not limited, but it is usually 120 minutes or shorter. In the present specification, the stability retention time is measured by the stirring test described in Examples.

It is preferable that the first coating material composition of the present disclosure further comprise a nonionic surfactant. When comprising a nonionic surfactant, the coating material composition is excellent in an agglomeration suppressing property at the time of stirring, and also suppresses formation defects such as dripping at the time of application. The excellent agglomeration suppressing property at the time of stirring prevents agglomerates from attaching to the resulting coating film, making it easy to obtain a coating film that is excellent in film thickness uniformity. Furthermore, the excellent agglomeration suppressing property at the time of stirring can suppress attachment of large agglomerates in a narrow nozzle of a spray gun or at the tip of a nozzle in the case of spray application, thus enabling spray application with high efficiency.

It is preferable that the first coating material composition of the present disclosure further comprise an anionic hydrocarbon-based surfactant. When comprising an anionic hydrocarbon-based surfactant, the coating material composition is excellent in an agglomeration suppressing property at the time of stirring, and also suppresses formation defects such as dripping at the time of application.

The second coating material composition of the present disclosure is a coating material composition comprising a fluororesin and an aqueous medium, and having a stability retention time as measured by a stirring test of 10 minutes or longer and a viscosity of 50 mPa·s or more and 1,000 mPa·s or less.

The second coating material composition of the present disclosure is excellent in an agglomeration suppressing property at the time of stirring, and can also suppress formation defects such as dripping at the time of application, thus providing a beautiful coating film. In addition, even in the case where the coating material composition comprises a relatively large amount of fluororesin, since the second coating material composition of the present disclosure is excellent in an agglomeration suppressing property at the time of stirring and also suppresses formation defects such as dripping

at the time of application, the use of it enables production of a beautiful coating film with high efficiency.

The preferred stability retention time of the second coating material composition of the present disclosure is, in the order of preference, 12 minutes or longer, 15 minutes or longer, 20 minutes or longer, or 30 minutes or longer. The coating material composition with a stability retention time within the above range is further excellent in an agglomeration suppressing property at the time of stirring. Also, the upper limit value of the stability retention time is not limited, but it is usually 120 minutes or shorter.

The second coating material composition of the present disclosure has a viscosity of 50 to 1,000 mPa·s. The viscosity of the second coating material composition of the present disclosure is preferably 100 mPa·s or more, more preferably 110 mPa·s or more, and still more preferably 120 mPa·s or more, and it is preferably 900 mPa·s or less, and more preferably 750 mPa·s or less. When the viscosity is within the above range, the coating material composition is further excellent in an agglomeration suppressing property at the time of stirring, and also suppresses formation defects such as dripping at the time of application.

It is preferable that the second coating material composition of the present disclosure further comprise a polymer (I) containing a polymerization unit (I) derived from a monomer represented by the general formula (I). When the coating material composition comprises the polymer (I), its agglomeration suppressing property at the time of stirring can be further improved.

It is preferable that the second coating material composition of the present disclosure further comprise a nonionic surfactant. When comprising a nonionic surfactant, the coating material composition is further excellent in an agglomeration suppressing property at the time of stirring, and also further suppresses formation defects such as dripping at the time of application.

It is preferable that the second coating material composition of the present disclosure further comprise an anionic hydrocarbon-based surfactant. When comprising an anionic hydrocarbon-based surfactant, the coating material composition is further excellent in an agglomeration suppressing property at the time of stirring, and also further suppresses formation defects such as dripping at the time of application.

The third coating material composition of the present disclosure comprises a fluororesin, a nonionic surfactant, an anionic hydrocarbon-based surfactant, and an aqueous medium, and is substantially free from a fluorine-containing compound containing a hydrophilic group.

There is a need for a coating material composition that is substantially free from a fluorine-containing compound containing a hydrophilic group and that is excellent in an agglomeration suppressing property at the time of stirring. Although the third composition of the present disclosure is substantially free from a fluorine-containing compound containing a hydrophilic group, it comprises a nonionic surfactant and an anionic hydrocarbon-based surfactant, and therefore, it is excellent in an agglomeration suppressing property at the time of stirring.

It is preferable that the third coating material composition of the present disclosure further comprise a polymer (I) containing a polymerization unit (I) derived from a monomer represented by the general formula (I). When the coating material composition comprises the polymer (I), its agglomeration suppressing property at the time of stirring can be further improved.

The suitable stability retention time of the third coating material composition of the present disclosure is the same as that of the first coating material composition of the present disclosure. In addition, the suitable viscosity of the third coating material composition of the present disclosure is the same as that of the first coating material composition of the present disclosure.

The solid concentration of the coating material composition of the present disclosure is preferably 20 to 50% by mass, more preferably 22% by mass or more, and still more preferably 30% by mass or more, and it is more preferably 48% by mass or less, and still more preferably 45% by mass or less. When the solid concentration is within the above range, a coating film can be formed that is further excellent in adhesion to the substrate and is further excellent in non-stickiness. In this disclosure, the solid concentration of the coating material composition is the concentration of the 380°C heating residue, which can be specifically measured by the method described in Examples.

The coating material composition of the present disclosure may have a viscosity of 150 mPa·s or more and 500 mPa·s or less, from the viewpoint that the film forming property can be improved in the case where the solid concentration of the coating material composition is high.

Hereinafter, the configuration of the coating material composition of the present disclosure will be described in more detail.

<Fluororesin>

The coating material composition of the present disclosure (in the present disclosure, the first coating material composition, the second coating material composition, and the third coating material composition of the present disclosure may be referred to as the "coating material composition of the present disclosure") comprises a fluororesin.

The fluororesin is not limited as long as it has fluorine atoms, and examples thereof include a polytetrafluoroethylene (PTFE) and a fluororesin other than the PTFE.

Examples of the fluororesin other than the PTFE include a tetrafluoroethylene (TFE)/hexafluoropropylene (HFP) copolymer (FEP), a TFE/perfluoro(alkyl vinyl ether) (PAVE) copolymer (PFA), a TFE/perfluoroallyl ether copolymer, an ethylene/TFE copolymer (ETFE), an ethylene/chlorotrifluoroethylene (CTFE) copolymer (ECTFE), a polychlorotrifluoroethylene (PCTFE), an ethylene/TFE/HFP copolymer (EFEP), a polyvinylidene fluoride (PVDF), a vinylidene fluoride (VDF)-based copolymer, and a polyvinyl fluoride (PVF). The fluororesin may be used alone as one kind, or two or more kinds may be used in combination.

The coating material composition of the present disclosure preferably comprises, as the fluororesin, at least one selected from a PTFE, an FEP, a PFA, an ETFE, and an ECTFE, more preferably at least one selected from a PTFE, an FEP, and a PFA, and still more preferably a PTFE.

The suitable embodiment of a PTFE as the fluororesin is as will be described later.

In one embodiment of the coating material composition of the present disclosure, it comprises at least a PTFE as the fluororesin. The coating material composition of the present disclosure may comprise only a PTFE as the fluororesin, or it may comprise a PTFE and a fluororesin other than the PTFE as the fluororesin. For example, the coating material composition of the present disclosure can comprise a PTFE, as well as at least one selected from the group consisting of an FEP and a PFA, as the fluororesin.

In the case where the coating material composition of the present disclosure comprises a PTFE, it is preferable that the content of the PTFE in the coating material composition of the present disclosure be 10.0% by mass or more and 52.0% by mass or less. The preferred lower limit value of the content of the PTFE is, in the order of preference, 15.0% by mass or more, 16.0% by mass or more, 18.0% by mass or more, or 20.0% by mass or more. The upper limit value of the content of the PTFE is more preferably 50.0% by mass or less, and still more preferably 48.0% by mass or less.

In one embodiment of the coating material composition of the present disclosure, the content of the PTFE in the coating material composition is 30.0% by mass or more and 52.0% by mass or less. In this case, the content of the PTFE in the coating material composition is more preferably 32.0% by mass or more, and still more preferably 35.0% by mass or more, and it is more preferably 50.0% by mass or less, and still more preferably 48.0% by mass or less. When the content of the PTFE in the coating material composition is within the above range, a coating film with a high PTFE content ratio can be easily obtained with high efficiency.

In the coating material composition of the present disclosure, the amount of the PTFE present in the fluororesin is preferably 55.0% by mass or more, more preferably 60.0% by mass or more, and still more preferably 65.0% by mass or more, and it may be 100.0% by mass or less.

In one embodiment of the coating material composition of the present disclosure, the content of the PTFE in the coating material composition is preferably 60% by mass or more, more preferably 70% by mass or more, still more preferably 80% by mass or more, particularly preferably 90% by mass, and preferably 100% by mass or less, based on the mass of the fluororesin in the coating material composition. In addition, the coating material composition of the present disclosure can comprise only the PTFE as the fluororesin.

In one embodiment of the first coating material composition of the present disclosure, the amount of the PTFE present in the fluororesin is 90.0% by mass or more. In this case, the amount of the PTFE present in the fluororesin is more preferably 95.0% by mass or more, and still more preferably 96.0% by mass or more, and it may be 100.0% by mass. When the amount of the PTFE present in the fluororesin is within the above range, a coating film with a high PTFE content ratio can be easily obtained with high efficiency.

Although the FEP is not limited, it is preferably a copolymer in which the molar ratio of TFE unit to HFP unit (TFE unit/HFP unit) is 70/30 or more and less than 99/1. The more preferred molar ratio is 70/30 or more and 98.9/1.1 or less, and the still more preferred molar ratio is 80/20 or more and 98.9/1.1 or less. When the amount of TFE unit is too small, the mechanical properties tend to be degraded, and when the amount thereof is too large, the melting point tends to be too high, resulting in poor film formability. It is also preferable that the FEP be a copolymer in which the monomer unit derived from a monomer that is copolymerizable with TFE and HFP is 0.1 to 10 mol% and the total of TFE unit and HFP unit is 90 to 99.9 mol%. Examples of the monomer that is copolymerizable with TFE and HFP include a PAVE and an alkyl perfluorovinyl ether derivative.

The melting point of the FEP is preferably 150 to less than 322°C, more preferably 200 to 320°C, still more preferably 200 to 300°C, and particularly preferably 215 to 280°C.

It is preferable that the FEP have an initial pyrolysis temperature of 360°C or higher. The initial pyrolysis temperature is more preferably 380°C or higher, and still more preferably 390°C or higher.

In the case where the coating material composition of the present disclosure comprises an FEP, the content of the FEP in the coating material composition is preferably 0.1% by mass or more, more preferably 0.5% by mass or more, and still more preferably 1.0% by mass or more, and it is preferably 70.0% by mass or less, more preferably 60.0% by mass or less, still more preferably 52.0% by mass or less, and particularly preferably 50.0% by mass or less. In addition, in one embodiment, the content of the FEP is preferably 0.1 to 20.0% by mass, more preferably 0.5 to 15.0% by mass, and still more preferably 1.0 to 50.0% by mass.

In the present disclosure, the initial pyrolysis temperature is a temperature at which a sample is decreased by 1% by mass when 10 mg of the sample is heated from room temperature at a temperature-increasing rate of 10°C/min using a thermogravimetry/differential thermal analyzer [TG-DTA] (trade name: TG/DTA 6200, manufactured by Seiko Instruments & Electronics Ltd.).

Although the PFA is not limited, it is preferably a copolymer in which the molar ratio of TFE unit to PAVE unit (TFE unit/PAVE unit) is 70/30 or more and less than 99/1. The more preferred molar ratio is 70/30 or more and 98.9/1.1 or less, and the still more preferred molar ratio is 80/20 or more and 98.9/1.1 or less. When the amount of TFE unit is too small, the mechanical properties tend to be degraded, and when the amount thereof is too large, the melting point tends to be too high, resulting in poor film formability. It is also preferable that the PFA be a copolymer in which the monomer unit derived from a monomer that is copolymerizable with TFE and PAVE is 0.1 to 10 mol% and the total of TFE unit and PAVE unit is 90 to 99.9 mol%. Examples of the monomer that is copolymerizable with TFE and PAVE include HFP, a vinyl monomer represented by $CZ^3Z^4=CZ^5(CF_2)_nZ^6$, wherein $Z^3$, $Z^4$, and $Z^5$ are the same or different and each represent a hydrogen atom or a fluorine atom; $Z^6$ represents a hydrogen atom, a fluorine atom, or a chlorine atom; and n represents an integer of 2 to 10, and an alkyl perfluorovinyl ether derivative represented by $CF_2=CF-OCH_2-Rf^7$, wherein $Rf^7$ represents a perfluoroalkyl group having 1 to 5 carbon atoms.

The melting point of the PFA is preferably 180 to less than 322°C, more preferably 230 to 320°C, and still more preferably 280 to 320°C.

It is preferable that the PFA have an initial pyrolysis temperature of 380°C or higher. The initial pyrolysis temperature is more preferably 400°C or higher, and still more preferably 410°C or higher.

In the case where the coating material composition of the present disclosure comprises a PFA, the content of the PFA in the coating material composition is preferably 0.1% by mass or more, more preferably 0.5% by mass or more, and still more preferably 1.0% by mass or more, and it is preferably 70.0% by mass or less, more preferably 60.0% by mass or less, still more preferably 52.0% by mass or less, and particularly preferably 50.0% by mass or less. In addition, in one embodiment, the content of the PFA is preferably 0.1 to 20.0% by mass, more preferably 0.5 to 15.0% by mass, and still more preferably 1.0 to 10.0% by mass.

The contents of the respective monomer units of fluororesins (a PTFE and a fluororesin other than the PTFE) can be calculated by combining NMR, FT-IR, elemental analysis, and X-ray fluorescence analysis as appropriate depending on the types of monomers.

In the coating material composition of the present disclosure, it is preferable that the content of the fluororesin be 15.0 to 52.0% by mass based on the coating material composition. The content of the fluororesin is more preferably 16% by mass or more, still more preferably 18.0% by mass or more, particularly preferably 20.0% by mass or more, and most preferably 30.0% by mass or more, and it is more preferably 50.0% by mass or less, and still more preferably 48.0% by mass or less. The content of the fluororesin in the coating material composition can be determined as the solid concentration of the coating material composition.

In one embodiment of the coating material composition of the present disclosure, it comprises at least an FEP as the fluororesin. The coating material composition of the present disclosure may comprise only an FEP as the fluororesin, or it may comprise an FEP and a fluororesin other than the FEP as the fluororesin.

In one embodiment of the coating material composition of the present disclosure, it comprises at least a PFA as the fluororesin. The coating material composition of the present disclosure may comprise only a PFA as the fluororesin, or it may comprise a PFA and a fluororesin other than the PFA as the fluororesin.

<Polytetrafluoroethylene (PTFE)>

In one embodiment of the coating material composition of the present disclosure, it comprises a polytetrafluoroethylene (PTFE) as the fluororesin.

Polytetrafluoroethylene (PTFE) is usually stretchable, fibrillatable, and non-molten secondary processible. Being non-molten secondary processible means a property that the melt flow rate cannot be measured at a temperature higher than the crystal melting point, that is, a property that does not easily flow even in the melting temperature region, in conformity with ASTM D 1238 and D 2116.

The PTFE may be a tetrafluoroethylene (TFE) homopolymer or a modified PTFE containing TFE unit and a modifying monomer unit.

The modifying monomer is not limited as long as it can be copolymerized with TFE, and examples thereof include a fluoromonomer and a non-fluoromonomer.

Examples of the non-fluoromonomer include, but are not limited to, a monomer represented by the general formula:

$$CH_2=CR^{Q1}-LR^{Q2}$$

wherein $R^{Q1}$ represents a hydrogen atom or an alkyl group; L represents a single bond, -CO-O-*, -O-CO-*, or -O-; * represents the bond position with $R^{Q2}$; and $R^{Q2}$ represents a hydrogen atom, an alkyl group, or a nitrile group.

Examples of the non-fluoromonomer include methyl acrylate, methyl methacrylate, ethyl acrylate, ethyl methacrylate, propyl acrylate, propyl methacrylate butyl acrylate, butyl methacrylate, hexyl methacrylate, cyclohexyl methacrylate, vinyl methacrylate, vinyl acetate, acrylic acid, methacrylic acid, acrylonitrile, methacrylonitrile, ethyl vinyl ether, and cyclohexyl vinyl ether. Of these, the non-fluoromonomer is preferably butyl methacrylate, vinyl acetate, or acrylic acid.

Examples of the fluoromonomer include a perfluoroolefin such as hexafluoropropylene (HFP); a chlorofluoroolefin such as chlorotrifluoroethylene (CTFE); a hydrogen-containing fluoroolefin such as trifluoroethylene and vinylidene fluoride (VDF); a fluoro(alkyl vinyl ether); a (perfluoroalkyl)ethylene; and a perfluoroallyl ether.

In addition, the modifying monomer to be used may be one kind or a plurality of kinds.

Examples of the fluoro(alkyl vinyl ether) include, but are not limited to, an unsaturated perfluoro compound represented by the general formula (A):

$$CF_2=CF\text{-}ORf \qquad (A)$$

wherein Rf represents a perfluoro organic group. The above term "perfluoro organic group" as used herein means an organic group in which all hydrogen atoms bonded to carbon atoms are replaced with fluorine atoms. The above perfluoro organic group optionally has ether oxygen.

Examples of the fluoro(alkyl vinyl ether) include a perfluoro(alkyl vinyl ether) (PAVE) in which Rf is a perfluoroalkyl group having 1 to 10 carbon atoms in the general formula (A). The above perfluoroalkyl group preferably has 1 to 5 carbon atoms.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group.

Examples of the fluoro(alkyl vinyl ether) further include one represented by the general formula (A) in which Rf is a perfluoro(alkoxyalkyl) group having 4 to 9 carbon atoms; one in which Rf is a group represented by the following formula:

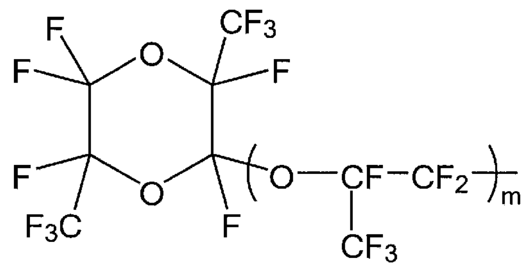

wherein m represents 0 or an integer of 1 to 4; and one in which Rf is a group represented by the following formula:

$$CF_3CF_2CF_2\text{-}(O\text{-}CF(CF_3)\text{-}CF_2)_n\text{-}$$

wherein n is an integer of 1 to 4.

Examples of the hydrogen-containing fluoroolefin include $CH_2=CF_2$, $CFH=CH_2$, $CFH=CF_2$, $CH_2=CFCF_3$, $CH_2=CHCF_3$, $CHF=CHCF_3$ (E isomer), and $CHF=CHCF_3$ (Z isomer).

The fluoro(alkyl vinyl ether) is preferably at least one selected from the group consisting of perfluoro(methyl vinyl ether) (PMVE), perfluoro(ethyl vinyl ether) (PEVE), and perfluoro(propyl vinyl ether) (PPVE), and more preferably PMVE.

Examples of the (perfluoroalkyl)ethylene (PFAE) include, but are not limited to, (perfluorobutyl) ethylene (PFBE), (perfluorohexyl) ethylene, and (perfluorooctyl) ethylene.

Examples of the perfluoroallyl ether include a fluoromonomer represented by the general formula:

$$CF_2=CF\text{-}CF_2\text{-}ORf$$

wherein Rf represents a perfluoro organic group.

Rf in the above general formula is the same as Rf in the general formula (A). Rf is preferably a perfluoroalkyl group having 1 to 10 carbon atoms or a perfluoroalkoxyalkyl group having 1 to 10 carbon atoms. The perfluoroallyl ether is preferably at least one selected from the group consisting of $CF_2=CF\text{-}CF_2\text{-}O\text{-}CF_3$, $CF_2=CF\text{-}CF_2\text{-}O\text{-}C_2F_5$, $CF_2=CF\text{-}CF_2\text{-}O\text{-}C_3F_7$, and $CF_2=CF\text{-}CF_2\text{-}O\text{-}C_4F_9$, more preferably at least one selected from the group consisting of $CF_2=CF\text{-}$

$CF_2$-O-$C_2F_5$, $CF_2$=CF-$CF_2$-O-$C_3F_7$, and $CF_2$=CF-$CF_2$-O-$C_4F_9$, and still more preferably $CF_2$=CF-$CF_2$-O-$CF_2CF_2CF_3$.

In the modified PTFE, it is preferable that the content of the modifying monomer unit be in the range of 0.00001 to 1.0% by mass based on all polymerization units. The lower limit thereof is preferably 0.0001% by mass, more preferably 0.001% by mass, and still more preferably 0.005% by mass. The upper limit of the content of the modifying monomer unit is, in the order of preference, 0.90% by mass, 0.50% by mass, 0.30% by mass, 0.20% by mass, 0.15% by mass, 0.10% by mass, or 0.05% by mass. In the present disclosure, the above modifying monomer unit means a portion of the molecular structure of the modified PTFE as a part derived from the modifying monomer.

The modifying monomer is also preferably exemplified by a comonomer (3) having a monomer reactivity ratio of 0.1 to 8. The presence of the comonomer (3) makes it possible to obtain PTFE particles having a small particle size, and to obtain a coating material composition that is excellent in an agglomeration suppressing property at the time of stirring.

Here, the monomer reactivity ratio in the copolymerization with TFE is a value obtained by dividing the rate constant in the case where a propagating radical reacts with TFE when the propagating radical is less than the repeating unit derived from TFE by the rate constant in the case where the propagating radical reacts with a comonomer. The lower this value is, the more reactive the comonomer is with TFE. The monomer reactivity ratio can be calculated by copolymerizing TFE and the comonomer, determining the compositional features in the produced polymer immediately after initiation, and using the Fineman-Ross equation.

The above copolymerization is performed using 3,600 g of deionized degassed water, 1,000 ppm by mass of ammonium perfluorooctanoate based on the above water, and 100 g of paraffin wax contained in an autoclave made of stainless steel with an internal volume of 6.0 L at a pressure of 0.78 MPaG and a temperature of 70°C. A comonomer in an amount of 0.05 g, 0.1 g, 0.2 g, 0.5 g, or 1.0 g is added to the reactor, and then 0.072 g of ammonium persulfate (20 ppm by mass based on the water) is added thereto. To maintain the polymerization pressure at 0.78 MPaG, TFE is continuously fed thereinto. When the amount of TFE charged reaches 1,000 g, stirring is stopped and the pressure is released until the pressure in the reactor is decreased to the atmospheric pressure. After cooling, the paraffin wax is separated to obtain an aqueous dispersion containing the produced polymer. The above aqueous dispersion is stirred so that the produced polymer is coagulated, and the polymer is dried at 150°C. The compositional features in the produced polymer are calculated by combining NMR, FT-IR, elemental analysis, and X-ray fluorescence analysis as appropriate depending on the type of monomer.

It is preferable that the comonomer (3) with a monomer reactivity ratio of 0.1 to 8 be at least one selected from the group consisting of comonomers represented by the formulas (3a) to (3d):

$CH_2$=CH-$Rf^1$ (3a)

wherein $Rf^1$ is a perfluoroalkyl group having 1 to 10 carbon atoms;

$CF_2$=CF-O-$Rf^2$ (3b)

wherein $Rf^2$ is a perfluoroalkyl group having 1 to 2 carbon atoms;

$CF_2$=CF-O-$(CF_2)_n$CF=$CF_2$ (3c)

wherein n is 1 or 2; and

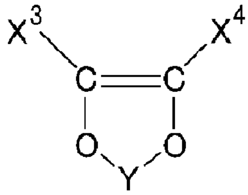

(3d)

wherein $X^3$ and $X^4$ are each F, Cl, or a methoxy group; and Y is represented by the formula Y1 or Y2:

—CF═CF— (Y1)

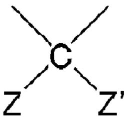

(Y2)

wherein, in the formula Y2, Z and Z' are each F or a fluorinated alkyl group having 1 to 3 carbon atoms.

It is preferable that the content of the comonomer (3) unit be in the range of 0.00001 to 1.0% by mass based on all polymerization units of the modified PTFE. The lower limit thereof is more preferably 0.0001% by mass, still more preferably 0.001% by mass, further preferably 0.005% by mass, and particularly preferably 0.009% by mass. The upper limit thereof is, in the order of preference, 0.90% by mass, 0.50% by mass, 0.40% by mass, 0.30% by mass, 0.20% by mass, 0.15% by mass, 0.10% by mass, 0.08% by mass, 0.05% by mass, or 0.01% by mass.

The above modifying monomer is preferably at least one selected from the group consisting of hexafluoropropylene, chlorotrifluoroethylene, vinylidene fluoride, a fluoro(alkyl vinyl ether), a (perfluoroalkyl)ethylene, ethylene, and a modifying monomer having a functional group capable of reacting by radical polymerization and a hydrophilic group, in view of obtaining a coating material composition that has a small average primary particle size of modified polytetrafluoroethylene particles, has a small aspect ratio of primary particles, and is excellent in an agglomeration suppressing property at the time of stirring. The use of the above modifying monomer allows for obtaining a coating material composition that has a smaller average primary particle size, has a smaller aspect ratio of primary particles, and is excellent in an agglomeration suppressing property at the time of stirring. In addition, a coating material composition having a smaller amount of uncoagulated polymer can be obtained.

It is also preferable that the modifying monomer contain a modifying monomer having a functional group capable of reacting by radical polymerization and a hydrophilic group (hereinafter, this is described as the "modifying monomer (A)").

The presence of the modifying monomer (A) makes it possible to obtain PTFE particles having a small primary particle size, and to obtain a coating material composition that is excellent in an agglomeration suppressing property at the time of stirring. In addition, the amount of uncoagulated polymer can be reduced. Furthermore, the aspect ratio of primary particles can be made smaller.

The PTFE containing TFE unit and the modifying monomer (A) unit can be obtained by, for example, polymerizing TFE and the modifying monomer (A) in an aqueous medium. The amount of the modifying monomer (A) used upon the polymerization is preferably an amount exceeding 0.1 ppm by mass of the aqueous medium, more preferably an amount exceeding 0.5 ppm by mass, still more preferably an amount exceeding 1.0 ppm by mass, further preferably 5 ppm by mass or more, and particularly preferably 10 ppm by mass or more. When the amount of the modifying monomer (A) used is too small, there is a concern that the average primary particle size of the resulting PTFE may not be reduced. The amount of the modifying monomer (A) used may be in the above range, but the upper limit may be, for example, 5,000 ppm by mass.

Since the modifying monomer (A) is highly water-soluble, even in the case where the coating material composition comprises an unreacted modifying monomer (A), the modifying monomer (A) can be easily removed from the coating material composition by a method such as concentration, coagulation, or washing.

Examples of the hydrophilic group in the modifying monomer (A) include $-NH_2$, $-PO_3M$, $-P(O)(OM)_2$, $-OPO_3M$, $-OP(O)(OM)_2$, $-SO_3M$, $-OSO_3M$, and -COOM, wherein M is H, a metal atom, $NR^7_4$, imidazolium optionally having a substituent, pyridinium optionally having a substituent, or phosphonium optionally having a substituent, where $R^7$ is H or an organic group, may be the same or different, and any two thereof may be bonded to each other to form a ring. Of these, the above hydrophilic group is preferably $-SO_3M$ or -COOM.

The organic group in $R^7$ is preferably an alkyl group.

$R^7$ is preferably H or a $C_{1-10}$ organic group, more preferably H or a $C_{1-4}$ organic group, and still more preferably H or a $C_{1-4}$ alkyl group.

Examples of the above metal atom include a monovalent or divalent metal atom, an alkali metal (Group 1), and an alkaline earth metal (Group 2), and preferred is Na, K, or Li.

Examples of the "functional group capable of reacting by radical polymerization" in the modifying monomer (A) include a group having an ethylenically unsaturated bond, such as a vinyl group and an allyl group. The group having an ethylenically unsaturated bond may be represented by the following formula:

$$CX^eX^g=CX^fR-$$

wherein $X^e$, $X^f$ and $X^g$ are each independently F, Cl, H, $CF_3$, $CF_2H$, $CFH_2$ or $CH_3$; and R is a linking group. Examples of the linking group of R include a linking group as $R^a$, which will be described later. Preferred examples thereof include a group having an unsaturated bond, such as $-CH=CH_2$, $-CF=CH_2$, $-CH=CF_2$, $-CF=CF_2$, $-CH_2-CH=CH_2$, $-CF_2-CF=CH_2$, $-CF_2-CF=CF_2$, $-(C=O)-CH=CH_2$, $-(C=O)-CF=CH_2$, $-(C=O)-CH=CF_2$, $-(C=O)-CF=CF_2$, $-(C=O)-C(CH_3)=CH_2$, - (C=O)

$-C(CF_3)=CH_2$, $-(C=O)-C(CH_3)=CF_2$, $-(C=O)-C(CF_3)=CF_2$, $-O-CH_2-CH=CH_2$, $-O-CF_2-CF=CH_2$, $-O-CH_2-CH=CF_2$, and $-O-CF_2-CF=CF_2$.

Since the modifying monomer (A) has a functional group capable of reacting by radical polymerization, it is presumed that, when used in the polymerization, it reacts with TFE at the initial stage of the polymerization reaction and forms particles that have a hydrophilic group derived from the modifying monomer (A) and have high stability. Therefore, it is considered that the number of particles is increased when the polymerization is performed in the presence of the modifying monomer (A).

The polymerization may be performed in the presence of one kind of the above modifying monomer (A), or in the presence of two or more kinds thereof.

In the polymerization, a compound having an unsaturated bond can be used as the modifying monomer (A).

The modifying monomer (A) is preferably a compound represented by the general formula (4A):

$$CX^iX^k=CX^jR^a-(CZ^1Z^2)_k-Y^3 \qquad (4A)$$

wherein $X^i$, $X^j$, and $X^k$ are each independently F, Cl, H, or $CF_3$; $Y^3$ is a hydrophilic group; $R^a$ is a linking group; $Z^1$ and $Z^2$ are each independently H, F, or $CF_3$; and k is 0 or 1.

Examples of the above hydrophilic group include $-NH_2$, $-PO_3M$, $-P(O)(OM)_2$, $-OPO_3M$, $-OP (O) (OM) _2$, $-SO_3M$, $-OSO_3M$, and -COOM, wherein M is H, a metal atom, $NR^7_4$, imidazolium optionally having a substituent, pyridinium optionally having a substituent, or phosphonium optionally having a substituent, where $R^7$ is H or an organic group, may be the same or different, and any two thereof may be bonded to each other to form a ring. Of these, the above hydrophilic group is preferably $-SO_3M$ or -COOM. $R^7$ is preferably H or a $C_{1-10}$ organic group, more preferably H or a $C_{1-4}$ organic group, and still more preferably H or a $C_{1-4}$ alkyl group.

Examples of the above metal atom include a monovalent or divalent metal atom, an alkali metal (Group 1), and an alkaline earth metal (Group 2), and preferred is Na, K, or Li.

The use of the modifying monomer (4A) allows for obtaining a coating material composition that has a smaller average primary particle size and is further excellent in an agglomeration suppressing property at the time of stirring. In addition, the aspect ratio of primary particles can also be made smaller.

The above $R^a$ is a linking group. The "linking group" as used herein refers to a divalent linking group. The linking group may be a single bond, and preferably contains at least one carbon atom. The number of carbon atoms may be 2 or more, may be 4 or more, may be 8 or more, may be 10 or more, or may be 20 or more. The upper limit thereof is not limited, but it may be 100 or less or may be 50 or less, for example.

The above linking group may be linear or branched, cyclic or acyclic structure, saturated or unsaturated, and substituted or unsubstituted. As desired, it may contain one or more heteroatoms selected from the group consisting of sulfur, oxygen, and nitrogen, and as desired, it may contain one or more functional groups selected from the group consisting of ester, amide, sulfonamide, carbonyl, carbonate, urethane, urea, and carbamate. The above linking group may be free from carbon atoms and may be a catenary heteroatom such as oxygen, sulfur, or nitrogen.

It is preferable that the above $R^a$ be a catenary heteroatom such as oxygen, sulfur, or nitrogen, or a divalent organic group.

In the case where $R^a$ is a divalent organic group, a hydrogen atom bonded to a carbon atom may be replaced with a halogen other than fluorine, such as chlorine, and $R^a$ may or may not contain a double bond. In addition, $R^a$ may be either linear or branched, and may be either cyclic or acyclic. In addition, $R^a$ may contain a functional group (for example, ester, ether, ketone, amine, halide, or the like).

$R^a$ may also be a fluorine-free divalent organic group, or a partially fluorinated or perfluorinated divalent organic group.

$R^a$ may be, for example, a hydrocarbon group in which no fluorine atom is bonded to a carbon atom, a hydrocarbon group in which some hydrogen atoms bonded to carbon atoms are replaced with fluorine atoms, a hydrocarbon group in which all hydrogen atoms bonded to carbon atoms are replaced with fluorine atoms, -(C=O)-, - (C=O)-O-, or a hydrocarbon group containing an ether bond, and these may contain an oxygen atom, may contain a double bond, and may contain a functional group.

It is preferable that $R^a$ be -(C=O)-, -(C=O)-O-, or a hydrocarbon group having 1 to 100 carbon atoms that optionally contains an ether bond and optionally contains a carbonyl group, wherein some or all of the hydrogen atoms bonded to the carbon atoms in the hydrocarbon group may be replaced with fluorine.

$R^a$ is preferably at least one selected from $-(CH_2)_a-$, $- (CF_2)_a-$, $-O- (CF_2)_a-$, $- (CF_2)_a-O-(CF_2)_b-$, $-O(CF_2)_a-O-(CF_2)_b-$, $-(CF_2)_a-[O-(CF_2)_b]_c-$, $-O(CF_2)_a-[O-(CF_2)_b]_c-$, $- [(CF_2)_a-O]_b-[(CF_2)_c-O]_d-$, $-O[(CF_2)_a-O]_b-[(CF_2)_c-O]_d-$, $-O-[CF_2CF(CF_3)O]_a-(CF_2)_b-$, $- (C=O) -$, $- (C=O) -O-$, $- (C=O)-(CH_2)_a-$, $- (C=O) -(CF_2)_a-$, $-(C=O)-O-(CH_2)_a-$, $-(C=O)-O-(CF_2)_a-$, $-(C=O)-[(CH_2)_a-O]_b-$, $- (C=O) -[(CF_2)_a-O]_b-$, $- (C=O) -O[(CH_2)_a-O]_b-$, $- (C=O) -O[(CF_2)_a-O]_b-$, $-(C=O)-O[(CH_2)_a-O]_b-(CH_2)_c-$, $-(C=O)-O[(CF_2)_a-O]_b-(CF_2)_c-$, $-(C=O)-(CH_2)_a-O-(CH_2)_b-$, $-(C=O)-(CF_2)_a-O-(CF_2)_b-$, $-(C=O)-O-(CH_2)_a-O-(CH_2)_b-$, $-(C=O)-O-(CF_2)_a-O-(CF_2)_b-$, $- (C=O)-O-C_6H_4-$, and combinations thereof.

In the formulas, a, b, c, and d are each independently at least 1 or more. a, b, c, and d may be each independently 2 or more, may be 3 or more, may be 4 or more, may be 10 or more, or may be 20 or more. The upper limit of a, b, c, and d is 100, for example.

Specific examples suitable for $R^a$ include $-CF_2-O-$, $-CF_2-O-CF_2-$, $-CF_2-O-CH_2-$, $-CF_2-O-CH_2CF_2-$, $-CF_2-O-CF_2CF_2-$, $-CF_2-O-CF_2CH_2-$, $-CF_2-O-CF_2CF_2CH_2-$, $-CF_2-O-CF(CF_3)-$, $-CF_2-O-CF(CF_3)CF_2-$, $-CF_2-O-CF(CF_3)CF_2-O-$, $-CF_2-O-CF(CF_3)CH_2-$, -(C=O)-, -(C=O)-O-, $-(C=O)-(CH_2)-$, $-(C=O)-(CF_2)-$, $-(C=O)-O-(CH_2)-$, $-(C=O)-O-(CF_2)-$, $-(C=O)-[(CH_2)_2-O]_n-$, $-(C=O)-[(CF_2)_2-O]_n-$, $-(C=O)\ -O[(CH_2)_2-O]_n-$, $-(C=O)\ -O[(CF_2)_2-O]_n-$, $-(C=O)-O[(CH_2)_2-O]_n-(CH_2)-$, $-(C=O)-O[(CF_2)_2-O]_n-(CF_2)-$, $-(C=O)-(CH_2)_2-O-(CH_2)-$, $-(C=O)-(CF_2)_2-O-(CF_2)-$, $-(C=O)-O-(CH_2)_2-O-(CH_2)-$, $-(C=O)-O-(CF_2)_2-O-(CF_2)-$, and $-(C=O)-O-C_6H_4-$. Of these, specifically, the above $R^a$ is preferably $-CF_2-O-$, $-CF_2-O-CF_2-$, $-CF_2-O-CF_2CF_2-$, $-CF_2-O-CF(CF_3)-$, $-CF_2-O-CF(CF_3)CF_2-$, $-CF_2-O-CF(CF_3)CF_2-O-$, -(C=O)-, -(C=O)-O-, $-(C=O)-(CH_2)-$, $-(C=O)-O-(CH_2)-$, $-(C=O)-O[(CH_2)_2-O]_n-$, $-(C=O)-O[(CH_2)_2-O]_n-(CH_2)-$, $-(C=O)\ -(CH_2)_2-O-(CH_2)-$, or $-(C=O)-O-C_6H_4-$.

In the above formulas, n is an integer of 1 to 10.

$-R^a-(CZ^1Z^2)_k-$ in the general formula (4A) is preferably $-CF_2-O-CF_2-$, $-CF_2-O-CF(CF_3)-$, $-CF_2-O-C(CF_3)_2-$, $-CF_2-O-CF_2-CF_2-$, $-CF_2-O-CF_2-CF(CF_3)-$, $-CF_2-O-CF_2-C(CF_3)_2-$, $-CF_2-O-CF_2CF_2-CF_2-$, $-CF_2-O-CF_2CF_2-CF(CF_3)-$, $-CF_2-O-CF_2CF_2-C(CF_3)_2-$, $-CF_2-O-CF(CF_3)-CF_2-$, $-CF_2-O-CF(CF_3)-CF(CF_3)-$, $-CF_2-O-CF(CF_3)-C(CF_3)_2-$, $-CF_2-O-CF(CF_3)CF_2-CF_2-$, $-CF_2-O-CF(CF_3)CF_2-CF(CF_3)-$, $-CF_2-O-CF(CF_3)CF_2-C(CF_3)_2-$, $-CF_2-O-CF(CF_3)CF_2-O-CF_2-$, $-CF_2-O-CF(CF_3)CF_2-O-CF(CF_3)-$, $-CF_2-O-CF(CF_3)CF_2-O-C(CF_3)_2-$, -(C=O)-, -(C=O)-O-, $-(C=O)-(CH_2)-$, $-(C=O)-(CF_2)-$, $-(C=O)-O-(CH_2)-$, $-(C=O)-O-(CF_2)-$, $-(C=O)\ [(CH_2)_2-O]_n-(CH_2)-$, $-(C=O)\ -[(CF_2)_2-O]_n-(CF_2)-$, $-(C=O)-[(CH_2)_2-O]_n-(CH_2)-(CH_2)-$, $-(C=O)\ -[(CF_2)_2-O]_n-(CF_2)-(CF_2)-$, $-(C=O)-O[(CH_2)_2-O]_n-(CF_2)-$, $-(C=O)-O[(CH_2)_2-O]_n-(CH_2)-(CH_2)-$, $-(C=O)-O[(CF_2)_2-O]_n-(CF_2)-$, $-(C=O)-O[(CF_2)_2-O]_n-(CF_2)-(CF_2)-$, $-(C=O)-(CH_2)_2-O-(CH_2)-(CH_2)-$, $-(C=O)-(CF_2)_2-O-(CF_2)-(CF_2)-$, $-(C=O)-O-(CH_2)_2-O-(CH_2)-(CH_2)-$, $-(C=O)-O-(CF_2)_2-O-(CF_2)-(CF_2)-$, $-(C=O)-O-(CH_2)_2-O-(CH_2)-C(CF_3)_2-$, $-(C=O)-O-(CF_2)_2-O-(CF_2)-C(CF_3)_2-$, or $-(C=O)-O-C_6H_4-C(CF_3)_2-$, and more preferably $-CF_2-O-CF(CF_3)-$, $-CF_2-O-CF_2-CF(CF_3)-CF_2-O-CF_2CF_2-CF(CF_3)-$, $-CF_2-O-CF(CF_3)-CF(CF_3)-$, $-CF_2-O-CF(CF_3)CF_2-CF(CF_3)-$, $-CF_2-O-CF(CF_3)CF_2-O-CF(CF_3)-$, -(C=O)-, $-(C=O)-O-(CH_2)-$, $-(C=O)-O-(CH_2)-(CH_2)-$, $-(C=O)-O[(CH_2)_2-O]_n-(CH_2)-(CH_2)-$, $-(C=O)-O-(CH_2)_2-O-(CH_2)-C(CF_3)_2-$, or $-(C=O)-O-C_6H_4-C(CF_3)_2-$.

In the above formulas, n is an integer of 1 to 10.

Specific examples of the compound represented by the general formula (4A) include compounds represented by the following formulas:

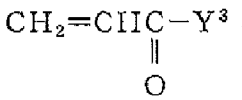 , 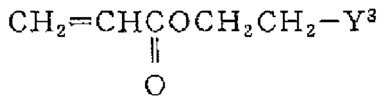 , 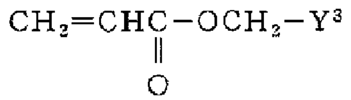 ,

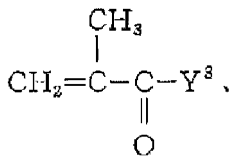 , 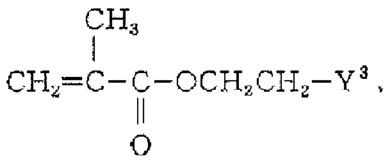 , 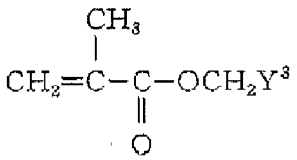 ,

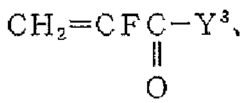 , 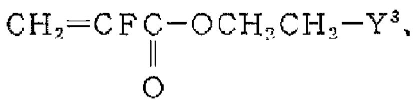 , 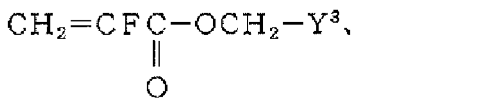 ,

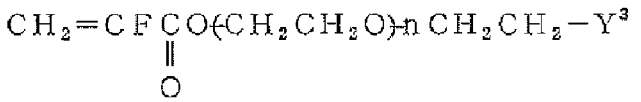 ,

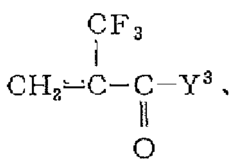 , 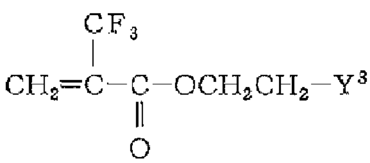 ,

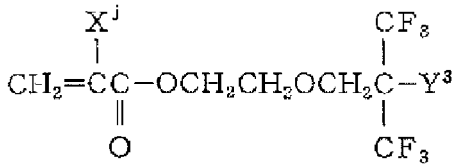

(i)、

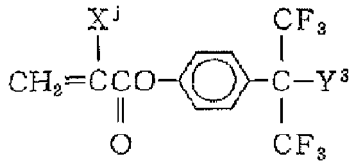

(i i)

wherein $X^j$ and $Y^3$ are the same as described above; and n is an integer of 1 to 10.

$R^a$ is preferably a divalent group represented by the general formula (r1):

$$-(C=O)_h-(O)_i-CF_2-O-(CX^6{}_2)_e-\{O-CF(CF_3)\}_f-(O)_g- \qquad (r1)$$

wherein $X^6$ is each independently H, F, or $CF_3$; e is an integer of 0 to 3; f is an integer of 0 to 3; g is 0 or 1; h is 0 or 1; and i is 0 or 1,
and is also preferably a divalent group represented by the general formula (r2):

$$-(C=O)_h-(O)_1-CF_2-O-(CX^7{}_2)_e-(O)_g- \qquad (r2)$$

wherein $X^7$ is each independently H, F, or $CF_3$; e is an integer of 0 to 3; g is 0 or 1; h is 0 or 1; and i is 0 or 1.

$-R^a-(CZ^1Z^2)_k-$ in the general formula (4A) is also preferably a divalent group represented by the general formula (t1):

$$-(C=O)_h-(O)_i-CF_2-O-(CX^6{}_2)_e-\{O-CF(CF_3)\}_f-(O)_g-CZ^1Z^2- \qquad (t1)$$

wherein $X^6$ is each independently H, F, or $CF_3$; e is an integer of 0 to 3; f is an integer of 0 to 3; g is 0 or 1; h is 0 or 1; i is 0 or 1; and $Z^1$ and $Z^2$ are each independently F or $CF_3$,
and is more preferably a group in which one of $Z^1$ and $Z^2$ is F and the other is $CF_3$ in the formula (t1).

In addition, $-R^a-(CZ^1Z^2)_k-$ in the general formula (4A) is preferably a divalent group represented by the general formula (t2):

$$-(C=O)_h-(O)_i-CF_2-O-(CX^7{}_2)_e-(O)_g-CZ^1Z^2- \qquad (t2)$$

wherein $X^7$ is each independently H, F, or $CF_3$; e is an integer of 0 to 3; g is 0 or 1; h is 0 or 1; i is 0 or 1; and $Z^1$ and $Z^2$ are each independently F or $CF_3$,
and is more preferably a group in which one of $Z^1$ and $Z^2$ is F and the other is $CF_3$ in the formula (t2).

It is also preferable that the compound represented by the general formula (4A) have a C-F bond and not have a C-H bond, excluding the hydrophilic group ($Y^3$). In other words, in the general formula (4A), it is preferable that $X^i$, $X^j$, and $X^k$ be all F and that $R^a$ be a perfluoroalkylene group having 1 or more carbon atoms; the above perfluoroalkylene group may be either linear or branched, may be either cyclic or acyclic, and may contain at least one catenary heteroatom. The above perfluoroalkylene group may have 2 to 20 carbon atoms or 4 to 18 carbon atoms.

The compound represented by the general formula (4A) may be partially fluorinated. In other words, it is also preferable that the compound represented by the general formula (4A) have at least one hydrogen atom bonded to a carbon atom and have at least one fluorine atom bonded to a carbon atom, excluding the hydrophilic group ($Y^3$).

It is also preferable that the compound represented by the general formula (4A) be a compound represented by the following formula (4A-a):

$$CF_2=CF-O-Rf^0-Y^3 \qquad (4A-a)$$

wherein $Y^3$ is a hydrophilic group; and $Rf^0$ is a perfluorinated divalent linking group that is perfluorinated, may be linear or branched, cyclic or acyclic structure, saturated or unsaturated, and substituted or unsubstituted, and optionally contains one or more heteroatoms selected from the group consisting of sulfur, oxygen, and nitrogen.

It is also preferable that the compound represented by the general formula (4A) be a compound represented by the following formula (4A-b):

$CH_2=CH-O-Rf^0-Y^3$ (4A-b)

wherein $Y^3$ is a hydrophilic group; and $Rf^0$ is a perfluorinated divalent linking group as defined in the formula (4A-a).

In the general formula (4A), it is one preferred embodiment for $Y^3$ to be $-OSO_3M$. In the case where $Y^3$ is $-OSO_3M$, examples of the compound represented by the general formula (4A) include $CF_2=CF(OCF_2CF_2CH_2OSO_3M)$, $CH_2=CH((CF_2)_4CH_2OSO_3M)$, $CF_2=CF(O(CF_2)_4CH_2OSO_3M)$, $CF_2=CF(OCF_2CF(CF_3)CH_2OSO_3M)$, $CF_2=CF(OCF_2CF(CF_3)OCF_2CF_2CH_2OSO_3M)$, $CH_2=CH((CF_2)_4CH_2OSO_3M)$, $CF_2=CF(OCF_2CF_2SO_2N(CH_3)CH_2CH_2OSO_3M)$, $CH_2=CH(CF_2CF_2CH_2OSO_3M)$, $CF_2=CF(OCF_2CF_2CF_2CF_2SO_2N(CH_3)CH_2CH_2OSO_3M)$, and $CH_2=CH(CF_2CF_2CH_2OSO_3M)$. In the above formulas, M is the same as described above.

In the general formula (4A), it is also one preferred embodiment for $Y^3$ to be $-SO_3M$. In the case where $Y^3$ is $-SO_3M$, examples of the polymerization unit derived from the compound represented by the general formula (4A) include $CF_2=CF(OCF_2CF_2SO_3M)$, $CF_2=CF(O(CF_2)_4SO_3M)$, $CF_2=CF(OCF_2CF(CF_3)SO_3M)$, $CF_2=CF(OCF_2CF(CF_3)OCF_2CF_2SO_3M)$, $CH_2=CH(CF_2CF_2SO_3M)$, $CF_2=CF(OCF_2CF(CF_3)OCF_2CF_2CF_2CF_2SO_3M)$, $CH_2=CH((CF_2)_4SO_3M)$, $CH_2=CH(CF_2CF_2SO_3M)$, and $CH_2=CH((CF_2)_3SO_3M)$. In the above formulas, M is the same as described above.

In the general formula (4A), it is also one preferred embodiment for $Y^3$ to be -COOM. In the case where $Y^3$ is -COOM, examples of the compound represented by the general formula (4A) include $CF_2=CF(OCF_2CF_2COOM)$, $CF_2=CF(OCF_2CF_2CF_2COOM)$, $CF_2=CF(O(CF_2)_5COOM)$, $CF_2=CF(OCF_2CF(CF_3)COOM)$, $CF_2=CF(OCF_2CF(CF_3)O(CF_2)_nCOOM)$(n is greater than 1), $CH_2=CH(CF_2CF_2COOM)$, $CH_2=CH((CF_2)_4COOM)$, $CH_2=CH(CF_2CF_2COOM)$, $CH_2=CH((CF_2)_3COOM)$, $CF_2=CF(OCF_2CF_2SO_2NR'CH_2COOM)$, $CF_2=CF(O(CF_2)_4SO_2NR'CH_2COOM)$, $CF_2=CF(OCF_2CF(CF_3)SO_2NR'CH_2COOM)$, $CF_2=CF(OCF_2CF(CF_3)OCF_2CF_2SO_2NR'CH_2COOM)$, $CH_2=CH(CF_2CF_2SO_2NR'CH_2COOM)$, $CF_2=CF(OCF_2CF(CF_3)OCF_2CF_2CF_2CF_2SO_2NR'CH_2COOM)$, $CH_2=CH((CF_2)_4SO_2NR'CH_2COOM)$, $CH_2=CH(CF_2CF_2SO_2NR'CH_2COOM)$, and $CH_2=CH((CF_2)_3SO_2NR'CH_2COOM)$. In the above formulas, R' is H or a $C_{1-4}$ alkyl group and M is the same as described above.

In the general formula (4A), it is also one preferred embodiment for $Y^3$ to be $-OPO_3M$ or $-OP(O)(OM)_2$. In the case where $Y^3$ is $-OPO_3M$ or $-OP(O)(OM)_2$, examples of the compound represented by the general formula (4A) include $CF_2=CF(OCF_2CF_2CH_2OP(O)(OM)_2)$, $CF_2=CF(O(CF_2)_4CH_2OP(O)(OM)_2)$, $CF_2=CF(OCF_2CF(CF_3)CH_2OP(O)(OM)_2)$, $CF_2=CF(OCF_2CF(CF_3)OCF_2CF_2CH_2OP(O)(OM)_2)$, $CF_2=CF(OCF_2CF_2SO_2N(CH_3)CH_2CH_2OP(O)(OM)_2)$, $CF_2=CF(OCF_2CF_2CF_2CF_2SO_2N(CH_3)CH_2CH_2OP(O)(OM)_2)$, $CH_2=CH(CF_2CF_2CH_2OP(O)(OM)_2)$, $CH_2=CH((CF_2)_4CH_2OP(O)(OM)_2)$, $CH_2=CH(CF_2CF_2CH_2OP(O)(OM)_2)$, and $CH_2=CH((CF_2)_3CH_2OP(O)(OM)_2)$. In the above formulas, M is the same as described above.

In the general formula (4A), it is also one preferred embodiment for $Y^3$ to be $-PO_3M$ or $-P(O)(OM)_2$. In the case where $Y^3$ is $-PO_3M$ or $-OP(O)(OM)_2$, examples of the compound represented by the general formula (4A) include $CF_2=CF(OCF_2CF_2P(O)(OM)_2)$, $CF_2=CF(O(CF_2)_4P(O)(OM)_2)$, $CF_2=CF(OCF_2CF(CF_3)P(O)(OM)_2)$, $CF_2=CF(OCF_2CF(CF_3)OCF_2CF_2P(O)(OM)_2)$, $CH_2=CH(CF_2CF_2P(O)(OM)_2)$, $CH_2=CH((CF_2)_4P(O)(OM)_2)$, $CH_2=CH(CF_2CF_2P(O)(OM)_2)$, and $CH_2=CH((CF_2)_3P(O)(OM)_2)$, wherein M is the same as described above.

It is preferable that the compound represented by the general formula (4A) be at least one selected from the group consisting of:

a compound represented by the general formula (5A):

$CX_2=CY(-CZ_2-O-Rf-Y^3)$ (5A)

wherein X is the same or different and is -H or -F; Y is -H, -F, an alkyl group, or a fluorine-containing alkyl group; Z is the same or different and is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and $Y^3$ is the same as described above;

a compound represented by the general formula (6A):

$CX_2=CY(-O-Rf-Y^3)$ (6A)

wherein X is the same or different and is -H or -F; Y is -H, -F, an alkyl group, or a fluorine-containing alkyl group; Rf is a fluorine-containing alkylene group having 1 to 40 carbon atoms or a fluorine-containing alkylene group having

2 to 100 carbon atoms and having an ether bond; and $Y^3$ is the same as described above; and
a compound represented by the general formula (7A):

$$CX_2=CY(-Rf-Y^3) \qquad (7A)$$

wherein X is the same or different and is -H or -F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and $Y^3$ is the same as described above. Note that the above fluorine-containing alkylene group having 2 to 100 carbon atoms and having an ether bond is an alkylene group that does not include a structure in which an oxygen atom is an end and contains an ether bond between carbon atoms.

In the general formula (5A), each X is -H or -F. Both X may be -F, or at least one thereof may be -H. For example, one thereof may be -F and the other may be -H, or both may be -H.

In the general formula (5A), Y is -H, -F, an alkyl group, or a fluorine-containing alkyl group. The above alkyl group is an alkyl group free from fluorine atoms, and may have one or more carbon atoms. The above alkyl group preferably has 6 or less carbon atoms, more preferably 4 or less carbon atoms, and still more preferably 3 or less carbon atoms. The above fluorine-containing alkyl group is an alkyl group containing at least one fluorine atom, and may have one or more carbon atoms. The above fluorine-containing alkyl group preferably has 6 or less carbon atoms, more preferably 4 or less carbon atoms, and still more preferably 3 or less carbon atoms. The above Y is preferably -H, -F, or $-CF_3$, and more preferably -F.

In the general formula (5A), Z is the same or different and is -H, -F, an alkyl group, or a fluoroalkyl group. The above alkyl group is an alkyl group free from fluorine atoms, and may have one or more carbon atoms. The above alkyl group preferably has 6 or less carbon atoms, more preferably 4 or less carbon atoms, and still more preferably 3 or less carbon atoms. The above fluorine-containing alkyl group is an alkyl group containing at least one fluorine atom, and may have one or more carbon atoms. The above fluorine-containing alkyl group preferably has 6 or less carbon atoms, more preferably 4 or less carbon atoms, and still more preferably 3 or less carbon atoms. The above Z is preferably -H, -F, or $-CF_3$, and more preferably -F.

In the general formula (5A), it is preferable that at least one of the above X, Y, and Z contain a fluorine atom. For example, X may be -H, and Y and Z may be -F.

In the general formula (5A), the above Rf is a fluorine-containing alkylene group having 1 to 40 carbon atoms or a fluorine-containing alkylene group having 2 to 100 carbon atoms and having an ether bond. The above fluorine-containing alkylene group preferably has 2 or more carbon atoms. It also preferably has 30 or less carbon atoms, more preferably 20 or less carbon atoms, and still more preferably 10 or less carbon atoms. Examples of the above fluorine-containing alkylene group include $-CF_2-$, $-CH_2CF_2-$, $-CF_2CF_2-$, $-CF_2CH_2-$, $-CF_2CF_2CH_2-$, $-CF(CF_3)-$, $-CF(CF_3)CF_2-$, and $-CF(CF_3)CH_2-$. It is preferable that the above fluorine-containing alkylene group be a perfluoroalkylene group.

The fluorine-containing alkylene group having an ether bond preferably has 3 or more carbon atoms. In addition, the fluorine-containing alkylene group having an ether bond preferably has 60 or less carbon atoms, more preferably 30 or less carbon atoms, and still more preferably 12 or less carbon atoms. It is also preferable that the fluorine-containing alkylene group having an ether bond be a divalent group represented by the following formula:

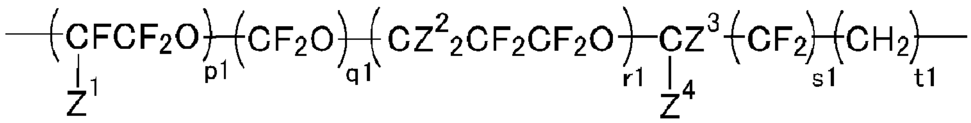

wherein $Z^1$ is F or $CF_3$; $Z^2$ and $Z^3$ are each H or F; $Z^4$ is H, F, or $CF_3$; p1 + q1 + r1 is an integer of 1 to 10; s1 is 0 or 1; and t1 is an integer of 0 to 5.

Specific examples of the above fluorine-containing alkylene group having an ether bond include $-CF(CF_3)CF_2-O-CF(CF_3)-$, $-(CF(CF_3)CF_2-O)_n-CF(CF_3)-$ (wherein n is an integer of 1 to 10), $-CF(CF_3)CF_2-O-CF(CF_3)CH_2-$, $-(CF(CF_3)CF_2-O)_n-CF(CF_3)CH_2-$ (wherein n is an integer of 1 to 10), $-CH_2CF_2CF_2O-CH_2CF_2CH_2-$, $-CF_2CF_2CF_2O-CF_2CF_2-$, $-CF_2CF_2CF_2O-CF_2CF_2CH_2-$, $-CF_2CF_2O-CF_2-$, and $-CF_2CF_2O-CF_2CH_2-$. It is preferable that the above fluorine-containing alkylene group having an ether bond be a perfluoroalkylene group.

In the general formula (5A), it is preferable that $Y^3$ be $-COOM$, $-SO_3M$, or $-OSO_3M$, wherein M is H, a metal atom, $NR^7_4$, imidazolium optionally having a substituent, pyridinium optionally having a substituent, or phosphonium optionally having a substituent, where $R^7$ is H or an organic group, may be the same or different, and any two thereof may be bonded to each other to form a ring. The organic group in $R^7$ is preferably an alkyl group. $R^7$ is preferably H or a $C_{1-10}$ organic group, more preferably H or a $C_{1-4}$ organic group, and still more preferably H or a $C_{1-4}$ alkyl group. Examples of the above metal atom include an alkali metal (Group 1) and an alkaline earth metal (Group 2), and preferred

is Na, K, or Li. The above M is preferably -H, a metal atom, or - NR'$_4$, more preferably -H, an alkali metal (Group 1), an alkaline earth metal (Group 2), or -$NR^7{}_4$, still more preferably -H, -Na, -K, -Li, or -$NH_4$, further preferably -Na, -K, or -$NH_4$, particularly preferably -Na or -$NH_4$, and most preferably -$NH_4$. The above $Y^3$ is preferably - COOM or -$SO_3M$, and more preferably -COOM.

It is preferable that the compound represented by the general formula (5A) be a compound (5a) represented by the general formula (5a):

$CH_2$=CF(-$CF_2$-O-Rf-$Y^3$) (5a)

wherein Rf and $Y^3$ are the same as described above.

Specific examples of the compound represented by the general formula (5a) include a compound represented by the following formula:

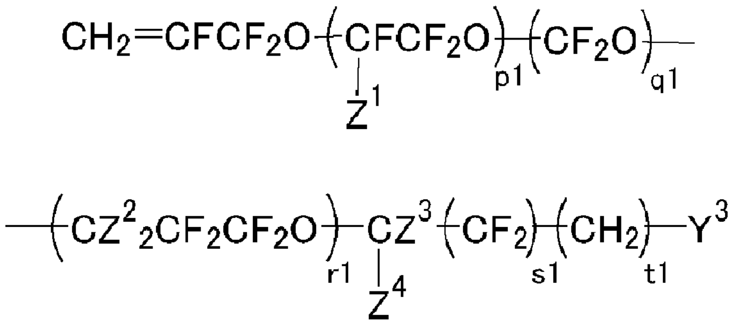,

wherein $Z^1$ is F or $CF_3$; $Z^2$ and $Z^3$ are each H or F; $Z^4$ is H, F, or $CF_3$; p1 + q1 + r1 is an integer of 0 to 10; s1 is 0 or 1; t1 is an integer of 0 to 5; and $Y^3$ is the same as described above, with the proviso that, in the case where $Z^3$ and $Z^4$ are both H, p1 + q1 + r1 + s1 is not 0. More specifically, preferred examples thereof include:

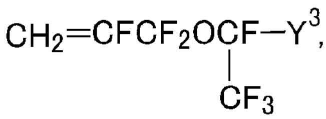, 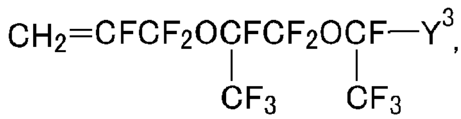,

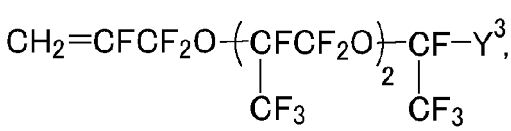, 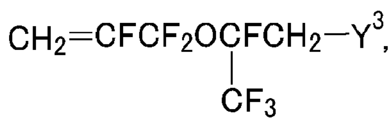,

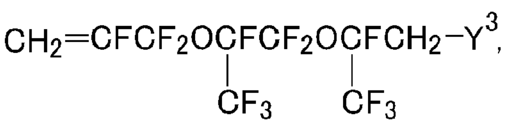, 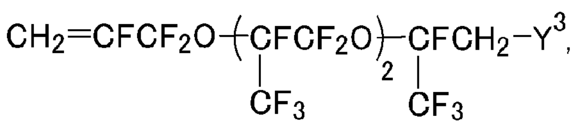,

$CH_2$=$CFCF_2OCH_2CF_2$-$Y^3$, $CH_2$=$CFCF_2O(CH_2CF_2CF_2O)CH_2CF_2$-$Y^3$,

$CH_2$=$CFCF_2OCH_2CF_2CH_2$-$Y^3$,

$CH_2$=$CFCF_2O(CH_2CF_2CF_2O)CH_2CF_2CH_2$-$Y^3$

$CH_2$=$CFCF_2OCF_2CF_2$-$Y^3$ $CH_2$=$CFCF_2O(CF_2CF_2CF_2O)CF_2CF_2$-$Y^3$,

$CH_2$=$CFCF_2OCF_2CF_2CH_2$-$Y^3$

$CH_2$=$CFCF_2O(CF_2CF_2CF_2O)CF_2CF_2CH_2$-$Y^3$,

$CH_2$=$CFCF_2OCF_2$-$Y^3$, $CH_2$=$CFCF_2O(CF_2CF_2O)CF_2$-$Y^3$

$CH_2=CFCF_2OCF_2CH_2-Y^3$,

$CH_2=CFCF_2O(CF_2CF_2O)CF_2CH_2-Y^3$,

Of these,

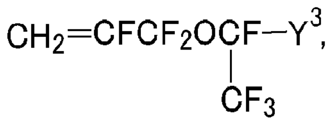

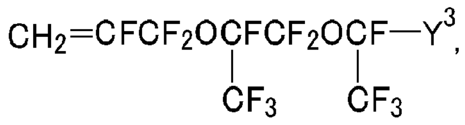

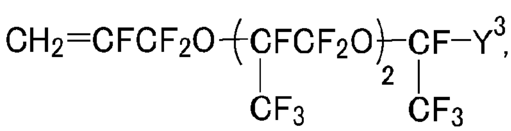

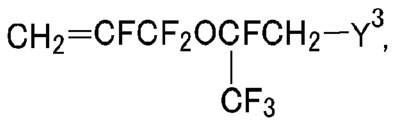

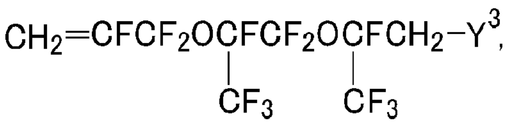

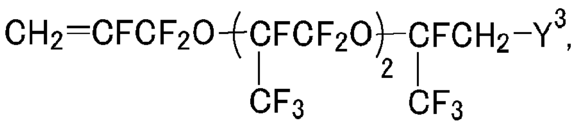

are preferred.

In the compound represented by the general formula (5a), it is preferable that $Y^3$ in the formula (5a) be - COOM. In particular, it is preferably at least one selected from the group consisting of $CH_2=CFCF_2OCF(CF_3)COOM$ and $CH_2=CFCF_2OCF(CF_3)CF_2OCF(CF_3)COOM$, wherein M is the same as defined above, and more preferably $CH_2=CFCF_2OCF(CF_3)COOM$.

It is preferable that the compound represented by the general formula (5A) be a compound (5b) represented by the general formula (5b):

$CX^2_2=CFCF_2-O-(CF (CF_3)CF_2O)_{n5}-CF(CF_3)-Y^3$ (5b)

wherein each $X^2$ is the same and represents F or H; n5 represents 0 or an integer of 1 to 10; and $Y^3$ is the same as defined above.

In the general formula (5b), the above n5 is preferably 0 or an integer of 1 to 5, more preferably 0, 1, or 2, and still more preferably 0 or 1 from the viewpoint of the agglomeration suppressing property of the resulting coating material composition at the time of stirring. The above $Y^3$ is preferably -COOM from the viewpoint of obtaining moderate water-solubility and the agglomeration suppressing property of the coating material composition at the time of stirring, and the above M is preferably H or $NH_4$ from the viewpoint of being less likely to remain as an impurity and improving the heat resistance of the resulting coating film.

Examples of the compound represented by the general formula (5c) include $CH_2=CFCF_2OCF(CF_3)COOM$ and $CH_2=CFCF_2OCF(CF_3)CF_2OCF(CF_3)COOM$, wherein M is the same as defined above.

Examples of the compound represented by the general formula (5A) also include a compound represented by the general formula (5c):

$CF_2=CFCF_2-O-Rf-Y^3$ (5c)

wherein Rf and $Y^3$ are the same as described above.

More specific examples thereof include:

$CF_2=CFCF_2OCF_2CF_2CF_2-Y^3$,

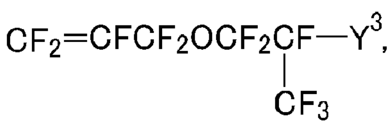

$CF_2=CFCF_2OCF_2CF_2CF_2CH_2-Y^3$,

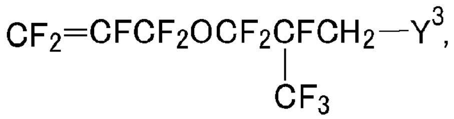

.

In the general formula (6A), each X is -H or -F. Both X may be -F, or at least one thereof may be -H. For example, one thereof may be -F and the other may be -H, or both may be -H.

In the general formula (6A), Y is -H, -F, an alkyl group, or a fluorine-containing alkyl group. The above alkyl group is an alkyl group free from fluorine atoms, and may have one or more carbon atoms. The above alkyl group preferably has 6 or less carbon atoms, more preferably 4 or less carbon atoms, and still more preferably 3 or less carbon atoms. The above fluorine-containing alkyl group is an alkyl group containing at least one fluorine atom, and may have one or more carbon atoms. The above fluorine-containing alkyl group preferably has 6 or less carbon atoms, more preferably 4 or less carbon atoms, and still more preferably 3 or less carbon atoms. The above Y is preferably -H, -F, or $-CF_3$, and more preferably -F.

In the general formula (6A), it is preferable that at least one of the above X and Y contain a fluorine atom. For example, X may be -H, and Y and Z may be -F.

In the general formula (6A), the above Rf is a fluorine-containing alkylene group having 1 to 40 carbon atoms or a fluorine-containing alkylene group having 2 to 100 carbon atoms and having an ether bond. The above fluorine-containing alkylene group preferably has 2 or more carbon atoms. In addition, the above fluorine-containing alkylene group preferably has 30 or less carbon atoms, more preferably 20 or less carbon atoms, and still more preferably 10 or less carbon atoms. Examples of the above fluorine-containing alkylene group include $-CF_2-$, $-CH_2CF_2-$, $-CF_2CF_2-$, $-CF_2CH_2-$, $-CF_2CF_2CH_2-$, $-CF(CF_3)-$, $-CF(CF_3)CF_2-$, and $-CF(CF_3)CH_2-$. It is preferable that the above fluorine-containing alkylene group be a perfluoroalkylene group.

In the above general formula (6A), it is preferable that $Y^3$ be -COOM, $-SO_3M$, or $-OSO_3M$, wherein M is H, a metal atom, $NR^7_4$, imidazolium optionally having a substituent, pyridinium optionally having a substituent, or phosphonium optionally having a substituent, where $R^7$ is H or an organic group, may be the same or different, and any two thereof may be bonded to each other to form a ring.

The organic group in $R^7$ is preferably an alkyl group. $R^7$ is preferably H or a $C_{1-10}$ organic group, more preferably H or a $C_{1-4}$ organic group, and still more preferably H or a $C_{1-4}$ alkyl group.

Examples of the above metal atom include an alkali metal (Group 1) and an alkaline earth metal (Group 2), and preferred is Na, K, or Li.

The above M is preferably -H, a metal atom, or $-NR^7_4$, more preferably -H, an alkali metal (Group 1), an alkaline earth metal (Group 2), or $-NR^7_4$, still more preferably -H, -Na, -K, -Li, or $-NH_4$, further preferably -Na, -K, or $-NH_4$, particularly preferably -Na or $-NH_4$, and most preferably $-NH_4$.

The above $Y^3$ is preferably -COOM or $-SO_3M$, and more preferably -COOM.

The compound represented by the general formula (6A) is preferably at least one selected from the group consisting of compounds represented by the general formulas (6a), (6b), (6c), (6d), and (6e):

$CF_2=CF-O-(CF_2)_{n1}-Y^3$ (6a)

wherein n1 represents an integer of 1 to 10; and $Y^3$ is the same as defined above;

$CF_2=CF-O-(CF_2C(CF_3)F)_{n2}-Y^3$ (6b)

wherein n2 represents an integer of 1 to 5; and $Y^3$ is the same as defined above;

$CF_2=CF-O-(CFX^1)_{n3}-Y^3$ (6c)

wherein $X^1$ represents F or $CF_3$; n3 represents an integer of 1 to 10; and $Y^3$ is the same as defined above;

$CF_2=CF-O-(CF_2CFX^1O)_{n4}-(CF_2)_{n6}-Y^3$ (6d)

wherein n4 represents an integer of 1 to 10; n6 represents an integer of 1 to 3; and $Y^3$ and $X^1$ are the same as defined above; and

$$CF_2=CF-O-(CF_2CF_2CFX^1O)_{n5}-CF_2CF_2CF_2-Y^3 \qquad (6e)$$

wherein n5 represents an integer of 0 to 10; and $Y^3$ and $X^1$ are the same as defined above.

In the general formula (6a), the above n1 is preferably an integer of 5 or less, and more preferably an integer of 2 or less. The above $Y^3$ is preferably - COOM from the viewpoint of obtaining moderate water-solubility and the excellent agglomeration suppressing property of the coating material composition at the time of stirring, and M is preferably H or $NH_4$ from the viewpoint of being less likely to remain as an impurity and improving the heat resistance of the resulting coating film.

Examples of the compound represented by the general formula (6a) include $CF_2=CF-O-CF_2COOM$, $CF_2=CF(OCF_2CF_2COOM)$, and $CF_2=CF(OCF_2CF_2CF_2COOM)$, wherein M is the same as defined above.

In the general formula (6b), the above n2 is preferably an integer of 3 or less from the viewpoint of the agglomeration suppressing property of the resulting coating material composition at the time of stirring, $Y^3$ is preferably -COOM from the viewpoint of obtaining moderate water-solubility and the excellent agglomeration suppressing property of the coating material composition at the time of stirring, and M is preferably H or $NH_4$ from the viewpoint of being less likely to remain as an impurity and improving the heat resistance of the resulting coating film.

In the general formula (6c), the above n3 is preferably an integer of 5 or less from the viewpoint of water-solubility, the above $Y^3$ is preferably -COOM from the viewpoint of obtaining moderate water-solubility and the excellent agglomeration suppressing property of the coating material composition at the time of stirring, and the above M is preferably H or $NH_4$ from the viewpoint of providing a better agglomeration suppressing property at the time of stirring.

In the general formula (6d), the above $X^1$ is preferably $-CF_3$ from the viewpoint of the agglomeration suppressing property of the coating material composition at the time of stirring, the above n4 is preferably an integer of 5 or less from the viewpoint of water-solubility, the above $Y^3$ is preferably -COOM from the viewpoint of obtaining moderate water-solubility and the excellent agglomeration suppressing property of the coating material composition at the time of stirring, and the above M is preferably H or $NH_4$.

Examples of the compound represented by the general formula (6d) include $CF_2=CFOCF_2CF(CF_3)OCF_2CF_2COOM$, $CF_2=CFOCF_2CF(CF_3)OCF_2COOM$, and $CF_2=CFOCF_2CF(CF_3)OCF_2CF_2CF_2COOM$, wherein M represents H, $NH_4$, or an alkali metal.

In the general formula (6e), the above n5 is preferably an integer of 5 or less from the viewpoint of water-solubility, the above $Y^3$ is preferably -COOM from the viewpoint of obtaining moderate water-solubility and the excellent agglomeration suppressing property of the coating material composition at the time of stirring, and the above M is preferably H or $NH_4$.

Examples of the compound represented by the general formula (6e) include $CF_2=CFOCF_2CF_2CF_2COOM$, wherein M represents H, $NH_4$, or an alkali metal.

In the general formula (7A), it is preferable that Rf be a fluorine-containing alkylene group having 1 to 40 carbon atoms. In the general formula (7A), it is preferable that at least one of X and Y contain a fluorine atom.

The compound represented by the general formula (7A) is preferably at least one selected from the group consisting of:

a compound represented by the general formula (7a):

$$CF_2=CF-(CF_2)_{n1}-Y^3 \qquad (7a)$$

wherein n1 represents an integer of 1 to 10; and $Y^3$ is the same as defined above; and
a compound represented by the general formula (7b):

$$CF_2=CF-(CF_2C(CF_3)F)_{n2}-Y^3 \qquad (7b)$$

wherein n2 represents an integer of 1 to 5; and $Y^3$ is the same as defined above.

The above $Y^3$ is preferably $-SO_3M$ or -COOM, and it is preferable that M be H, a metal atom, $NR^7{}_4$, imidazolium optionally having a substituent, pyridinium optionally having a substituent, or phosphonium optionally having a substituent. The above $R^7$ represents H or an organic group.

In the general formula (7b), the above n2 is preferably an integer of 3 or less from the viewpoint of the agglomeration suppressing property of the resulting coating material composition at the time of stirring, $Y^3$ is preferably -COOM from the viewpoint of obtaining moderate water-solubility and the excellent agglomeration suppressing property of the

coating material composition at the time of stirring, and M is preferably H or $NH_4$ from the viewpoint of being less likely to remain as an impurity and improving the heat resistance of the resulting coating film.

The above modifying monomer preferably contains the modifying monomer (A), preferably contains at least one selected from the group consisting of the compounds represented by the general formula (5c), the general formula (6a), the general formula (6b), the general formula (6c), and the general formula (6d), and more preferably contains the compound represented by the general formula (5c).

In the case where the modifying monomer contains the above modifying monomer (A), it is preferable that the content of the modifying monomer (A) unit be in the range of 0.00001 to 1.0% by mass based on all polymerization units of the PTFE. The lower limit thereof is preferably 0.0001% by mass, more preferably 0.001% by mass, still more preferably 0.005% by mass, and particularly preferably 0.009% by mass. The upper limit thereof is, in the order of preference, 0.90% by mass, 0.50% by mass, 0.40% by mass, 0.30% by mass, 0.20% by mass, 0.15% by mass, 0.10% by mass, 0.08% by mass, 0.05% by mass, or 0.01% by mass.

In the present disclosure, the contents of the respective compound units constituting the PTFE can be calculated by combining NMR, FT-IR, elemental analysis, and X-ray fluorescence analysis as appropriate depending on the types of compounds. In addition, the contents of the respective compound units constituting the PTFE can also be determined by calculation from the amount of the added modifying monomer used in the polymerization.

The PTFE may have a core-shell structure. Examples of the PTFE having a core-shell structure include a modified PTFE containing the core of a high molecular weight PTFE and the shell of a lower molecular weight PTFE or modified PTFE in the particle. Examples of such a modified PTFE include a PTFE described in Japanese National Publication of International Patent Application No. 2005/527652.

The PTFE preferably has an average primary particle size of 150 nm or more, and more preferably 180 nm or more. The larger the average primary particle size of the PTFE, the more the increase in paste extrusion pressure can be suppressed when paste extrusion forming is performed using the powder and the film formability is excellent as well. The upper limit thereof is not limited, but it may be 500 nm. From the viewpoint of productivity in the polymerization step, the upper limit is preferably 400 nm, and more preferably 350 nm. The above average primary particle size is obtained by diluting a PTFE aqueous dispersion with water to a solid concentration of 0.15% by mass, measuring the transmittance of projected light at 550 nm relative to the unit length of the obtained diluted latex and the number-reference length average primary particle size determined by measuring the directional diameter with a transmission electron microscope image to prepare a calibration curve, and determining it from the measured transmittance of projected light at 550 nm of each sample using this calibration curve.

The above average primary particle size can also be measured by dynamic light scattering. The above average primary particle size may be measured by preparing an aqueous dispersion with a solid concentration being adjusted to about 1.0% by mass and using dynamic light scattering at 25°C with 70 measurement processes, wherein the solvent (water) has a refractive index of 1.3328 and the solvent (water) has a viscosity of 0.8878 mPa·s. The dynamic light scattering may use, for example, ELSZ-1000S (manufactured by Otsuka Electronics Co., Ltd.).

The aspect ratio of primary particles of the PTFE is preferably less than 2.00, more preferably 1.90 or less, still more preferably 1.80 or less, further preferably 1.70 or less, still further preferably 1.60 or less, and particularly preferably 1.50 or less. The aspect ratio is more preferably 1.45 or less, still more preferably 1.40 or less, further preferably 1.35 or less, still further preferably 1.30 or less, particularly preferably 1.20 or less, and most preferably 1.10 or less. In the case of measuring in an aqueous dispersion, the aspect ratio is determined by observing a PTFE aqueous dispersion diluted to a solid concentration of about 1% by mass with a scanning electron microscope (SEM), performing image processing on 400 or more particles selected at random, and averaging the ratios of the major axis to the minor axis. In the case of measuring with powder, the aspect ratio is obtained by irradiating the PTFE powder with an electron beam, adding it to an aqueous solution of a fluorosurfactant, redispersing it with ultrasonic waves to obtain a PTFE aqueous dispersion, and then determining it from this PTFE aqueous dispersion by the same method as that used for the measurement with an aqueous dispersion.

The standard specific gravity (SSG) of the PTFE is preferably 2.280 or less, more preferably 2.210 or less, still more preferably 2.200 or less, further preferably 2.190 or less, and particularly preferably 2.180 or less. It is also preferable that the SSG be 2.130 or more. The SSG is determined by the water replacement method in conformity with ASTM D 792 using a sample formed in conformity with ASTM D 4895-89.

It is preferable that the PTFE have a peak temperature in the range of 333 to 347°C. More preferably, the peak temperature is 335°C or higher and 345°C or lower. The above peak temperature is a temperature corresponding to the maximum value in the heat-of-fusion curve when a PTFE having no history of being heated to a temperature of 300°C or higher is heated at a rate of 10°C /min using a differential scanning calorimeter (DSC). The peak temperature can also be specified as a temperature corresponding to the maximum value appearing in a differential thermal analysis (DTA) curve obtained by raising the temperature of a PTFE having no history of being heated to a temperature of 300°C or higher, under a condition of 10°C/min using a TG-DTA (thermogravimetry/differential thermal analyzer).

<Polymer (I)>

The first coating material composition of the present disclosure comprises a polymer (I). It is preferable that the second coating material composition and the third coating material composition of the present disclosure comprise the polymer (I). The polymer (I) contains a polymerization unit (I) derived from a monomer represented by the general formula (I). It is preferable that the polymer (I) contain two or more polymerization units (I):

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

$X^2$ is preferably F, Cl, H, or $CF_3$. In addition, $Z^1$ and $Z^2$ are each preferably F or $CF_3$.

In the present disclosure, the anionic group includes a functional group that provides an anionic group, for example, an acid group such as -COOH and an acid base such as $-COONH_4$, in addition to an anionic group such as a sulfate group and a carboxylate group. The anionic group is preferably a sulfate group, a carboxylate group, a phosphate group, a phosphonate group, a sulfonate group, or $-C(CF_3)_2OM$, wherein M is -H, a metal atom, $-NR^7_4$, imidazolium optionally having a substituent, pyridinium optionally having a substituent, or phosphonium optionally having a substituent, and $R^7$ is H or an organic group.

The polymer (I) may contain the polymerization unit (I) solely derived from one kind of monomer represented by the general formula (I), or it may contain the polymerization units (I) derived from two or more kinds of monomers represented by the general formula (I).

R is a linking group. The term "linking group" as used herein is a (m + 1)-valent linking group, and refers to a divalent linking group in the case where m is 1. The linking group may be a single bond, and preferably contains at least one carbon atom. The number of carbon atoms may be 2 or more, may be 4 or more, may be 8 or more, may be 10 or more, or may be 20 or more. The upper limit thereof is not limited, but it may be 100 or less or may be 50 or less, for example.

The linking group may be linear or branched, cyclic or acyclic structure, saturated or unsaturated, and substituted or unsubstituted. As desired, it may contain one or more heteroatoms selected from the group consisting of sulfur, oxygen, and nitrogen, and as desired, it may contain one or more functional groups selected from the group consisting of ester, amide, sulfonamide, carbonyl, carbonate, urethane, urea, and carbamate. The above linking group may be free from carbon atoms and may be a catenary heteroatom such as oxygen, sulfur, or nitrogen.

m is an integer of 1 or more, and it is preferably 1 or 2 and more preferably 1. In the case where m is an integer of 2 or more, $Z^1$, $Z^2$, and $A^0$ may be the same or different.

Next, the suitable configuration in the case where m is 1 in the general formula (I) will be described.

It is preferable that R be a catenary heteroatom such as oxygen, sulfur, or nitrogen, or a divalent organic group.

In the case where R is a divalent organic group, a hydrogen atom bonded to a carbon atom may be replaced with a halogen other than fluorine, such as chlorine, and the divalent organic group may or may not contain a double bond. In addition, R may be either linear or branched, and may be either cyclic or acyclic. In addition, R may contain a functional group (for example, ester, ether, ketone (a keto group), amine, halide, or the like).

R may also be a fluorine-free divalent organic group, or a partially fluorinated or perfluorinated divalent organic group.

R may be, for example, a hydrocarbon group in which no fluorine atom is bonded to a carbon atom, a hydrocarbon group in which some hydrogen atoms bonded to carbon atoms are replaced with fluorine atoms, or a hydrocarbon group in which all hydrogen atoms bonded to carbon atoms are replaced with fluorine atoms, and these may contain an oxygen atom, may contain a double bond, and may contain a functional group.

It is preferable that R be a hydrocarbon group having 1 to 100 carbon atoms that optionally contains an ether bond or a keto group, wherein some or all of the hydrogen atoms bonded to the carbon atoms in the hydrocarbon group may be replaced with fluorine.

R is preferably at least one selected from $-(CH_2)_a-$, $-(CF_2)_a-$, $-O-(CF_2)_a-$, $-(CF_2)_a-O-(CF_2)_b-$, $-O(CF_2)_a-O-(CF_2)_b-$, $-(CF_2)_a-[O-(CF_2)_b]_c-$, $-O(CF_2)_a-[O-(CF_2)_b]_c-$, $-[(CF_2)_a-O]_b-[(CF_2)_c-O]_d-$, $-O[(CF_2)_a-O]_b-[(CF_2)_c-O]_d-$, $-O-[CF_2CF(CF_3)O]_a-(CF_2)_b-$, $-[CF_2CF(CF_3)O]_a-$, $-[CF(CF_3)CF_2O]_a-$, $-(CF_2)_a-O-[CF(CF_3)CF_2O]_a-$, $-(CF_2)_a-O-[CF(CF_3)CF_2O]_a-(CF_2)_b-$, $-[CF_2CF(CF_3)]_a-CO-(CF_2)_b-$, and combinations thereof.

In the formulas, a, b, c, and d are each independently at least 1 or more. a, b, c, and d may be each independently 2 or more, may be 3 or more, may be 4 or more, may be 10 or more, or may be 20 or more. The upper limit of a, b, c, and d is 100, for example.

R is preferably a divalent group represented by the general formula (r1):

$$-CF_2-O-(CX^6_2)_e-\{O-CF(CF_3)\}_f-(O)_g- \qquad (r1)$$

wherein $X^6$ is each independently H, F, or $CF_3$; e is an integer of 0 to 3; f is an integer of 0 to 3; and g is 0 or 1, and is preferably a divalent group represented by the general formula (r2):

$$-CF_2-O-(CX^7{}_2)_e-(O)_g- \qquad (r2)$$

wherein $X^7$ is each independently H, F, or $CF_3$; e is an integer of 0 to 3; and g is 0 or 1.

Specific examples suitable for R include $-CF_2-O-$, $-CF_2-O-CF_2-$, $-CF_2-O-CH_2-$, $-CF_2-O-CH_2CF_2-$, $-CF_2-O-CF_2CF_2-$, - $CF_2-O-CF_2CH_2-$, $-CF_2-O-CF_2CF_2CH_2-$, $-CF_2-O-CF(CF_3)-$, $-CF_2-O-CF(CF_3)CF_2-$, $-CF_2-O-CF(CF_3)CF_2-O-$, $-CF_2-O-CF(CF_3)CF_2-O-CF_2-$, and $-CF_2-O-CF(CF_3)CH_2-$. Of these, R is preferably a perfluoroalkylene group optionally containing an oxygen atom, and specifically, $-CF_2-O-$, $-CF_2-O-CF_2-$, $-CF_2-O-CF_2CF_2-$, $-CF_2-O-CF(CF_3)-$, $-CF_2-O-CF(CF_3)CF_2-$, or $-CF_2-O-CF(CF_3)CF_2-O-$ is preferred.

$-R-CZ^1Z^2-$ in the general formula (I) is preferably one represented by the general formula (s1):

$$-CF2-O-(CX^6{}_2)_e-\{O-CF(CF_3)\}_f-(O)_g-CZ^1Z^2- \qquad (s1)$$

wherein $X^6$ is each independently H, F, or $CF_3$; e is an integer of 0 to 3; f is an integer of 0 to 3; g is 0 or 1; and $Z^1$ and $Z^2$ are each independently H, F, an alkyl group, or a fluorine-containing alkyl group, and more preferably, in the formula (s1), $Z^1$ and $Z^2$ are each F or $CF_3$, and still more preferably, one of them is F and the other is $CF_3$.

In addition, $-R-CZ^1Z^2-$ in the general formula (I) is preferably one represented by the general formula (s2) :

$$-CF_2-O-(CX^7{}_2)_e-(O)_g-CZ^1Z^2- \qquad (s2)$$

wherein $X^7$ is each independently H, F, or $CF_3$; e is an integer of 0 to 3; g is 0 or 1; and $Z^1$ and $Z^2$ are each independently H, F, an alkyl group, or a fluorine-containing alkyl group, and more preferably, in the formula (s2), $Z^1$ and $Z^2$ are each F or $CF_3$, and still more preferably, one of them is F and the other is $CF_3$.

$-R-CZ^1Z^2-$ in the general formula (I) is preferably $-CF_2-O-CF_2-$, $-CF_2-O-CF(CF_3)-$, $-CF_2-O-C(CF_3)_2-$, $-CF_2-O-CF_2-CF_2-$, $-CF_2-O-CF_2-CF(CF_3)-$, $-CF_2-O-CF_2-C(CF_3)_2-$, $-CF_2-O-CF_2CF_2-CF_2-$, $-CF_2-O-CF_2CF_2-CF(CF_3)-$, $-CF_2-O-CF_2CF_2-C(CF_3)_2-$, $-CF_2-O-CF(CF_3)-CF_2-$, $-CF_2-O-CF(CF_3)-CF (CF_3)-$, $-CF_2-O-CF(CF_3)-C (CF_3)_2-$, $-CF_2-O-CF(CF_3)CF_2-CF_2-$, $-CF_2-O-CF(CF_3)CF_2-CF(CF_3)-$, $-CF_2-O-CF(CF_3)CF_2-C(CF_3)_2-$, $-CF_2-O-CF(CF_3)CF_2-O-CF_2-$, $-CF_2-O-CF(CF_3)CF_2-O-CF(CF_3)-$, or $-CF_2-O-CF(CF_3)CF_2-O-C (CF_3)_2-$, and more preferably $-CF_2-O-CF(CF_3)-$, $-CF_2-O-CF_2-CF(CF_3)-$, $-CF_2-O-CF_2CF_2-CF(CF_3)-$, $-CF_2-O-CF(CF_3)-CF (CF_3)-$, $-CF_2-O-CF(CF_3)CF_2-CF(CF_3)-$, or $-CF_2-O-CF(CF_3)CF_2-O-CF(CF_3)-$.

It is also preferable that the polymer (I) be highly fluorinated. It is preferable that, except for the anionic group ($A^0$) such as a phosphate group moiety (for example, $CH_2OP(O)(OM)_2$) and a sulfate group moiety (for example, $CH_2OS(O)_2OM$), 80% or more, 90% or more, 95% or more, or 100% of C-H bonds in the polymer (I) be replaced with C-F bonds.

It is also preferable that the polymer (I) have a C-F bond and not have a C-H bond, excluding the anionic group ($A^0$). In other words, in the general formula (I), it is preferable that $X^1$, $X^2$, and $X^3$ be all F and that R be a perfluoroalkylene group having 1 or more carbon atoms; the above perfluoroalkylene group may be either linear or branched, may be either cyclic or acyclic, and may contain at least one catenary heteroatom. The above perfluoroalkylene group may have 2 to 20 carbon atoms or 4 to 18 carbon atoms.

The polymer (I) may be partially fluorinated. In other words, it is also preferable that the polymer (I) have at least one hydrogen atom bonded to a carbon atom and have at least one fluorine atom bonded to a carbon atom, excluding the anionic group ($A^0$).

The anionic group ($A^0$) may be $-SO_3M$, $-OSO_3M$, $-COOM$, $-SO_2NR'CH_2COOM$, $-CH_2OP(O)(OM)_2$, $[-CH_2O]_2P(O)(OM)$, - $CH_2CH_2OP(O)(OM)_2$, $[-CH_2CH_2O]_2P(O)(OM)$, $-CH_2CH_2OSO_3M$, - $P(O) (OM)_2$, $-SO_2NR'CH_2CH_2OP(O) (OM)_2$, $[-SO_2NR'CH_2CH_2O]_2P(O)(OM)$, $-CH_2OSO_3M$, $-SO_2NR'CH_2CH_2OSO_3M$, or $-C(CF_3)_2OM$. Of these, it is preferably $-SO_3M$, $-OSO_3M$, - COOM, $-P(O) (OM)_2$, or $-C(CF_3)_2CM$; it is more preferably -COOM, $-SO_3M$, $-OSO_3M$, or $-C(CF_3)_2OM$; it is still more preferably $-SO_3M$, -COOM, or $-P(O) (OM)_2$; it is particularly preferably $-SO_3M$ or -COOM; and it is most preferably -COOM.

M is H, a metal atom, $NR^7{}_4$, imidazolium optionally having a substituent, pyridinium optionally having a substituent, or phosphonium optionally having a substituent, and $R^7$ is H or an organic group.

Examples of the metal atom include an alkali metal (Group 1) and an alkaline earth metal (Group 2), and preferred is Na, K, or Li.

M is preferably -H, a metal atom, or $NR^7{}_4$, more preferably -H, an alkali metal (Group 1), an alkaline earth metal (Group 2), or $NR^7{}_4$, still more preferably -H, -Na, -K, -Li, or $NH_4$, further preferably -H, -Na, -K, or $NH_4$, particularly preferably -H, -Na or $NH_4$, and most preferably -H or $-NH_4$.

In the polymer (I), each polymerization unit (I) may have a different anionic group or may have the same anionic group.

It is also preferable that the polymer (I) be a polymer containing a polymerization unit (Ia) derived from a monomer represented by the general formula (Ia):

$CF_2$=CF-O-$Rf^0$-$A^0$ (Ia)

wherein $A^0$ is an anionic group; and $Rf^0$ is a perfluorinated divalent linking group that is perfluorinated, may be linear or branched, cyclic or acyclic structure, saturated or unsaturated, and substituted or unsubstituted, and optionally contains one or more heteroatoms selected from the group consisting of sulfur, oxygen, and nitrogen.

It is also preferable that the polymer (I) be a polymer containing a polymerization unit (Ib) derived from a monomer represented by the general formula (Ib):

$CH_2$=CH-O-$Rf^0$-$A^0$ (Ib)

wherein $A^0$ is an anionic group; and $Rf^0$ is a perfluorinated divalent linking group as defined in the formula Ia.

In the general formula (I), it is one preferred embodiment for $A^0$ to be a sulfate group. $A^0$ is, for example, -$CH_2OSO_3M$, -$CH_2CH_2OSO_3M$, or -$SO_2NR'CH_2CH_2OSO_3M$, wherein R' is H or an alkyl group having 1 to 4 carbon atoms and M is the same as described above.

In the case where $A^0$ is a sulfate group, examples of the monomer represented by the general formula (I) include $CF_2$=CF($OCF_2CF_2CH_2OSO_3M$), $CH_2$=CH(($CF_2$)$_4CH_2OSO_3M$), $CF_2$=CF(O($CF_2$)$_4CH_2OSO_3M$), $CF_2$=CF($OCF_2CF(CF_3)CH_2OSO_3M$), $CF_2$=CF($OCF_2CF(CF_3)OCF_2CF_2CH_2OSO_3M$), $CH_2$=CH(($CF_2$)$_4CH_2OSO_3M$), $CF_2$=CF($OCF_2CF_2SO_2N(CH_3)CH_2CH_2OSO_3M$), $CH_2$=CH($CF_2CF_2CH_2OSO_3M$), $CF_2$=CF($OCF_2CF_2CF_2CF_2SO_2N(CH_3)CH_2CH_2OSO_3M$), and $CH_2$=CH($CF_2CF_2CF_2CH_2OSO_3M$). In the above formulas, M is the same as described above.

In the general formula (I), it is also one preferred embodiment for $A^0$ to be a sulfonate group. $A^0$ is, for example, -$SO_3M$, wherein M is the same as described above.

In the case where $A^0$ is a sulfonate group, examples of the monomer represented by the general formula (I) include $CF_2$=CF($OCF_2CF_2SO_3M$), $CF_2$=CF(O($CF_2$)$_3SO_3M$), $CF_2$=CF(O($CF_2$)$_4SO_3M$), $CF_2$=CF($OCF_2CF(CF_3)SO_3M$), $CF_2$=CF($OCF_2CF(CF_3)OCF_2CF_2SO_3M$), $CH_2$=CH($CF_2CF_2SO_3M$), $CF_2$=CF($OCF_2CF(CF_3)OCF_2CF_2CF_2CF_2SO_3M$), $CH_2$=CH(($CF_2$)$_4SO_3M$), $CH_2$=CH($CF_2CF_2SO_3M$), and $CH_2$=CH(($CF_2$)$_3SO_3M$). In the above formulas, M is the same as described above.

In the general formula (I), it is also one preferred embodiment for $A^0$ to be a carboxylate group. $A^0$ is, for example, -COOM or -$SO_2NR'CH_2COOM$, wherein R' is H or an alkyl group having 1 to 4 carbon atoms and M is the same as described above. In the case where $A^0$ is a carboxylate group, examples of the monomer represented by the general formula (I) include $CF_2$=CF($OCF_2CF_2COOM$), $CF_2$=CF(O($CF_2$)$_3COOM$), $CF_2$=CF(O($CF_2$)$_4COOM$), $CF_2$=CF(O($CF_2$)$_5COOM$), $CF_2$=CF($OCF_2CF(CF_3)COOM$), $CF_2$=CF($OCF_2CF(CF_3)O(CF_2)_nCOOM$) (n is greater than 1), $CH_2$=CH($CF_2CF_2COOM$), $CH_2$=CH(($CF_2$)$_4COOM$), $CH_2$=CH(($CF_2$)$_3COOM$), $CF_2$=CF($OCF_2CF_2SO_2NR'CH_2COOM$), $CF_2$=CF(O($CF_2$)$_4SO_2NR'CH_2COOM$), $CF_2$=CF($OCF_2CF(CF_3)SO_2NR'CH_2COOM$), $CF_2$=CF($OCF_2CF(CF_3)OCF_2CF_2SO_2NR'CH_2COOM$), $CH_2$=CH($CF_2CF_2SO_2NR'CH_2COOM$), $CF_2$=CF($OCF_2CF(CF_3)OCF_2CF_2CF_2CF_2SO_2NR'CH_2COOM$), $CH_2$=CH(($CF_2$)$_4SO_2NR'CH_2COOM$), and $CH_2$=CH(($CF_2$)$_3SO_2NR'CH_2COOM$). In the above formulas, R' is H or an alkyl group having 1 to 4 carbon atoms and M is the same as described above.

In the general formula (I), it is also one preferred embodiment for $A^0$ to be a phosphate group. $A^0$ is, for example, -$CH_2OP(O)(OM)_2$, [-$CH_2O$]$_2$P(O)(OM), - $CH_2CH_2OP(O)(OM)_2$, [-$CH_2CH_2O$]$_2$P(O)(OM), [-$SO_2NR'CH_2CH_2O$]$_2$P(O)(OM), or -$SO_2NR'CH_2CH_2OP(O)(OM)_2$, wherein R' is an alkyl group having 1 to 4 carbon atoms and M is the same as described above.

In the case where $A^0$ is a phosphate group, examples of the monomer represented by the general formula (I) include $CF_2$=CF($OCF_2CF_2CH_2OP(O)(OM)_2$), $CF_2$=CF(O($CF_2$)$_4CH_2OP(O)(OM)_2$), $CF_2$=CF($OCF_2CF(CF_3)CH_2OP(O)(OM)_2$), $CF_2$=CF($OCF_2CF(CF_3)OCF_2CF_2CH_2OP(O)(OM)_2$), $CF_2$=CF($OCF_2CF_2SO_2N(CH_3)CH_2CH_2OP(O)(OM)_2$), $CF_2$=CF($OCF_2CF_2CF_2CF_2SO_2N(CH_3)CH_2CH_2OP(O)(OM)_2$), $CH_2$=CH($CF_2CF_2CH_2OP(O)(OM)_2$), $CH_2$=CH(($CF_2$)$_4CH_2OP(O)(OM)_2$), and $CH_2$=CH(($CF_2$)$_3CH_2OP(O)(OM)_2$). In the above formulas, M is the same as described above.

In the general formula (I), it is also one preferred embodiment for $A^0$ to be a phosphonate group. In the case where $A^0$ is a phosphonate group, examples of the monomer represented by the general formula (I) include $CF_2$=CF($OCF_2CF_2P(O)(OM)_2$), $CF_2$=CF(O($CF_2$)$_4P(O)(OM)_2$), $CF_2$=CF($OCF_2CF(CF_3)P(O)(OM)_2$), $CF_2$=CF($OCF_2CF(CF_3)OCF_2CF_2P(O)(OM)_2$), $CH_2$=CH($CF_2CF_2P(O)(OM)_2$), $CH_2$=CH(($CF_2$)$_4P(O)(OM)_2$), and $CH_2$=CH(($CF_2$)$_3P(O)(OM)_2$), wherein M is the same as described above.

It is preferable that the polymer (I) be a polymer (1) containing a polymerization unit (1) derived from a monomer represented by the general formula (1):

$CX_2=CY(-CZ_2-O-Rf-A)$ (1)

wherein X is the same or different and is -H or -F; Y is -H, -F, an alkyl group, or a fluorine-containing alkyl group; Z is the same or different and is -H, -F, an alkyl group, or a fluoroalkyl group; Rf is a fluorine-containing alkylene group having 1 to 40 carbon atoms or a fluorine-containing alkylene group having 2 to 100 carbon atoms and having an ether bond; and A is -COOM, - $SO_3M$, $-OSO_3M$, or $C(CF_3)_2OM$, where M is -H, a metal atom,$-NR^7{}_4$, imidazolium optionally having a substituent, pyridinium optionally having a substituent, or phosphonium optionally having a substituent, and $R^7$ is H or an organic group, with the proviso that at least one of X, Y, and Z contains a fluorine atom. Note that the above fluorine-containing alkylene group having 2 to 100 carbon atoms and having an ether bond is an alkylene group that does not include a structure in which an oxygen atom is an end and contains an ether bond between carbon atoms.

When the coating material composition of the present disclosure contains the polymer (1), the agglomeration suppressing property of the coating material composition at the time of stirring is improved. Note that the above fluorine-containing alkylene group having 2 to 100 carbon atoms and having an ether bond is an alkylene group that does not include a structure in which an oxygen atom is an end and contains an ether bond between carbon atoms.

In the general formula (1), each X is -H or -F. Both X may be -F, or at least one thereof may be -H. For example, one thereof may be -F and the other may be -H, or both may be -H.

In the general formula (1), Y is -H, -F, an alkyl group, or a fluorine-containing alkyl group. The above alkyl group is an alkyl group free from fluorine atoms, and may have one or more carbon atoms. The above alkyl group preferably has 6 or less carbon atoms, more preferably 4 or less carbon atoms, and still more preferably 3 or less carbon atoms. The above fluorine-containing alkyl group is an alkyl group containing at least one fluorine atom, and may have one or more carbon atoms. The above fluorine-containing alkyl group preferably has 6 or less carbon atoms, more preferably 4 or less carbon atoms, and still more preferably 3 or less carbon atoms. The above Y is preferably -H, -F, or $-CF_3$, and more preferably -F.

In the general formula (1), Z is the same or different and is -H, -F, an alkyl group, or a fluoroalkyl group. The above alkyl group is an alkyl group free from fluorine atoms, and may have one or more carbon atoms. The above alkyl group preferably has 6 or less carbon atoms, more preferably 4 or less carbon atoms, and still more preferably 3 or less carbon atoms. The above fluorine-containing alkyl group is an alkyl group containing at least one fluorine atom, and may have one or more carbon atoms. The above fluorine-containing alkyl group preferably has 6 or less carbon atoms, more preferably 4 or less carbon atoms, and still more preferably 3 or less carbon atoms. The above Z is preferably -H, -F, or $-CF_3$, and more preferably -F.

In the general formula (1), at least one of the above X, Y, and Z contains a fluorine atom. For example, X may be -H, and Y and Z may be -F.

In the general formula (1), the above Rf is a fluorine-containing alkylene group having 1 to 40 carbon atoms or a fluorine-containing alkylene group having 2 to 100 carbon atoms and having an ether bond.

The above fluorine-containing alkylene group preferably has 2 or more carbon atoms. In addition, the above fluorine-containing alkylene group preferably has 30 or less carbon atoms, more preferably 20 or less carbon atoms, and still more preferably 10 or less carbon atoms. Examples of the above fluorine-containing alkylene group include $-CF_2-$, $-CH_2CF_2-$, $-CF_2CF_2-$, $-CF_2CH_2-$, $-CF_2CF_2CH_2-$, $-CF(CF_3)-$, $-CF(CF_3)CF_2-$, and $-CF(CF_3)CH_2-$. It is preferable that the above fluorine-containing alkylene group be a perfluoroalkylene group.

The above fluorine-containing alkylene group having an ether bond preferably has 3 or more carbon atoms. In addition, the above fluorine-containing alkylene group having an ether bond preferably has 60 or less carbon atoms, more preferably 30 or less carbon atoms, and still more preferably 12 or less carbon atoms. It is also preferable that the above fluorine-containing alkylene group having an ether bond be a divalent group represented by the general formula:

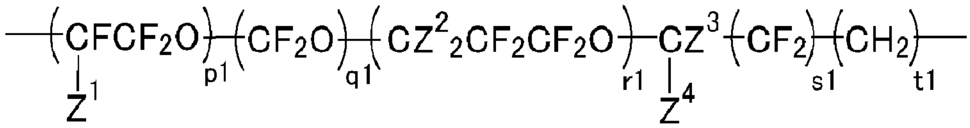

wherein $Z^1$ is F or $CF_3$; $Z^2$ and $Z^3$ are each H or F; $Z^4$ is H, F, or $CF_3$; p1 + q1 + r1 is an integer of 1 to 10; s1 is 0 or 1; and t1 is an integer of 0 to 5.

Specific examples of the above fluorine-containing alkylene group having an ether bond include $-CF_2CF(CF_3)OCF_2CF_2-$, $-CF(CF_3)CF_2-O-CF(CF_3)-$, $-(CF(CF_3)CF_2-O)_n-CF(CF_3)-$ (wherein n is an integer of 1 to 10), $-CF(CF_3)CF_2-O-CF(CF_3)CH_2-$, $-(CF(CF_3)CF_2-O)_n-CF(CF_3)CH_2-$(wherein n is an integer of 1 to 10), $-CH_2CF_2CF_2O-$

$CH_2CF_2CH_2$-, -$CF_2CF_2CF_2O$-$CF_2$-, -$CF_2CF_2CF_2O$-$CF_2CF_2$-, - $CF_2CF_2CF_2O$-$CF_2CF_2CF_2$-, -$CF_2CF_2CF_2O$-$CF_2CF_2CH_2$-, -$CF_2CF_2O$-$CF_2$-, and -$CF_2CF_2O$-$CF_2CH_2$-. It is preferable that the above fluorine-containing alkylene group having an ether bond be a perfluoroalkylene group.

In the general formula (1), A is -COOM, -$SO_3M$, - $OSO_3M$, or $C(CF_3)_2OM$, where M is -H, a metal atom, - $NR^7{}_4$, imidazolium optionally having a substituent, pyridinium optionally having a substituent, or phosphonium optionally having a substituent, and $R^7$ is H or an organic group.

$R^7$ is preferably H or a $C_{1-10}$ organic group, more preferably H or a $C_{1-4}$ organic group, and still more preferably H or a $C_{1-4}$ alkyl group.

Examples of the metal atom include an alkali metal (Group 1) and an alkaline earth metal (Group 2), and preferred is Na, K, or Li.

M is preferably -H, a metal atom, or -$NR^7{}_4$, more preferably -H, an alkali metal (Group 1), an alkaline earth metal (Group 2), or -$NR^7{}_4$, still more preferably -H, -Na, -K, -Li, or -$NH_4$, further preferably -Na, -K, or - $NH_4$, particularly preferably -Na or -$NH_4$, and most preferably -$NH_4$.

A is preferably -COOM or -$SO_3M$, and more preferably -COOM.

The monomer represented by the general formula (1) is exemplified by a monomer represented by the general formula (1a):

$$CX_2{=}CFCF_2\text{-}O\text{-}(CF(CF_3)CF_2O)_{n5}\text{-}CF(CF_3)\text{-}A \qquad (1a)$$

wherein each X is the same and represents F or H; n5 represents 0 or an integer of 1 to 10; and A is the same as defined above.

In the general formula (1a), n5 is preferably 0 or an integer of 1 to 5, more preferably 0, 1, or 2, and still more preferably 0 or 1 from the viewpoint of obtaining PTFE particles having a small primary particle size.

The polymer (1) may be a homopolymer of the monomer represented by the general formula (1a) or may be a copolymer thereof with a further monomer.

It is preferable that the polymerization unit (1) be a polymerization unit (1A) derived from a monomer represented by the general formula (1A):

$$CH_2{=}CF(\text{-}CF_2\text{-}O\text{-}Rf\text{-}A) \qquad (1A)$$

wherein Rf and A are the same as described above.

The polymer (1) may be a homopolymer of the monomer represented by the general formula (1A) or may be a copolymer thereof with a further monomer.

Specific examples of the monomer represented by the formula (1A) include a monomer represented by the general formula:

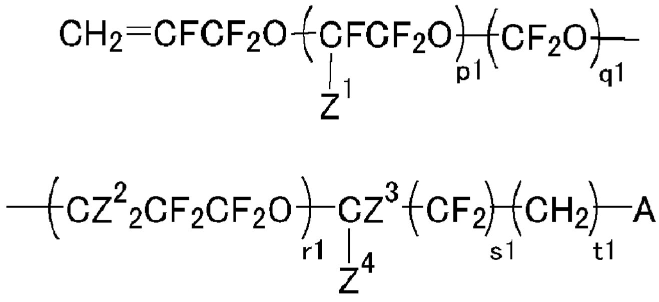

,

wherein $Z^1$ is F or $CF_3$; $Z^2$ and $Z^3$ are each H or F; $Z^4$ is H, F, or $CF_3$; p1 + q1 + r1 is an integer of 0 to 10; s1 is 0 or 1; t1 is an integer of 0 to 5, with the proviso that, in the case where $Z^3$ and $Z^4$ are both H, p1 + q1 + r1 + s1 is not 0; and A is the same as defined above. More specifically, preferred examples thereof include:

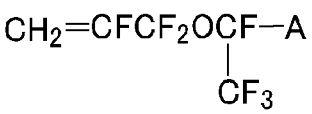 , 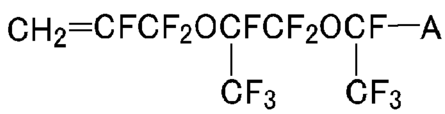 ,

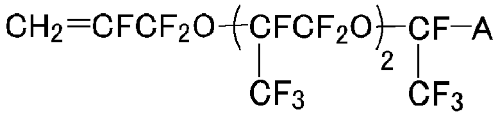 , 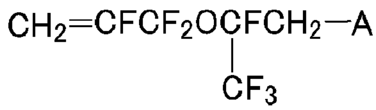 ,

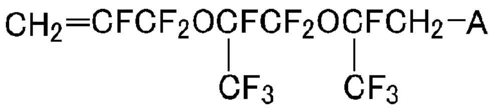 , 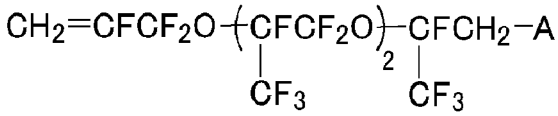 ,

$CH_2=CFCF_2OCH_2CF_2$-A, $CH_2=CFCF_2O(CH_2CF_2CF_2O)CH_2CF_2$-A,

$CH_2=CFCF_2OCH_2CF_2CH_2$-A,

$CH_2=CFCF_2O(CH_2CF_2CF_2O)CH_2CF_2CH_2$-A,

$CH_2=CFCF_2OCF_2CF_2$-A, $CH_2=CFCF_2O(CF_2CF_2CF_2O)CF_2CF_2$-A,

$CH_2=CFCF_2OCF_2CF_2CH_2$-A,

$CH_2=CFCF_2O(CF_2CF_2CF_2O)CF_2CF_2CH_2$-A,

$CH_2=CFCF_2OCF_2$-A, $CH_2=CFCF_2O(CF_2CF_2O)CF_2$-A,

$CH_2=CFCF_2OCF_2CH_2$-A,

$CH_2=CFCF_2O(CF_2CF_2O)CF_2CH_2$-A,

Of these,

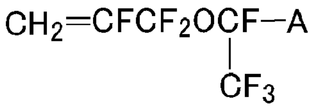 , 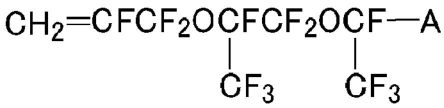 ,

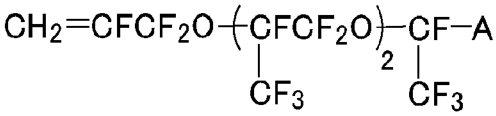 , 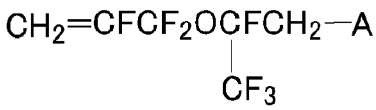 ,

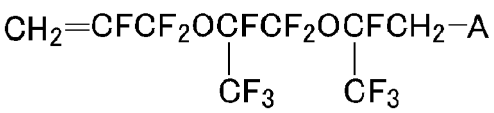 , 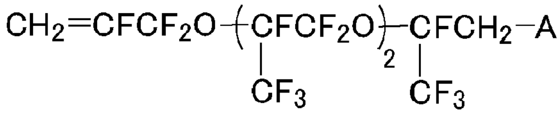 ,

are preferred.

In the monomer represented by the general formula (1A), A in the formula (1A) is preferably -COOM. In particular, the monomer represented by the general formula (1A) is preferably at least one selected from the group consisting of $CH_2=CFCF_2OCF(CF_3)COOM$ and $CH_2=CFCF_2OCF(CF_3)CF_2OCF(CF_3)COOM$ (wherein M is the same as defined above), and more preferably $CH_2=CFCF_2OCF(CF_3)COOM$.

In addition, examples of the monomer represented by the general formula (1) also include a monomer represented by the following formula:

$CF_2=CFCF_2$-O-Rf-A

wherein Rf and A are the same as described above.

More specific examples thereof include:

$CF_2=CFCF_2OCF_2CF_2CF_2$-A,

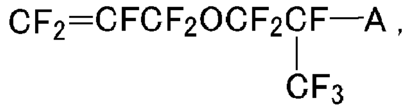

$CF_2=CFCF_2OCF_2CF_2CF_2CH_2$-A,

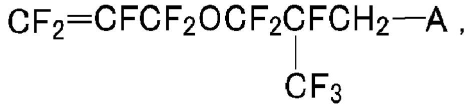

It is also preferable that the polymer (I) be a polymer (2) containing a polymerization unit (2) derived from a monomer represented by the general formula (2):

$CX_2$=CY(-O-Rf-A) (2)

wherein X is the same or different and is -H or -F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond or a keto group; and A is the same as described above.

In the general formula (2), each X is -H or -F. Both X may be -F, or at least one thereof may be -H. For example, one thereof may be -F and the other may be -H, or both may be -H.

In the general formula (2), Y is -H, -F, an alkyl group, or a fluorine-containing alkyl group. The alkyl group is an alkyl group free from fluorine atoms, and may have one or more carbon atoms. The above alkyl group preferably has 6 or less carbon atoms, more preferably 4 or less carbon atoms, and still more preferably 3 or less carbon atoms. The fluorine-containing alkyl group is an alkyl group containing at least one fluorine atom, and may have one or more carbon atoms. The above fluorine-containing alkyl group preferably has 6 or less carbon atoms, more preferably 4 or less carbon atoms, and still more preferably 3 or less carbon atoms. Y is preferably -H, -F, or $-CF_3$, and more preferably -F.

In the general formula (2), it is preferable that at least one of the above X and Y contain a fluorine atom. For example, X may be -H, and Y and Z may be -F.

In the general formula (2), the above Rf is a fluorine-containing alkylene group having 1 to 40 carbon atoms, a fluorine-containing alkylene group having 2 to 100 carbon atoms and having an ether bond, or a fluorine-containing alkylene group having 2 to 100 carbon atoms and having a keto group. Note that the above fluorine-containing alkylene group having 2 to 100 carbon atoms and having an ether bond is an alkylene group that does not include a structure in which an oxygen atom is an end and contains an ether bond between carbon atoms.

The fluorine-containing alkylene group in Rf preferably has 2 or more carbon atoms. It also preferably has 30 or less carbon atoms, more preferably 20 or less carbon atoms, still more preferably 10 or less carbon atoms, and particularly preferably 5 or less carbon atoms. Examples of the fluorine-containing alkylene group include $-CF_2-$, $-CH_2CF_2-$, $-CF_2CF_2-$, $-CF_2CH_2-$, $-CF_2CF_2CH_2-$, $-CF(CF_3)-$, $-CF(CF_3)CF_2-$, $-CF(CF_3)CH_2-$, - $CF_2CF_2CF_2-$, and $-CF_2CF_2CF_2CF_2-$. The fluorine-containing alkylene group is preferably a perfluoroalkylene group, and more preferably an unbranched, linear perfluoroalkylene group.

The above fluorine-containing alkylene group having an ether bond preferably has 3 or more carbon atoms. The above fluorine-containing alkylene group having an ether bond also preferably has 60 or less carbon atoms, more preferably 30 or less carbon atoms, still more preferably 12 or less carbon atoms, and particularly preferably 5 or less carbon atoms. It is also preferable that the above fluorine-containing alkylene group having an ether bond be a divalent group represented by the general formula:

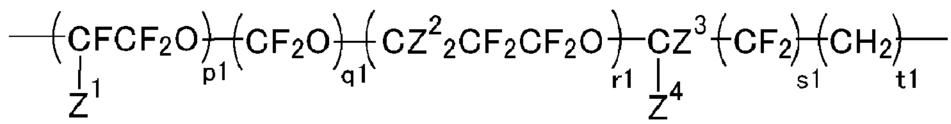

wherein $Z^1$ is F or $CF_3$; $Z^2$ and $Z^3$ are each H or F; $Z^4$ is H, F, or $CF_3$; p1 + q1 + r1 is an integer of 1 to 10; s1 is 0 or 1; and t1 is an integer of 0 to 5.

Specific examples of the above fluorine-containing alkylene group having an ether bond include $-CF_2CF(CF_3)OCF_2CF_2-$, $-CF_2CF(CF_3)OCF_2CF_2-$, $-CF_2CF(CF_3)OCF_2CF_2CF_2-$, $-CF(CF_3)CF_2-O-CF(CF_3)-$, $-(CF(CF_3)CF_2-O)_n-CF(CF_3)-$ (wherein n is an integer of 1 to 10), $-CF(CF_3)CF_2-O-CF(CF_3)CH_2-$, $-(CF(CF_3)CF_2-O)_n-CF(CF_3)CH_2-$(wherein n is an integer of 1 to 10), $-CH_2CF_2CF_2O-CH_2CF_2CH_2-$, $-CF_2CF_2CF_2O-CF_2-$, $-CF_2CF_2CF_2O-CF_2CF_2-$, $-CF_2CF_2CF_2O-CF_2CF_2CF_2-$, $-CF_2CF_2CF_2O-CF_2CF_2CH_2-$, $-CF_2CF_2O-CF_2-$, and $-CF_2CF_2O-CF_2CH_2-$. It is preferable that the above fluorine-containing alkylene group having an ether bond be a perfluoroalkylene group.

The above fluorine-containing alkylene group having a keto group preferably has 3 or more carbon atoms. The above fluorine-containing alkylene group having a keto group also preferably has 60 or less carbon atoms, more preferably 30 or less carbon atoms, still more preferably 12 or less carbon atoms, and particularly preferably 5 or less carbon atoms.

Specific examples of the above fluorine-containing alkylene group having a keto group include $-CF_2CF(CF_3)CO-CF_2-$, $-CF_2CF(CF_3)CO-CF_2CF_2-$, $-CF_2CF(CF_3)CO-CF_2CF_2CF_2-$, and $-CF_2CF(CF_3)CO-CF_2CF_2CF_2CF_2-$. It is preferable that the above fluorine-containing alkylene group having a keto group be a perfluoroalkylene group.

Water may be added to the keto group in the fluorine-containing alkylene group. Accordingly, the monomer (2) may be a hydrate. Examples of the fluorine-containing alkylene group in which water is added to the keto group include $-CF_2CF(CF_3)C(OH)_2-CF_2-$, $-CF_2CF(CF_3)C(OH)_2-CF_2CF_2-$, $-CF_2CF(CF_3)C(OH)_2-CF_2CF_2CF_2-$, and $-CF_2CF(CF_3)C(OH)_2-CF_2CF_2CF_2CF_2-$.

The monomer represented by the general formula (2) is preferably at least one selected from the group consisting of monomers represented by the general formulas (2a), (2b), (2c), (2d), (2e), (2f), and (2g):

$$CF_2=CF-O-(CF_2)_{n1}-A \qquad (2a)$$

wherein n1 represents an integer of 1 to 10; and A is the same as described above;

$$CF_2=CF-O-(CF_2C(CF_3)F)_{n2}-A \qquad (2b)$$

wherein n2 represents an integer of 1 to 5; and A is the same as defined above;

$$CF_2=CF-O-(CFX^1)_{n3}-A \qquad (2c)$$

wherein $X^1$ represents F or $CF_3$; n3 represents an integer of 1 to 10; and A is the same as defined above;

$$CF_2=CF-O-(CF_2CFX^1O)_{n4}-(CF_2)_{n6}-A \qquad (2d)$$

wherein n4 represents an integer of 1 to 10; n6 represents an integer of 1 to 3; and A and $X^1$ are the same as defined above;

$$CF_2=CF-O-(CF_2CF_2CFX^1O)_{n5}-CF_2CF_2CF_2-A \qquad (2e)$$

wherein n5 represents an integer of 0 to 10; and A and $X^1$ are the same as defined above;

$$CF_2=CF-O-(CF_2)_{n7}-O-(CF_2)_{n8}-A \qquad (2f)$$

wherein n7 represents an integer of 1 to 10; n8 represents an integer of 1 to 3; and A is the same as defined above; and

$$CF_2=CF[OCF_2CF(CF_3)]_{n9}O(CF_2)_{n10}O[CF(CF_3)CF_2O]_{n11}CF(CF_3)-A \qquad (2g)$$

wherein n9 represents an integer of 0 to 5; n10 represents an integer of 1 to 8; n11 represents an integer of 0 to 5; and A is the same as defined above.

In the general formula (2a), the above n1 is preferably an integer of 5 or less, and more preferably an integer of 2 or less.

Examples of the monomer represented by the general formula (2a) include $CF_2=CF-O-CF_2COOM$, $CF_2=CF(OCF_2CF_2COOM)$, $CF_2=CF(O(CF_2)_3COOM)$, $CF_2=CF(OCF_2CF_2SO_3M)$, $CF_2=CFOCF_2SO_3M$, and $CF_2=CFOCF_2CF_2CF_2SO_3M$, wherein M is the same as defined above.

In the general formula (2b), it is preferable that n2 be an integer of 3 or less from the viewpoint of the agglomeration suppressing property of the resulting coating material composition at the time of stirring.

In the general formula (2c), it is preferable that n3 be an integer of 5 or less from the viewpoint of water-solubility, it is preferable that the above A be - COOM, and it is preferable that the above M be H, Na, or $NH_4$.

In the general formula (2d), it is preferable that $X^1$ be $-CF_3$ from the viewpoint of the agglomeration suppressing

property of the coating material composition at the time of stirring, it is preferable that n4 be an integer of 5 or less from the viewpoint of water-solubility, it is preferable that A be -COOM, and it is preferable that M be H, Na, or $NH_4$.

Examples of the monomer represented by the general formula (2d) include $CF_2=CFOCF_2CF(CF_3)OCF_2CF_2COOM$, $CF_2=CFOCF_2CF(CF_3)OCF_2COOM$, $CF_2=CFOCF_2CF(CF_3)OCF_2CF_2CF_2COOM$, $CF_2=CFOCF_2CF(CF_3)OCF_2SO_3M$, $CF_2=CFOCF_2CF(CF_3)OCF_2CF_2SO_3M$, and $CF_2=CFOCF_2CF(CF_3)OCF_2CF_2CF_2SO_3M$, wherein M represents H, $NH_4$, or an alkali metal.

In the general formula (2e), it is preferable that n5 be an integer of 5 or less from the viewpoint of water-solubility, it is preferable that A be -COOM, and it is preferable that M be H or $NH_4$.

Examples of the monomer represented by the general formula (2e) include $CF_2=CFOCF_2CF_2CF_2COOM$, wherein M represents H, Na, $NH_4$, or an alkali metal.

In the general formula (2f), it is preferable that n7 be an integer of 5 or less from the viewpoint of water-solubility, and A is preferably -COOM or $-SO_3M$, and more preferably -COOM. It is preferable that M be H, Na, K, or $NH_4$.

Examples of the monomer represented by the general formula (2f) include $CF_2=CF-O-(CF_2)_3-O-CF_2-COOM$, wherein M represents H, $NH_4$, or an alkali metal.

In the general formula (2g), it is preferable that n9 be an integer of 3 or less from the viewpoint of water-solubility, it is preferable that n10 be an integer of 3 or less, it is preferable that n11 be an integer of 3 or less, and A is preferably -COOM or $-SO_3M$, and more preferably -COOM. It is preferable that M be H, Na, K, or $NH_4$.

Examples of the monomer represented by the general formula (2g) include $CF_2=CFO(CF_2)_2OCF(CF_3)COOM$, $CF_2=CFOCF_2CF_2OCF(CF_3)CF_2OCF(CF_3)COOM$, $CF_2=CFOCF_2CF(CF_3)OCF_2CF_2OCF(CF_3)COOM$, $CF_2=CF[OCF_2CF(CF_3)]_2O(CF_2)_2O[CF(CF_3)CF_2O]CF(CF_3)COOM$, and $CF_2=CF[OCF_2CF(CF_3)]_3O(CF_2)_2O[CF(CF_3)CF_2O]_3CF(CF_3)COOM$, wherein M represents H, $NH_4$, or an alkali metal.

It is also preferable that the polymer (I) be a polymer (3) containing a polymerization unit (3) derived from a monomer represented by the general formula (3):

$$CX_2=CY(-Rf-A) \qquad (3)$$

wherein X is the same or different and is -H or -F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and A is the same as described above.

Note that the above fluorine-containing alkylene group having 2 to 100 carbon atoms and having an ether bond is an alkylene group that does not include a structure in which an oxygen atom is an end and contains an ether bond between carbon atoms.

In the general formula (3), it is preferable that Rf be a fluorine-containing alkylene group having 1 to 40 carbon atoms. In the general formula (3), it is preferable that at least one of X and Y contain a fluorine atom.

The monomer represented by the general formula (3) is preferably at least one selected from the group consisting of a monomer represented by the general formula (3a):

$$CF_2=CF-(CF_2)_{n1}-A \qquad (3a)$$

wherein n1 represents an integer of 1 to 10; and A is the same as defined above; and
a monomer represented by the general formula (3b):

$$CF_2=CF-(CF_2C(CF_3)F)_{n2}-A \qquad (3b)$$

wherein n2 represents an integer of 1 to 5; and A is the same as defined above.

In the general formula (3a) and the general formula (3b), A is preferably $-SO_3M$ or -COOM, and it is preferable that M be H, a metal atom, $NR^7_4$, imidazolium optionally having a substituent, pyridinium optionally having a substituent, or phosphonium optionally having a substituent. $R^7$ represents H or an organic group.

In the general formula (3a), n1 is preferably an integer of 5 or less, and more preferably an integer of 2 or less. It is preferable that A be -COOM, and it is preferable that M be H or $NH_4$.

Examples of the monomer represented by the general formula (3a) include $CF_2=CFCF_2COOM$, wherein M is the same as defined above.

In the general formula (3b), it is preferable that n2 be an integer of 3 or less from the viewpoint of the agglomeration suppressing property of the resulting coating material composition at the time of stirring, it is preferable that A be -COOM, and it is preferable that M be H or $NH_4$.

Next, the suitable configuration in the case where m is an integer of 2 or more in the general formula (I) will be described.

It is also preferable that the polymer (I) be a polymer (4) containing a polymerization unit (4) derived from at least one monomer selected from the group consisting of monomers represented by the general formula (4a) and the general formula (4b):

$$CF_2{=}CF\text{-}CF_2\text{-}O\text{-}Q^{F1}\text{-}CF(\text{-}Q^{F2}\text{-}CZ^1Z^2\text{-}A)_2 \qquad (4a)$$

wherein $Z^1$, $Z^2$, and A are the same as defined above; and $Q^{F1}$ and $Q^{F2}$ are the same or different and are each a single bond, a fluorine-containing alkylene group optionally containing an ether bond between carbon atoms, or a fluorine-containing oxyalkylene group optionally containing an ether bond between carbon atoms; and

$$CF_2{=}CF\text{-}O\text{-}Q^{F1}\text{-}CF(\text{-}Q^{F2}\text{-}CZ^1Z^2\text{-}A)_2 \qquad (4b)$$

wherein $Z^1$, $Z^2$, A, $Q^{F1}$, and $Q^{F2}$ are the same as defined above.

Examples of the monomers represented by the general formula (4a) and the general formula (4b) include:

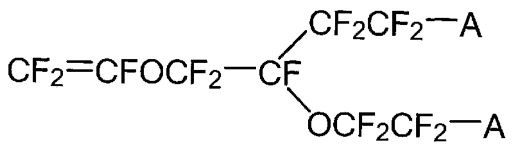

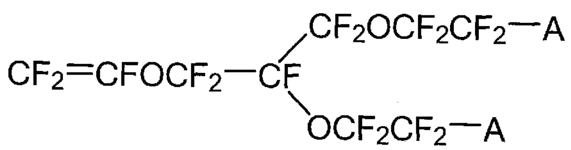

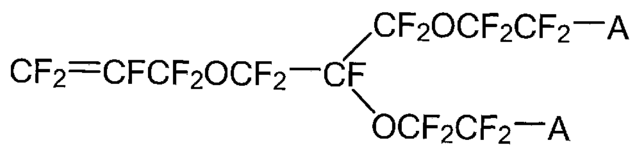

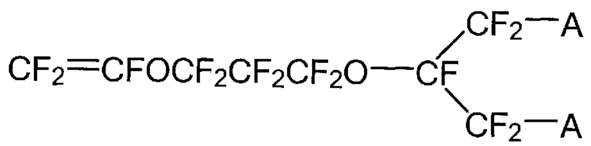

The polymer (I) is preferably at least one selected from the group consisting of the above polymer (1), the above polymer (2), and the above polymer (3), and more preferably the polymer (1).

The polymer (I) may be a homopolymer composed solely of the polymerization unit (I), or may be a copolymer containing the polymerization unit (I) and a polymerization unit derived from a further monomer that is copolymerizable with the monomer represented by the general formula (I). From the viewpoint of solubility in an aqueous medium, a homopolymer composed solely of the polymerization unit (I) is preferred. The polymerization unit (I) may be the same or different at each occurrence, and it may contain the polymerization units (I) derived from two or more kinds of different monomers represented by the general formula (I).

The above further monomer is preferably a monomer represented by the general formula: $CFR{=}CR_2$, wherein R is independently H, F, or a perfluoroalkyl group having 1 to 4 carbon atoms. In addition, the further monomer is preferably a fluorine-containing ethylenic monomer having 2 or 3 carbon atoms. Examples of the further monomer include $CF_2{=}CF_2$, $CF_2{=}CFCl$, $CH_2{=}CF_2$, $CFH{=}CH_2$, $CFH{=}CF_2$, $CF_2{=}CFCF_3$, $CH_2{=}CFCF_3$, $CH_2{=}CHCF_3$, $CHF{=}CHCF_3$ (E isomer), and $CHF{=}CHCF_3$ (Z isomer).

Of these, preferred is at least one selected from the group consisting of tetrafluoroethylene ($CF_2{=}CF_2$), chlorotrifluoroethylene ($CF_2{=}CFCl$), and vinylidene fluoride ($CH_2{=}CF_2$) from the viewpoint of achieving good copolymerizability, and more preferred is at least one selected from the group consisting of tetrafluoroethylene and vinylidene fluoride. Accordingly, it is preferable that the polymerization unit derived from the above further monomer be a polymerization unit derived from tetrafluoroethylene. The polymerization unit derived from the above further monomer may be the same or different at each occurrence, and the polymer (I) may contain polymerization units derived from two or more kinds of

different further monomers.

Examples of the above further monomer also include a monomer represented by the general formula (n1-2):

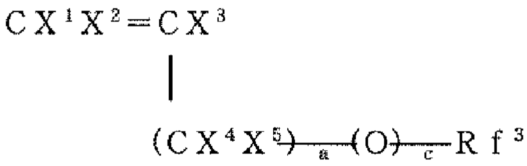

(n1-2)

wherein $X^1$ and $X^2$ are the same or different and are each H or F; $X^3$ is H, F, Cl, $CH_3$, or $CF_3$; $X^4$ and $X^5$ are the same or different and are each H or F; a and c are the same or different and are each 0 or 1; and $Rf^3$ is a fluorine-containing alkyl group having 1 to 40 carbon atoms or a fluorine-containing alkyl group having 2 to 100 carbon atoms and having an ether bond.

Specifically, preferred examples thereof include $CH_2=CFCF_2-O-Rf^3$, $CF_2=CF-O-Rf^3$, $CF_2=CFCF_2-O-Rf^3$, $CF_2=CF-Rf^3$, $CH_2=CH-Rf^3$, and $CH_2=CH-O-Rf^3$, wherein $Rf^3$ is the same as in the above formula (n1-2).

Examples of the above further monomer also include a fluorine-containing acrylate monomer represented by the formula (n2-1):

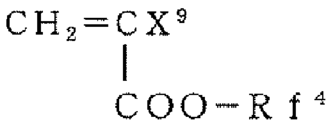

(n2-1)

wherein $X^9$ is H, F, or $CH_3$; and $Rf^4$ is a fluorine-containing alkyl group having 1 to 40 carbon atoms or a fluorine-containing alkyl group having 2 to 100 carbon atoms and having an ether bond. Examples of the above $Rf^4$ group include:

$$-(CH_2)_{d1}-(CF_2)_{e1}-Z^8$$

wherein $Z^8$ is H, F, or Cl; d1 is an integer of 1 to 4j and e1 is an integer of 1 to 10,

$-CH(CF_3)_2$.

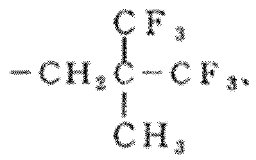

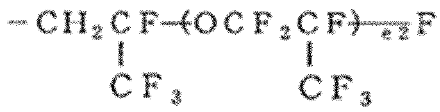

wherein e2 is an integer of 1 to 5,

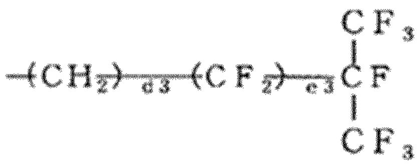

wherein d3 is an integer of 1 to 4; and e3 is an integer of 1 to 10.

Examples of the above further monomer also include a fluorine-containing vinyl ether represented by the formula

(n2-2):

$$CH_2{=}CHO{-}Rf^5 \qquad (n2\text{-}2)$$

wherein $Rf^5$ is a fluorine-containing alkyl group having 1 to 40 carbon atoms or a fluorine-containing alkyl group having 2 to 100 carbon atoms and having an ether bond.

Specifically, preferred examples of the monomer of the general formula (n2-2) include:

$$CH_2{=}CHOCH_2{-}(CF_2)_{e4}{-}Z^9$$

wherein $Z^9$ is H or F; and e4 is an integer of 1 to 10,

$$CH_2{=}CHOCH_2CH_2{-}(CF_2)_{e5}{-}F$$

wherein e5 is an integer of 1 to 10,

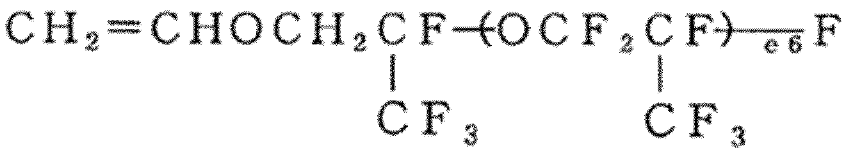

wherein e6 is an integer of 1 to 10.

More specific examples thereof include:

$CH_2{=}CHOCH_2CF_2CF_2H$,

$$CH_2{=}CHOCH_2{-}(CF_2CF_2)_2{-}H、$$

$$CH_2{=}CHOCH_2{-}(CF_2CF_2)_3{-}H、$$

$CH_2{=}CHOCH_2CF_2CF_3$,

$CH_2{=}CHOCH_2CF_3$,

$$CH_2{=}CHOCH_2CH_2{-}(CF_2CF_2)_4{-}F、$$

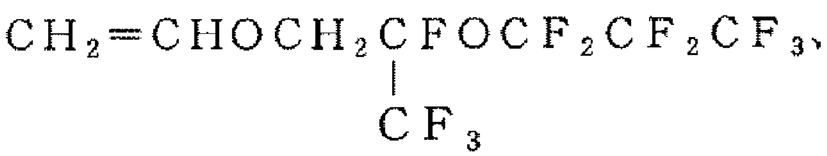

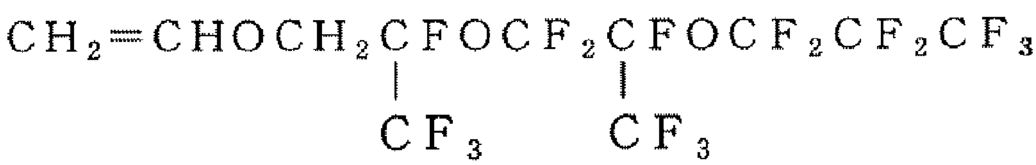

.

In addition, examples thereof also include a fluorine-containing allyl ether represented by the general formula

(n2-3):

$CH_2=CHCH_2O-Rf^6$ (n2-3)

wherein $Rf^6$ is a fluorine-containing alkyl group having 1 to 40 carbon atoms or a fluorine-containing alkyl group having 2 to 100 carbon atoms and having an ether bond; and a fluorine-containing vinyl monomer represented by the general formula (n2-4):

$CH_2=CH-Rf^7$ (n2-4)

wherein $Rf^7$ is a fluorine-containing alkyl group having 1 to 40 carbon atoms or a fluorine-containing alkyl group having 2 to 100 carbon atoms and having an ether bond.

Specific examples of the monomers represented by the general formulas (n2-3) and (n2-4) include the following monomers:

$CH_2=CHCH_2OCH_2CF_2CF_2H$

$CH_2=CHCH_2OCH_2-(CF_2CF_2)_2-H$、

$CH_2=CHCH_2OCH_2-(CF_2CF_2)_3-H$、

$CH_2=CHCH_2OCH_2CF_2CF_8$,

$CH_2=CHCH_2OCH_2CF_3$,

$CH_2=CHCH_2OCH_2CH_2-(CF_2CF_2)_4-F$、

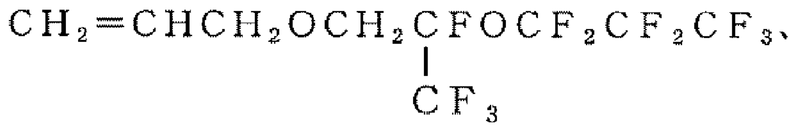

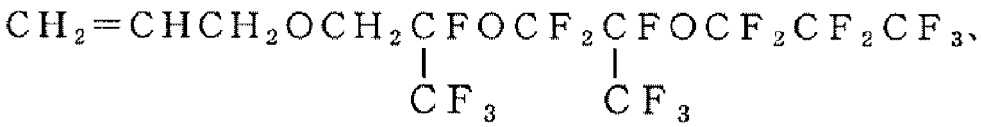

$CH_2=CH-(CF_2CF_2)_2-F$、

$CH_2=CH-(CF_2CF_2)_4-F$

.

The polymer (I) usually has a terminal group. The terminal group is a terminal group produced at the time of polymerization. The representative terminal group is independently selected from hydrogen, iodine, bromine, a linear or branched alkyl group, and a linear or branched fluoroalkyl group, and it may optionally contain at least one catenary heteroatom. It is preferable that the alkyl group or fluoroalkyl group have 1 to 20 carbon atoms. These terminal groups are, in general, produced from an initiator or a chain transfer agent used to form the polymer (I) or produced during a chain transfer reaction.

In the polymer (I), the content of the polymerization unit (I) is, in the order of preference, 1.0 mol% or more, 3.0 mol% or more, 5.0 mol% or more, 10 mol% or more, 20 mol% or more, 30 mol% or more, 40 mol% or more, 50 mol% or more, 60 mol% or more, 70 mol% or more, 80 mol% or more, or 90 mol% or more, based on all polymerization units.

It is particularly preferable that the content of the polymerization unit (I) be substantially 100 mol%, and it is most preferable that the polymer (I) be composed solely of the polymerization unit (I).

In the polymer (I), the content of the polymerization unit derived from the further monomer that is copolymerizable with the monomer represented by the general formula (I) is, in the order of preference, 99.0 mol% or less, 97.0 mol% or less, 95.0 mol% or less, 90 mol% or less, 80 mol% or less, 70 mol% or less, 60 mol% or less, 50 mol% or less, 40 mol% or less, 30 mol% or less, 20 mol% or less, or 10 mol% or less, based on all polymerization units. It is particularly preferable that the content of the polymerization unit derived from the further monomer that is copolymerizable with the monomer represented by the general formula (I) be substantially 0 mol%, and it is most preferable that the polymer (I) not contain the polymerization unit derived from the further monomer.

The number average molecular weight of the polymer (I) is preferably $0.1 \times 10^4$ or more, more preferably $0.2 \times 10^4$ or more, still more preferably $0.3 \times 10^4$ or more, further preferably $0.4 \times 10^4$ or more, still further preferably $0.5 \times 10^4$ or more, particularly preferably $1.0 \times 10^4$ or more, even more particularly preferably $3.0 \times 10^4$ or more, and most preferably $3.1 \times 10^4$ or more. It is also preferably $75.0 \times 10^4$ or less, more preferably $50.0 \times 10^4$ or less, still more preferably $40.0 \times 10^4$ or less, further preferably $30.0 \times 10^4$ or less, and particularly preferably $20.0 \times 10^4$ or less. The number average molecular weight and the weight average molecular weight are molecular weight values calculated by gel permeation chromatography (GPC) using monodisperse polystyrene as a standard. Also, when measurement by GPC is not possible, the number average molecular weight of the polymer (I) can be determined by the correlation between the number average molecular weight calculated from the number of terminal groups obtained by NMR, FT-IR, or the like, and the melt flow rate. The melt flow rate can be measured in conformity with JIS K 7210.

The lower limit of the weight average molecular weight of the polymer (I) is, in the order of preference, $0.2 \times 10^4$ or more, $0.4 \times 10^4$ or more, $0.6 \times 10^4$ or more, $0.8 \times 10^4$ or more, $1.0 \times 10^4$ or more, $2.0 \times 10^4$ or more, $5.0 \times 10^4$ or more, $10.0 \times 10^4$ or more, $15.0 \times 10^4$ or more, $20.0 \times 10^4$ or more, or $25.0 \times 10^4$ or more. In addition, the upper limit of the weight average molecular weight of the polymer (I) is, in the order of preference, $150.0 \times 10^4$ or less, $100.0 \times 10^4$ or less, $60.0 \times 10^4$ or less, $50.0 \times 10^4$ or less, or $40.0 \times 10^4$ or less.

It is preferable that the polymer (I) have an ion exchange rate (IXR) of 53 or less. The above IXR is defined as the number of carbon atoms in the polymer main chain relative to the ionic group. A precursor group that becomes ionic by hydrolysis (such as $-SO_2F$) is not regarded as an ionic group for the purpose of determining the IXR.

The IXR is preferably 0.5 or more, more preferably 1 or more, still more preferably 3 or more, further preferably 4 or more, still further preferably 5 or more, and particularly preferably 8 or more. In addition, the IXR is more preferably 43 or less, still more preferably 33 or less, and particularly preferably 23 or less.

The ion exchange capacity of the polymer (I) is, in the order of preference, 0.80 meg/g or more, 1.50 meg/g or more, 1.75 meg/g or more, 2.00 meg/g or more, 2.20 meq/g or more, greater than 2.20 meq/g, 2.50 meg/g or more, 2.60 meg/g or more, 3.00 meg/g or more, and 3.50 meg/g or more. The ion exchange capacity is the content of ionic groups (anionic groups) in the polymer (I) and can be determined by calculation from the compositional features of the polymer (I).

In the polymer (I), the ionic groups (anionic groups) are typically distributed along the polymer main chain. The above polymer (I) contains the polymer main chain together with a repeating side chain bonded to this main chain, and it is preferable that this side chain have an ionic group.

It is preferable that the polymer (I) contain an ionic group having a pKa of less than 10, more preferably less than 7. The ionic group in the polymer (I) is preferably selected from the group consisting of sulfonate, carboxylate, phosphonate, and phosphate.

The term "sulfonate, carboxylate, phosphonate, and phosphate" is intended to refer to the respective salts or the respective acids that can form the salts. When a salt is used, that salt is preferably an alkali metal salt or an ammonium salt. The preferred ionic group is a sulfonate group.

It is preferable that the polymer (I) have water-solubility. Water-solubility means the property of being easily dissolved or dispersed in an aqueous medium. When the polymer (I) has water-solubility, the particle size thereof cannot be measured by, for example, dynamic light scattering (DLS), or it exhibits a particle size of 10 nm or less.

The viscosity of an aqueous solution of the polymer (I) is preferably 5.0 mPa.s or more, more preferably 8.0 mPa.s or more, still more preferably 10.0 mPa.s or more, particularly preferably 12.0 mPa.s or more, and most preferably 14.0 mPa.s or more, and it is preferably 100.0 mPa.s or less, more preferably 50.0 mPa.s or less, still more preferably 25.0 mPa.s or less, and still further preferably 20.0 mPa.s or less.

The viscosity of an aqueous solution of the polymer (I) can be specified by adjusting the content of the polymer (I) in the aqueous solution to 33% by mass based on the aqueous solution and measuring the viscosity of the obtained aqueous solution at 20°C using a tuning fork vibration viscometer (model number: SV-10) manufactured by A&D Company, Limited.

The critical micelle concentration (CMC) of the polymer (I) is preferably 0.1% by mass or more, more preferably 0.5% by mass or more, and still more preferably 1% by mass or more, and it is preferably 20% by mass or less, more preferably 10% by mass or less, and still more preferably 5% by mass or less.

The critical micelle concentration of the polymer (I) can be determined by measuring the surface tension. The

surface tension can be measured with, for example, a surface tensiometer model CBVP-A3 manufactured by Kyowa Interface Science Co., Ltd.

The acid number of the polymer (I) is preferably 60 or more, more preferably 90 or more, still more preferably 120 or more, particularly preferably 150 or more, and most preferably 180 or more. The upper limit thereof is not limited, but it is preferably 300 or less.

In the case where the polymer (I) has an anionic group other than an acid-type functional group, such as -COOM, $-SO_3M$, $-OSO_3M$, or $-C(CF_3)_2OM$ (wherein M is a metal atom, $NR^7_4$, imidazolium optionally having a substituent, pyridinium optionally having a substituent, or phosphonium optionally having a substituent, and $R^7$ is H or an organic group), the acid number of the polymer (I) can be measured by converting these groups to acid-type groups and then performing acid-base titration.

The polymer (I) can be produced by a conventionally known method except that the above monomer is used.

In the first coating material composition of the present disclosure, the content of the polymer (I) is 2,000 ppm by mass or less based on the coating material composition. The content of the polymer (I) in the first coating material composition of the present disclosure is preferably 1,500 ppm by mass or less, and it may also be 1,000 ppm by mass or less, may be 500 ppm by mass or less, or may be 250 ppm by mass or less. In addition, the content of the polymer (I) in the first coating material composition of the present disclosure is preferably 0.1 ppm by mass or more, and more preferably 0.5 ppm by mass or more, based on the coating material composition.

In the first coating material composition of the present disclosure, the content of the polymer (I) is preferably 0.1 ppm by mass or more, more preferably 0.2 ppm by mass or more, still more preferably 0.5 ppm by mass or more, particularly preferably 1.0 ppm by mass or more, and most preferably 3.0 ppm by mass or more, based on the fluororesin. The content of the polymer (I) may be, for example, 500 ppm by mass or more based on the fluororesin. In addition, in the first coating material composition of the present disclosure, the content of the polymer (I) is preferably 1.5% by mass or less, and more preferably 1.0% by mass or less, and it may also be 0.5% by mass or less, may be 0.4% by mass or less, or may be 0.3% by mass or less, based on the fluororesin.

In the second coating material composition and the third coating material composition of the present disclosure, the content of the polymer (I) is preferably 2,000 ppm by mass or less, and more preferably 1,500 ppm by mass or less, and it may also be 1,000 ppm by mass or less, may be 500 ppm by mass or less, or may be 250 ppm by mass or less, based on the coating material composition. In addition, the content of the polymer (I) in the second coating material composition and the third coating material composition of the present disclosure is preferably 0.1 ppm by mass or more, and more preferably 0.5 ppm by mass or more, based on the coating material composition.

In the second coating material composition and the third coating material composition of the present disclosure, the content of the polymer (I) in the coating material composition is preferably 0.1 ppm by mass or more, more preferably 0.2 ppm by mass or more, still more preferably 0.5 ppm by mass or more, particularly preferably 1.0 ppm by mass or more, and most preferably 3.0 ppm by mass or more, based on the PTFE. The content of the polymer (I) may be, for example, 500 ppm by mass or more based on the PTFE. In addition, in the second coating material composition and the third coating material composition of the present disclosure, the content of the polymer (I) is preferably 1.5% by mass or less, and more preferably 1.0% by mass or less, and it may also be 0.5% by mass or less, may be 0.4% by mass or less, or may be 0.3% by mass or less, based on the PTFE.

The content of the polymer (I) in the coating material composition of the present disclosure can be determined by solid-state NMR measurement. In addition, International Publication No. WO 2014/099453, International Publication No. WO 2010/075497, International Publication No. WO 2010/075496, International Publication No. WO 2011/008381, International Publication No. WO 2009/055521, International Publication No. WO 1987/007619, Japanese Patent Laid-Open No. 61-293476, International Publication No. WO 2010/075494, International Publication No. WO 2010/075359, International Publication No. WO 2012/082454, International Publication No. WO 2006/119224, International Publication No. WO 2013/085864, International Publication No. WO 2012/082707, International Publication No. WO 2012/082703, International Publication No. WO 2012/082451, International Publication No. WO 2006/135825, International Publication No. WO 2004/067588, International Publication No. WO 2009/068528, Japanese Patent Laid-Open No. 2004-075978, Japanese Patent Laid-Open No. 2001-226436, International Publication No. WO 1992/017635, International Publication No. WO 2014/069165, Japanese Patent Laid-Open No. 11-181009, and the like describe their respective methods for measuring polymers. The method for measuring the content of the polymer (I) to be used may be any of the methods for measuring polymers respectively described in these documents.

The content of the dimer and trimer of the monomer represented by the general formula (I) in the coating material composition of the present disclosure is preferably 1.0% by mass or less, more preferably 0.1% by mass or less, still more preferably 0.01% by mass or less, particularly preferably 0.001% by mass, and most preferably 0.0001% by mass or less, based on the polymer (I) .

The content of the dimer and trimer of the monomer represented by the general formula (I) in the coating material composition of the present disclosure can be measured by the same method as the method for measuring the content of the dimer and trimer in the polymer (I), which will be described later.

<Aqueous medium>

The aqueous medium means a liquid containing water. The aqueous medium is not limited as long as it contains water, and may be a medium that contains water and, for example, a fluorine-free organic solvent such as alcohol, ether, or ketone and/or a fluorine-containing organic solvent having a boiling point of 40°C or lower. It is preferable that the aqueous medium be a mixture of water and an organic solvent. It is preferable that the content of water in the coating material composition of the present disclosure be 20.0% by mass to 60.0% by mass. In addition, from the viewpoint of improving the dispersion stability of the coating material composition in the case where the solid concentration of the coating material composition is high, the content of water in the coating material composition of the present disclosure may be 40.0% by mass to 50.0% by mass.

<Nonionic surfactant>

The third coating material composition of the present disclosure comprises a nonionic surfactant. It is preferable that the first coating material composition and the second coating material composition of the present disclosure comprise the nonionic surfactant.

The above nonionic surfactant is usually free from a charged group and has a hydrophobic moiety that is a long chain hydrocarbon. The hydrophilic moiety of the nonionic surfactant contains a water-soluble functional group such as a chain of ethylene ether derived from polymerization with ethylene oxide.

Examples of the nonionic surfactant include the following:
a polyoxyethylene alkyl ether, a polyoxyethylene alkyl phenyl ether, a polyoxyethylene alkyl ester, a sorbitan alkyl ester, a polyoxyethylene sorbitan alkyl ester, a glycerol ester, and derivatives thereof.

Specific examples of the polyoxyethylene alkyl ether: polyoxyethylene lauryl ether, polyoxyethylene cetyl ether, polyoxyethylene stearyl ether, polyoxyethylene oleyl ether, polyoxyethylene behenyl ether, and the like.

Specific examples of the polyoxyethylene alkyl phenyl ether: polyoxyethylene nonylphenyl ether, polyoxyethylene octylphenyl ether, and the like.

Specific examples of the polyoxyethylene alkyl ester: polyethylene glycol monolaurate, polyethylene glycol monooleate, polyethylene glycol monostearate, and the like.

Specific examples of the sorbitan alkyl ester: polyoxyethylene sorbitan monolaurate, polyoxyethylene sorbitan monopalmitate, polyoxyethylene sorbitan monostearate, polyoxyethylene sorbitan monooleate, and the like.

Specific examples of the polyoxyethylene sorbitan alkyl ester: polyoxyethylene sorbitan monolaurate, polyoxyethylene sorbitan monopalmitate, polyoxyethylene sorbitan monostearate, and the like.

Specific examples of the glycerol ester: glycerol monomyristate, glycerol monostearate, glycerol monooleate, and the like.

Specific examples of the above derivatives: polyoxyethylene alkyl amine, polyoxyethylene alkylphenyl-formaldehyde condensate, polyoxyethylene alkyl ether phosphate, and the like.

The above ethers and esters may have a HLB value of 10 to 18.

Examples of the nonionic surfactant include Triton(R) X series (X15, X45, X100, etc.), Tergitol(R) 15-S series, Tergitol(R) TMN series (TMN-6, TMN-10, TMN-100, etc.), and Tergitol(R) L series, manufactured by The Dow Chemical Company, Pluronic(R) R series (31R1, 17R2, 10R5, 25R4 (m to 22, n to 23), and Iconol(R) TDA series (TDA-6, TDA-9, TDA-10) manufactured by BASF.

The above nonionic surfactant itself provides a polymerization field and, furthermore, can be a nucleation site by giving a large number of low molecular weight fluoropolymers by chain transfer of radicals in the initial stage.

It is preferable that the above nonionic surfactant be a fluorine-free nonionic surfactant. Examples thereof include an ether-type nonionic surfactant such as polyoxyethylene alkyl phenyl ether, polyoxyethylene alkyl ether, and polyoxyethylene alkylene alkyl ether; a polyoxyethylene derivative such as ethylene oxide/propylene oxide block copolymer; an ester-type nonionic surfactant such as sorbitan fatty acid ester, polyoxyethylene sorbitan fatty acid ester, polyoxyethylene sorbitol fatty acid ester, glycerin fatty acid ester, and polyoxyethylene fatty acid ester; and an amine-type nonionic surfactant such as polyoxyethylene alkyl amine and alkylalkanolamide. Of these, a polyoxyethylene alkyl ether is preferred.

The hydrophobic group in the above nonionic surfactant may be any of an alkylphenol group, a linear alkyl group, and a branched alkyl group.

The nonionic surfactant is preferably a nonionic surfactant represented by the general formula (i):

$$R^6\text{-O-}A^1\text{-H} \qquad (i)$$

wherein $R^6$ is a linear or branched primary or secondary alkyl group having 8 to 18 carbon atoms, and $A^1$ is a polyoxyalkylene chain.

In the general formula (i), the number of carbon atoms in $R^6$ is preferably 10 to 16, and more preferably 12 to 16. When the number of carbon atoms in $R^6$ is 16 or less, the excellent agglomeration suppressing property of the composition at the time of stirring is easily obtained. On the other hand, when the number of carbon atoms in $R^6$ is greater than 18, it is difficult to handle because of the high flow temperature.

It is preferable that the above $R^6$ be an alkyl group represented by the following general formula (i-1):

$$CH_2R^{31}R^{32}- \qquad (i\text{-}1)$$

wherein $R^{31}$ represents a hydrogen atom or an alkyl group having 1 to 16 carbon atoms; $R^{32}$ represents an alkyl group having 1 to 17 carbon atoms; and the total number of carbon atoms in $R^{31}$ and $R^{32}$ is 7 to 17. The above $R^{31}$ is more preferably a hydrogen atom or an alkyl group having 1 to 15 carbon atoms, still more preferably a hydrogen atom or an alkyl group having 1 to 12 carbon atoms, and further preferably a hydrogen atom or an alkyl group having 1 to 10 carbon atoms. In addition, $R^{32}$ is more preferably an alkyl group having 1 to 15 carbon atoms, still more preferably an alkyl group having 1 to 14 carbon atoms, and further preferably an alkyl group having 1 to 13 carbon atoms.

It is preferable that the above $R^6$ be an alkyl group having 8 to 18 carbon atoms with an average number of methyl groups of 2.0 or more. The average number of methyl groups of the above $R^3$ is more preferably 2.5 or more, still more preferably 3.0 or more, further preferably 3.5 or more, and particularly preferably 4.0 or more. The upper limit of the average number of methyl groups of $R^3$ is preferably 12 or less, more preferably 10 or less, and still more preferably 8 or less.

In addition, the average number of methyl groups of the above $R^6$ per one molecule is preferably 4.0 or more, more preferably 4.3 or more, still more preferably 4.7 or more, and most preferably 5.0 or more. The above $R^6$ is particularly preferably a 2,6,8-trimethyl-4-nonyl group. In the present specification, the average number of methyl groups is a value obtained by adding methanol to a sample, carrying out Soxhlet extraction, and then measuring the extract by $^1$H-NMR.

The polyoxyalkylene chain may be composed of oxyethylene and oxypropylene. It is a polyoxyalkylene chain in which the average number of repeating oxyethylene groups is 5 to 20 and the average number of repeating oxypropylene groups is 0 to 2, and is a hydrophilic group. The number of oxyethylene units may have either a broad or narrow monomodal distribution as typically provided, or a broader or bimodal distribution that may be obtained by blending. In the case where the average number of repeating oxypropylene groups is greater than 0, the oxyethylene groups and oxypropylene groups in the polyoxyalkylene chain may be arranged in blocks or randomly. From the viewpoint of viscosity of the composition and agglomeration suppressing property at the time of stirring, a polyoxyalkylene chain constituted so that the average number of repeating oxyethylene groups is 7 to 12 and the average number of repeating oxypropylene groups is 0 to 2 is preferred. In particular, when $A^1$ has 0.5 to 1.5 oxypropylene groups on average, low foaming properties are good, which is preferable.

More preferably, $R^6$ is (R') (R")HC-, wherein R' and R'' are the same or different linear, branched, or cyclic alkyl groups, and the total amount of carbon atoms is at least 5, preferably 7 to 17. Preferably, at least one of R' and R'' is a branched or cyclic hydrocarbon group.

Specific examples of the above polyoxyethylene alkyl ether include $C_{13}H_{27}$-O-$(C_2H_4O)_{10}$-H, $C_{12}H_{25}$-O-$(C_2H_4O)_{10}$-H, $C_{10}H_{21}CH(CH_3)CH_2$-O-$(C_2H_4O)_9$-H, $C_{13}H_{27}$-O-$(C_2H_4O)_9$-$(CH(CH_3)CH_2O)$-H, $C_{16}H_{33}$-O-$(C_2H_4O)_{10}$-H, and HC $(C_5H_{11})(C_7H_{15})$-O-$(C_2H_4O)_9$-H. Examples of commercially available products of the above polyoxyethylene alkyl ether include Genapol X080 (product name, manufactured by Clariant), NOIGEN TDS series (manufactured by DKS Co., Ltd.) exemplified by NOIGEN TDS-80 (trade name) and NOIGEN TDS-100 (trade name), LEOCOL TD series (manufactured by Lion Corp.) exemplified by LEOCOL TD-90 (trade name), LIONOL(R) TD series (manufactured by Lion Corp.), T-Det A series (manufactured by Harcros Chemicals Inc.) exemplified by T-Det A 138 (trade name), TERGITOL(R) 15-S series (manufactured by The Dow Chemical Company), and DISPANOL TOC (trade name, manufactured by NOF CORPORATION).

It is also preferable that the above nonionic surfactant be an ethoxylate of 2,6,8-trimethyl-4-nonanol having about 4 to about 18 ethylene oxide units on average, an ethoxylate of 2,6,8-trimethyl-4-nonanol having about 6 to about 12 ethylene oxide units on average, or a mixture thereof. This type of nonionic surfactant is also commercially available as, for example, TERGITOL TMN-6, TERGITOL TMN-10, and TERGITOL TMN-100X (all product names, manufactured by The Dow Chemical Company).

In addition, the hydrophobic group in the nonionic surfactant may be any of an alkylphenol group, a linear alkyl group, and a branched alkyl group. Examples of the nonionic surfactant include a nonionic surfactant represented by the general formula (ii):

$$R^7\text{-}C_6H_4\text{-}O\text{-}A^2\text{-}H \qquad (ii)$$

wherein $R^7$ is a linear or branched primary or secondary alkyl group having 4 to 12 carbon atoms, and $A^2$ is a polyoxy-

alkylene chain. Specific examples of the above nonionic surfactant include Triton X-100 (trade name, manufactured by The Dow Chemical Company).

Examples of the above nonionic surfactant also include a polyol compound. Specific examples thereof include those described in International Publication No. WO 2011/014715. Typical examples of the polyol compound include a compound having one or more sugar units as polyol unit. The sugar units may have been modified to contain at least one long chain. Examples of the suitable polyol compound containing at least one long chain moiety include an alkyl glycoside, a modified alkyl glycoside, a sugar ester, and combinations thereof. Examples of the sugar include, but are not limited to, a monosaccharide, an oligosaccharide, and sorbitane. Examples of the monosaccharide include a pentose and a hexose. Typical examples of the monosaccharide include ribose, glucose, galactose, mannose, fructose, arabinose, and xylose. Examples of the oligosaccharide include an oligomer of 2 to 10 of the same or different monosaccharides. Examples of the oligosaccharide include, but are not limited to, saccharose, maltose, lactose, raffinose, and isomaltose.

Typically, examples of the sugar suitable for use as the polyol compound include a cyclic compound containing a 5-membered ring of four carbon atoms and one heteroatom (typically oxygen or sulfur, preferably oxygen atom), or a cyclic compound containing a 6-membered ring of five carbon atoms and one heteroatom as described above, preferably oxygen atom. They further contain at least two or at least three hydroxy groups (-OH groups) bonded to carbon ring atoms. Typically, the sugar has been modified in that one or more of the hydrogen atoms of hydroxy groups (and/or hydroxyalkyl groups) bonded to carbon ring atoms have been replaced with long chain residues such that ether or ester bonds are created between the long chain residues and the sugar moiety. The sugar-based polyol may contain a single sugar unit or a plurality of sugar units. The single sugar unit or the plurality of sugar units may be modified with long chain moieties as described above. Specific examples of the sugar-based polyol compound include a glycoside, a sugar ester, and a sorbitan ester, as well as mixtures and combinations thereof.

The preferred type of polyol compound is an alkyl or modified alkyl glucoside. These types of surfactants contain at least one glucose moiety. Examples thereof include a compound represented by the formula:

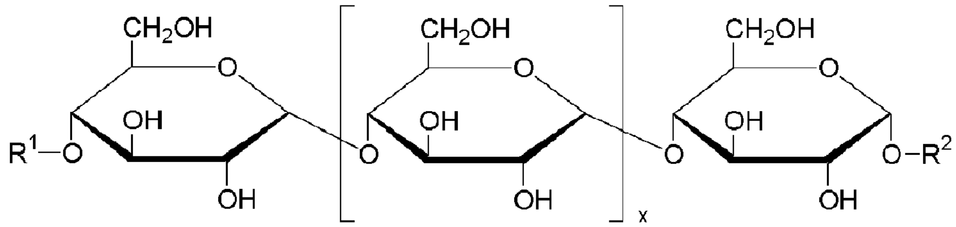

wherein x represents 0, 1, 2, 3, 4, or 5; and $R^1$ and $R^2$ each independently represent H or a long chain unit containing at least 6 carbon atoms, with the proviso that at least one of $R^1$ or $R^2$ is not H. Typical examples of $R^1$ and $R^2$ include an aliphatic alcohol residue. Examples of the aliphatic alcohol include hexanol, heptanol, octanol, nonanol, decanol, undecanol, dodecanol (lauryl alcohol), tetradecanol, hexadecanol (cetyl alcohol), heptadecanol, octadecanol (stearyl alcohol), eicosanoic acid, and combinations thereof. It is understood that, although the above formula represents a specific example of alkyl poly glucoside showing glucose in its pyranose form, another sugar or the same sugar but in different enantiomeric or diastereomeric form may also be used.

The alkyl glucoside is available by, for example, an acid-catalyzed reaction of glucose, starch, or n-butyl glucoside with an aliphatic alcohol, which typically yields a mixture of various alkyl glucosides (Alkyl polygylcoside, Rompp, Lexikon Chemie, Version 2.0, Stuttgart/New York, Georg Thieme Verlag, 1999). Examples of the aliphatic alcohol include hexanol, heptanol, octanol, nonanol, decanol, undecanol, dodecanol (lauryl alcohol), tetradecanol, hexadecanol (cetyl alcohol), heptadecanol, octadecanol (stearyl alcohol), eicosanoic acid, and combinations thereof. The alkyl glucoside is also commercially available under the trade name GLUCOPON or DISPONIL from Cognis GmbH, Dusseldorf, Germany.

Other examples of the nonionic surfactant include a bifunctional block copolymer supplied from BASF as Pluronic(R) R series and a tridecyl alcohol alkoxylate supplied from BASF as Iconol(R) TDA series.

The above nonionic surfactant is preferably at least one selected from the group consisting of a nonionic surfactant represented by the general formula (i) and a nonionic surfactant represented by the general formula (ii), and more preferably a nonionic surfactant represented by the general formula (i).

The above nonionic surfactant is preferably free from an aromatic moiety.

The nonionic surfactant may be a mixture of two kinds of different nonionic surfactants, for example, a mixture of a compound in which $A^1$ in the above general formula (i) is a polyoxyalkylene chain with an average number of oxyethylene units of 7.0 to 12.0 and an average number of oxypropylene units of 0.0 to 2.0 and a compound in which $A^1$ in the above general formula (i) is a polyoxyalkylene chain with an average number of oxyethylene units of 10.0 to 12.0. It may also be, for example, a mixture of a compound in which $A^1$ in the above general formula (i) has an average number

of oxyethylene units of 7.0 or more and less than 10.0, and a compound in which $A^1$ in the above general formula (i) is a polyoxyalkylene chain with an average number of oxyethylene units of 10.0 or more and 12.0 or less.

The HLB of the nonionic surfactant is preferably 13.00 or more, more preferably 13.20 or more, still more preferably 14.00 or more, further preferably 14.05 or more, and particularly preferably 14.10 or more. It is also preferably 14.50 or less, more preferably 14.40 or less, still more preferably 14.30 or less, further preferably 14.20 or less, and particularly preferably 14.15 or less. The HLB means a value calculated using Griffin's calculation formulas [HLB = E/5 (wherein E is the wt% of ethylene oxide in the molecule); HLB = (E + P)/5 (wherein E is as defined above, and P is the wt% of polyhydric alcohol in the molecule); HLB = 20(1 - S/N)/5 (wherein S is the saponification value of the ester, and N is the neutralization value of the fatty acid constituting the ester)]. In the case where two or more kinds of nonionic surfactants are used, the HLB is calculated from the HLB of each nonionic surfactant and its mass proportion. For example, in the case where a nonionic surfactant with a HLB of 14.00 is 60% by mass and a nonionic surfactant with a HLB of 15.00 is 40% by mass based on the total content of nonionic surfactants, then HLB = 14.00 × 0.6 + 15.00 × 0.4 = 14.40.

The coating material composition of the present disclosure may contain two kinds of nonionic surfactants with different HLBs. For example, the coating material composition of the present disclosure may contain a nonionic surfactant with a HLB of 13.00 or more and less than 14.10, and a nonionic surfactant with a HLB of 14.10 or more and 15.00 or less. Addition of nonionic surfactants with different HLBs can suppress foaming without adding an antifoaming agent. In addition, for example, the coating material composition of the present disclosure may contain a nonionic surfactant with a HLB of 13.00 or more and less than 13.50, and a nonionic surfactant with a HLB of 13.50 or more and 15.00 or less (preferably 14.50 or less, and more preferably 14.00 or less).

The cloud point of nonionic surfactants is a measure of the solubility of the surfactants in water. The cloud point of the nonionic surfactant is preferably 30 to 90°C, more preferably 35 to 85°C, still more preferably 40 to 80°C, and particularly preferably 45 to 75°C.

The coating material composition of the present disclosure may contain two kinds of nonionic surfactants with different cloud points. For example, the coating material composition of the present disclosure may contain a nonionic surfactant with a cloud point of 30°C or higher and 60°C or lower, and a nonionic surfactant with a cloud point of higher than 60°C and 90°C or lower, or may contain a nonionic surfactant with a cloud point of 35 to 60°C and a nonionic surfactant with a cloud point of 65 to 80°C. The use of a nonionic surfactant with a high cloud point can improve the agglomeration suppressing property at the time of stirring. Also, addition of nonionic surfactants with different cloud points can suppress foaming without adding an antifoaming agent. In addition, for example, the coating material composition of the present disclosure may contain a nonionic surfactant with a cloud point of 30°C or higher and 60°C or lower, and a nonionic surfactant with a cloud point of higher than 60°C and 90°C or lower, or may contain a nonionic surfactant with a cloud point of 35 to 60°C and a nonionic surfactant with a cloud point of 65 to 80°C.

The content of the nonionic surfactant in the first coating material composition of the present disclosure is preferably 1.0% by mass or more, more preferably 2.0% by mass or more, still more preferably 3.0% by mass or more, and particularly preferably 4.0% by mass or more, based on the fluororesin. In addition, the content of the nonionic surfactant is preferably 40% by mass or less, more preferably 30% by mass or less, still more preferably 20% by mass or less, particularly preferably 15% by mass or less, and most preferably 12% by mass or less, based on the fluororesin. When the content of the nonionic surfactant is within the above range, the agglomeration suppressing property of the coating material composition at the time of stirring can be improved.

The content of the nonionic surfactant in the second coating material composition and the third coating material composition of the present disclosure is preferably 1.0% by mass or more, more preferably 2.0% by mass or more, still more preferably 3.0% by mass or more, and particularly preferably 4.0% by mass or more, based on the PTFE. In addition, the content of the nonionic surfactant is preferably 40% by mass or less, more preferably 30% by mass or less, still more preferably 20% by mass or less, particularly preferably 15% by mass or less, and most preferably 12% by mass or less, based on the PTFE. The content of the nonionic surfactant being within the above range can improve the agglomeration suppressing property of the coating material composition at the time of stirring.

<Anionic hydrocarbon-based surfactant>

The third coating material composition of the present disclosure comprises an anionic hydrocarbon-based surfactant. It is preferable that the first coating material composition and the second coating material composition of the present disclosure comprise an anionic hydrocarbon-based surfactant. The use of an anionic hydrocarbon-based surfactant can appropriately adjust the viscosity of the coating material composition or improve the miscibility of a pigment, filler, or the like.

Anionic hydrocarbon-based surfactants usually have a hydrophilic moiety such as a carboxylate, a sulfonate or a sulfate and a hydrophobic moiety that is a long chain hydrocarbon moiety such as alkyl.

Examples of the anionic hydrocarbon-based surfactant include Versatic(R) 10 manufactured by Resolution

Performance Products, and Avanel S series (S-70, S-74, etc.) manufactured by BASF.

Examples of the anionic hydrocarbon-based surfactant also include an anionic surfactant represented by R-L-M, wherein R is a linear or branched alkyl group having one or more carbon atoms and optionally having a substituent, or a cyclic alkyl group having 3 or more carbon atoms and optionally having a substituent, and in the case of having 3 or more carbon atoms, optionally contains a monovalent or divalent heterocycle or optionally forms a ring; L is $-ArSO_3^-$, $-SO_3^-$, $-SO_4$-, $-PO_3^-$ or $COO^-$; M is, H, a metal atom, $NR^5_4$, imidazolium optionally having a substituent, pyridinium optionally having a substituent, or phosphonium optionally having a substituent; and $R^5$ is H or an organic group and $-ArSO_3^-$ is an aryl sulfonate.

Specific examples thereof include a compound represented by $CH_3-(CH_2)_n$-L-M, wherein n is an integer of 6 to 17 and L and M are the same as described above, as represented by lauryl acid and lauryl sulfate. A mixture of those in which R is an alkyl group having 12 to 16 carbon atoms and L-M is sulfate can also be used.

In addition, examples of the anionic hydrocarbon-based surfactant also include an anionic surfactant represented by $R^6(-L-M)_2$, wherein $R^6$ is a linear or branched alkylene group having one or more carbon atoms and optionally having a substituent, or a cyclic alkylene group having 3 or more carbon atoms and optionally having a substituent, and in the case of having 3 or more carbon atoms, optionally contains a monovalent or divalent heterocycle or optionally forms a ring; L is $-ArSO_3^-$,$-SO_3^-$, $-SO_4$-, $-PO_3^-$ or $-COO^-$; M is, H, a metal atom, $NR^5_4$, imidazolium optionally having a substituent, pyridinium optionally having a substituent, or phosphonium optionally having a substituent; and $R^5$ is H or an organic group and $-ArSO_3^-$ is an aryl sulfonate.

In addition, examples of the anionic hydrocarbon-based surfactant also include an anionic surfactant represented by $R^7(-L-M)_3$, wherein $R^7$ is a linear or branched alkylidine group having one or more carbon atoms and optionally having a substituent, or a cyclic alkylidine group having 3 or more carbon atoms and optionally having a substituent, and in the case of having 3 or more carbon atoms, optionally contains a monovalent or divalent heterocycle or optionally forms a ring; L is $-ArSO_3^-$, $-SO_3^-$, $-SO_4$-, $-PO_3^-$ or $-COO^-$; M is H, a metal atom, $NR^5_4$, imidazolium optionally having a substituent, pyridinium optionally having a substituent, or phosphonium optionally having a substituent; $R^5$ is H or an organic group and $-ArSO_3^-$ is an aryl sulfonate.

In addition, examples of the anionic hydrocarbon-based surfactant also include a siloxane hydrocarbon-based surfactant. Examples of the siloxane hydrocarbon-based surfactant include those described in Silicone Surfactants, R. M. Hill, Marcel Dekker, Inc., ISBN: 0-8247-00104. The structure of the siloxane hydrocarbon-based surfactant includes distinct hydrophobic and hydrophilic moieties. The hydrophobic moiety contains one or more dihydrocarbyl siloxane units, where the substituents on the silicone atoms are completely hydrocarbon. In the sense that the carbon atoms in the hydrocarbyl groups are fully replaced with hydrogen atoms in the case where they can be replaced with halogen such as fluorine, these siloxane surfactants can also be regarded as hydrocarbon surfactants, that is, the monovalent substituents on the carbon atoms of the hydrocarbyl groups are hydrogen.

The hydrophilic moiety of the siloxane hydrocarbon-based surfactant may contain one or more polar moieties including ionic groups such as sulfate, sulfonate, phosphonate, phosphate ester, carboxylate, carbonate, sulfosuccinate, taurate (as free acid, salt, or ester), phosphine oxide, betaine, betaine copolyol, and quaternary ammonium salt. The ionic hydrophobic moiety may also include an ionically functionalized siloxane graft. Examples of such a siloxane hydrocarbon-based surfactant include a polydimethylsiloxane-graft-(meth)acrylic acid salt, a polydimethylsiloxane-graft-polyacrylate salt, and a polydimethylsiloxane-grafted quaternary amine. The polar moieties of the hydrophilic moiety of the siloxane hydrocarbon-based surfactant may contain nonionic groups formed by a polyether, such as polyethylene oxide (PEO) and a mixed polyethylene oxide/polypropylene oxide polyether (PEO/PPO); a monosaccharide and a disaccharide; and a water-soluble heterocycle such as pyrrolidinone. The ratio of ethylene oxide to propylene oxide (EO/PO) may be varied depending on the mixed polyethylene oxide/propylene oxide polyether.

The hydrophilic moiety of the siloxane hydrocarbon-based surfactant may also contain a combination of ionic and nonionic moieties. Examples of such a moiety include an ionically end-functionalized or randomly functionalized polyether or polyol. Preferred for the practice of the present disclosure is a siloxane having a nonionic moiety, that is, a nonionic siloxane surfactant.

The arrangement of the hydrophobic and hydrophilic moieties of the structure of the siloxane hydrocarbon-based surfactant may take the form of a diblock polymer (AB), triblock polymer (ABA), wherein "B" represents the siloxane moiety of the molecule, or a multi-block polymer. Alternatively, the siloxane surfactant may include a graft polymer.

The siloxane hydrocarbon-based surfactant is also disclosed in U.S. Patent No. 6,841,616.

Examples of the siloxane-based anionic hydrocarbon-based surfactant include Noveon(R) by Lubrizol Advanced Materials, Inc. and SilSense™ PE-100 silicone and SilSense™ CA-1 silicone available from Consumer Specialties.

Examples of the anionic hydrocarbon-based surfactant also include a sulfosuccinate surfactant Lankropol(R) K8300 by Akzo Nobel Surface Chemistry LLC. Examples of the sulfosuccinate surfactant include sodium diisodecyl sulfosuccinate (Emulsogen(R) SB10 by Clariant) and sodium diisotridecyl sulfosuccinate (Polirol(R) TR/LNA by Cesapinia Chemicals).

Examples of the anionic hydrocarbon-based surfactant also include PolyFox(R) surfactants by Omnova Solutions, Inc. (PolyFox™ PF-156A, PolyFox™ PF-136A, etc.).

Examples of the anionic hydrocarbon-based surfactant include a compound ($\alpha$) represented by the general formula ($\alpha$):

$R^{10}$-COOM ($\alpha$)

wherein $R^{10}$ is a monovalent organic group containing one or more carbon atoms; and M is H, a metal atom, $NR^{11}_4$, imidazolium optionally having a substituent, pyridinium optionally having a substituent, or phosphonium optionally having a substituent, where $R^{11}$ is H or an organic group and may be the same or different. $R^{11}$ is preferably H or a $C_{1-10}$ organic group, and more preferably H or a $C_{1-4}$ organic group. From the viewpoint of surfactant function, the number of carbon atoms in $R^{10}$ is preferably 2 or more, and more preferably 3 or more. In addition, from the viewpoint of water-solubility, the number of carbon atoms in $R^{10}$ is preferably 29 or less, and more preferably 23 or less. Examples of the metal atom as the above M include an alkali metal (Group 1) and an alkaline earth metal (Group 2), and preferred is Na, K, or Li. M is preferably H, a metal atom, or $NR^{11}_4$, more preferably H, an alkali metal (Group 1), an alkaline earth metal (Group 2), or $NR^{11}_4$, still more preferably H, Na, K, Li, or $NH_4$, further preferably Na, K, or $NH_4$, particularly preferably Na or $NH_4$, and most preferably $NH_4$.

Examples of the compound ($\alpha$) also include an anionic surfactant represented by $R^{12}$-COOM, wherein $R^{12}$ is a linear or branched, alkyl group, alkenyl group, alkylene group, or alkenylene group having 1 or more carbon atoms and optionally having a substituent, or a cyclic alkyl group, alkenyl group, alkylene group, or alkenylene group having 3 or more carbon atoms and optionally having a substituent, each of which optionally contains an ether bond; in the case of having 3 or more carbon atoms, $R^{12}$ optionally contains a monovalent or divalent heterocycle or optionally forms a ring; and M is the same as described above. Specific examples thereof include a compound represented by $CH_3-(CH_2)_n-COOM$, wherein n is an integer of 2 to 28, and M is the same as described above.

From the viewpoint of emulsion stability, the compound ($\alpha$) may be free from a carbonyl group which is not in a carboxyl group. Preferred examples of the above hydrocarbon-containing surfactant free from a carbonyl group include a compound of the following formula (A): R-COO-M (A), wherein R is an alkyl group, an alkenyl group, an alkylene group, or an alkenylene group, each of which optionally contains an ether bond; M is H, a metal atom, $NR^{11}_4$, imidazolium optionally having a substituent, pyridinium optionally having a substituent, or phosphonium optionally having a substituent; and $R^{11}$ is the same or different and is H or an organic group having 1 to 10 carbon atoms. In the above formula (A), it is preferable that R be an alkyl group or an alkenyl group, each of which optionally contains an ether group. The alkyl group or alkenyl group in the above R may be linear or branched. The number of carbon atoms in the above R is, but is not limited to, 2 to 29.

In the case where the alkyl group is linear, the number of carbon atoms in R is preferably 3 to 29, and more preferably 5 to 23. In the case where the above alkyl group is branched, the number of carbon atoms in R is preferably 5 to 35, and more preferably 11 to 23. In the case where the above alkenyl group is linear, the number of carbon atoms in R is preferably 2 to 29, and more preferably 9 to 23. In the case where the above alkenyl group is branched, the number of carbon atoms in R is preferably 2 to 29, and more preferably 9 to 23.

Examples of the alkyl group and the alkenyl group include a methyl group, an ethyl group, an isobutyl group, a t-butyl group, and a vinyl group.

In addition, examples of the anionic hydrocarbon-based surfactant also include a carboxylic acid-type hydrocarbon-based surfactant. Examples of the carboxylic acid-type hydrocarbon-based surfactant include butylic acid, valeric acid, caproic acid, enanthic acid, caprylic acid, pelargonic acid, capric acid, lauric acid, myristic acid, pentadecylic acid, palmitic acid, palmitoleic acid, margaric acid, stearic acid, oleic acid, vaccenic acid, linoleic acid, (9,12,15)-linolenic acid, (6,9,12)linolenic acid, eleostearic acid, arachidic acid, 8,11-eicosadienoic acid, mead acid, arachidonic acid, behenic acid, lignoceric acid, nervonic acid, cerotic acid, montanic acid, melissic acid, crotonic acid, myristoleic acid, palmitoleic acid, sapienoic acid, oleic acid, elaidic acid, vaccenic acid, gadoleic acid, eicosenoic acid, erucic acid, nervonic acid, linoleic acid, eicosadienoic acid, docosadienoic acid, linolenic acid, pinolenic acid, $\alpha$-eleostearic acid, $\beta$-eleostearic acid, mead acid, dihomo-$\gamma$-linolenic acid, eicosatrienoic acid, stearidonic acid, arachidonic acid, eicosatetraenoic acid, adrenic acid, boseopentaenoic acid, eicosapentaenoic acid, osbond acid, sardine acid, tetracosapentaenoic acid, docosahexaenoic acid, nisinic acid, and salts thereof. In particular, preferred is at least one selected from the group consisting of lauric acid, capric acid, myristic acid, pentadecylic acid, palmitic acid, and salts thereof. Examples of the above salts include, but are not limited to, those in which the hydrogen of the carboxyl group is a metal atom, $NR^{11}_4$, imidazolium optionally having a substituent, pyridinium optionally having a substituent, or phosphonium optionally having a substituent as M in the above formula.

In addition, the anionic hydrocarbon-based surfactant to be used may be, for example, anionic hydrocarbon-based surfactants described in International Publication No. WO 2013/146950 and International Publication No. WO 2013/146947. Examples thereof include one having a saturated or unsaturated aliphatic chain having 6 to 40 carbon atoms, preferably 8 to 20 carbon atoms, and more preferably 9 to 13 carbon atoms. The above saturated or unsaturated

aliphatic chain may be either linear or branched, or may have a cyclic structure. The above hydrocarbon may have aromaticity, or may have an aromatic group. The above hydrocarbon may have a heteroatom such as oxygen, nitrogen, or sulfur.

Examples of the anionic hydrocarbon-based surfactant include an alkyl sulfonate, an alkyl sulfate, and an alkyl aryl sulfate, and salts thereof; an aliphatic (carboxylic) acid and salts thereof; and a phosphoric acid alkyl ester and a phosphoric acid alkyl aryl ester, and salts thereof. Of these, preferred are an alkyl sulfonate, an alkyl sulfate, and an aliphatic carboxylic acid, or salts thereof.

Preferred examples of the alkyl sulfate or salts thereof include ammonium lauryl sulfate and sodium lauryl sulfate.

Preferred examples of the aliphatic carboxylic acid or salts thereof include succinic acid, decanoic acid, undecanoic acid, undecenoic acid, lauric acid, hydrododecanoic acid, or salts thereof.

Although the content of the anionic hydrocarbon-based surfactant in the first coating material composition of the present disclosure depends on the types of other compounding agents, it is preferable that the content be 10 ppm to 5,000 ppm based on the fluororesin. The lower limit of the content of the anionic hydrocarbon-based surfactant is more preferably 50 ppm or more, and still more preferably 100 ppm or more, and it is more preferably 4,000 ppm or less, and still more preferably 3,000 ppm or less, based on the fluororesin. The content of the anionic hydrocarbon-based surfactant being within the above range, it is possible to appropriately adjust the viscosity of the coating material composition or improve the miscibility of a pigment, filler, or the like, while suppressing excessive foaming.

In the second coating material composition of the present disclosure and the third coating material composition of the present disclosure, although the content of the anionic hydrocarbon-based surfactant in the coating material composition depends on the types of other compounding agents, it is preferable that the content be 10 ppm to 5,000 ppm based on the PTFE. The lower limit of the content of the anionic hydrocarbon-based surfactant is more preferably 50 ppm or more, and still more preferably 100 ppm or more, and it is more preferably 4,000 ppm or less, and still more preferably 3,000 ppm or less, based on the PTFE. The content of the anionic hydrocarbon-based surfactant being within the above range, it is possible to appropriately adjust the viscosity of the coating material composition or improve the miscibility of a pigment, filler, or the like, while suppressing excessive foaming.

The third coating material composition of the present disclosure is substantially free from a fluorine-containing compound containing a hydrophilic group (with the proviso that the monomer (I) represented by the general formula (I) and the polymer (I) are excluded). The first coating material composition and the second coating material composition of the present disclosure may contain a fluorine-containing compound containing a hydrophilic group, but it is preferable that they be substantially free from a fluorine-containing compound containing a hydrophilic group (with the proviso that the monomer (I) represented by the general formula (I) and the polymer (I) are excluded).

In the present disclosure, the term "substantially free from a fluorine-containing compound containing a hydrophilic group" means that the content of the fluorine-containing compound containing a hydrophilic group in the coating material composition is 10 ppm by mass or less, and it is preferably 1 ppm by mass or less, more preferably 100 ppb by mass or less, still more preferably 25 ppb by mass or less, further preferably 10 ppb by mass or less, particularly preferably 1 ppb by mass or less, and most preferably equal to or less than the detection limit of the fluorine-containing compound containing a hydrophilic group as measured by liquid chromatography-mass spectrometry (LC/MS).

In another embodiment of the coating material composition of the present disclosure, it is substantially free from a fluorine-containing surfactant.

In the present disclosure, the term "substantially free from a fluorine-containing surfactant" means that the content of the fluorine-containing surfactant in the coating material composition is 10 ppm by mass or less, and it is preferably 1 ppm by mass or less, more preferably 100 ppb by mass or less, still more preferably 10 ppb by mass or less, further preferably 1 ppb by mass or less, and particularly preferably less than the detection limit of the fluorine-containing surfactant as measured by liquid chromatography-mass spectrometry (LC/MS).

In another embodiment of the coating material composition of the present disclosure, it is substantially free from an anionic fluorine-containing surfactant.

In the present disclosure, "substantially free from an anionic fluorine-containing surfactant" means that the content of the anionic fluorine-containing surfactant in the coating material composition is 10 ppm by mass or less, and it is preferably 1 ppm by mass or less, more preferably 100 ppb by mass or less, still more preferably 10 ppb by mass or less, further preferably 1 ppb by mass or less, and particularly preferably less than the detection limit as measured by liquid chromatography-mass spectrometry (LC/MS).

In another embodiment of the coating material composition of the present disclosure, it is substantially free from an anionic surfactant containing fluorine in which the anionic moiety has a molecular weight of 800 or less.

In the present disclosure, "substantially free from an anionic surfactant containing fluorine in which the anionic moiety has a molecular weight of 800 or less" means that the content of the anionic surfactant containing fluorine in which the anionic moiety has a molecular weight of 800 or less in the coating material composition is 10 ppm by mass or less, preferably 1 ppm by mass or less, more preferably 100 ppb by mass or less, still more preferably 10 ppb by mass or less, further preferably 1 ppb by mass or less, and particularly preferably equal to or less than the detection

limit as measured by liquid chromatography-mass spectrometry (LC/MS).

The content of the fluorine-containing compound containing a hydrophilic group can be quantified by a known method. For example, it can be measured by adding methanol to the composition, performing extraction, and analyzing the obtained extract by LC/MS analysis.

In order to further improve the extraction efficiency, treatment by Soxhlet extraction, ultrasonic treatment, or the like may be performed.

From the obtained LC/MS spectrum, the molecular weight information is extracted to confirm agreement with the structural formula of the candidate fluorine-containing compound containing a hydrophilic group.

Thereafter, aqueous solutions having five or more different content levels of the confirmed fluorine-containing compound containing a hydrophilic group are prepared, and LC/MS analysis of the aqueous solution of each content is performed, and the relationship between the content and the area for the content is plotted, and a calibration curve is drawn.

Then, using the calibration curve, the area of the LC/MS chromatogram of the fluorine-containing compound containing a hydrophilic group in the extract can be converted into the content of the fluorine-containing compound containing a hydrophilic group.

Examples of the fluorine-containing compound containing a hydrophilic group include a fluorine-containing surfactant, a fluorine-containing telomer containing a hydrophilic group, a fluorine-containing oligomer containing a hydrophilic group, a perfluoropolyethercarboxylic acid, and a perfluoropolyethersulfonic acid.

Examples of the hydrophilic group include $-NH_2$,$-PO_3M$, $-P(O)(OM)_2$, $-OPO_3M$, $-OP(O)(OM)_2$, $-SO_3M$, $-OSO_3M$, and-COOM, wherein M is H, a metal atom, $NR^7{}_4$, imidazolium optionally having a substituent, pyridinium optionally having a substituent, or phosphonium optionally having a substituent, where $R^7$ is H or an organic group, may be the same or different, and any two thereof may be bonded to each other to form a ring. Of these, the above hydrophilic group is preferably $-SO_3M$ or -COOM.

Examples of the fluorine-containing surfactant include an anionic fluorine-containing surfactant. The anionic fluorine-containing surfactant may be, for example, a surfactant containing a fluorine atom, in which the total number of carbon atoms in the portion excluding the anionic group is 20 or less.

In addition, the fluorine-containing surfactant may be a surfactant containing fluorine in which the anionic moiety has a molecular weight of 800 or less. Note that the above "anionic moiety" means the portion of the above fluorine-containing surfactant excluding the cation. For example, in the case of $F(CF_2)_{n1}COOM$ represented by the formula (I), which will be described later, the anionic moiety is the "$F(CF_2)_{n1}COO$" portion.

Examples of the above fluorine-containing surfactant also include a fluorine-containing surfactant having a Log POW of 3.5 or less. The above Log POW is a partition coefficient between 1-octanol and water, which is represented by Log P (wherein P is the ratio between the concentration of the fluorine-containing surfactant in octanol and the concentration of the fluorine-containing surfactant in water in a phase-separated octanol/water (1:1) liquid mixture containing the fluorine-containing surfactant). The above Log POW is determined as follows. Specifically, HPLC is performed on standard substances (heptanoic acid, octanoic acid, nonanoic acid, and decanoic acid) each having a known octanol/water partition coefficient using TOSOH ODS-120T (φ4.6 mm × 250 mm, manufactured by Tosoh Corp.) as a column and acetonitrile/0.6 mass% $HClO_4$ aqueous solution (= 1/1 (vol/vol%)) as an eluent at a flow rate of 1.0 ml/min, a sample amount of 300 μL, and a column temperature of 40°C; with a detection light of UV 210 nm. For each standard substance, a calibration curve is drawn with respect to the elution time and the known octanol/water partition coefficient. Based on the calibration curve, the Log POW is calculated from the elution time of the sample liquid in HPLC.

Specific examples of the above fluorine-containing surfactant include those described in U.S. Patent Application Publication No. 2007/0015864, U.S. Patent Application Publication No. 2007/0015865, U.S. Patent Application Publication No. 2007/0015866, U.S. Patent Application Publication No. 2007/0276103, U.S. Patent Application Publication No. 2007/0117914, U.S. Patent Application Publication No. 2007/142541, U.S. Patent Application Publication No. 2008/0015319, U.S. Patent No. 3,250,808, U.S. Patent No. 3,271,341, Japanese Patent Laid-Open No. 2003-119204, International Publication No. WO 2005/042593, International Publication No. WO 2008/060461, International Publication No. WO 2007/046377, International Publication No. WO 2007/119526, International Publication No. WO 2007/046482, International Publication No. WO 2007/046345, U.S. Patent Application Publication No. 2014/0228531, International Publication No. WO 2013/189824, and International Publication No. WO 2013/189826.

Examples of the above anionic fluorine-containing surfactant include a compound represented by the general formula ($N^0$):

$$X^{n0}\text{-}Rf^{n0}\text{-}Y^0 \qquad (N^0)$$

wherein $X^{n0}$ is H, Cl, or F; $Rf^{n0}$ is an alkylene group that has 3 to 20 carbon atoms, that is linear, branched, or cyclic, and H of which is partially or entirely replaced with F, the alkylene group may contain one or more ether bonds, and H may be partially replaced with Cl; and $Y^0$ is an anionic group.

The anionic group $Y^0$ may be $-COOM$, $-SO_2M$, or $-SO_3M$, and may be $-COOM$ or $-SO_3M$. M is H, a metal atom, $NR^7_4$, imidazolium optionally having a substituent, pyridinium optionally having a substituent, or phosphonium optionally having a substituent, and $R^7$ is H or an organic group. Examples of the above metal atom include an alkali metal (Group 1) and an alkaline earth metal (Group 2), such as Na, K, or Li. $R^7$ may be H or a $C_{1-10}$ organic group, may be H or a $C_{1-4}$ organic group, and may be H or a $C_{1-4}$ alkyl group. M may be H, a metal atom, or $NR^7_4$, may be H, an alkali metal (Group 1), an alkaline earth metal (Group 2), or $NR^7_4$, and may be H, Na, K, Li, or $NH_4$. In the above $Rf^{n0}$, 50% or more of H may be replaced with fluorine.

Examples of the compound represented by the general formula ($N^0$) include:

a compound represented by the general formula ($N^1$):

$$X^{n0}-(CF_2)_{m1}-Y^0 \qquad (N^1)$$

wherein $X^{n0}$ is H, Cl, and F; m1 is an integer of 3 to 15; and $Y^0$ is as defined above;

a compound represented by the general formula ($N^2$):

$$Rf^{n1}-O-(CF(CF_3)CF_2O)_{m2}CFX^{n1}-Y^0 \qquad (N^2)$$

wherein $Rf^{n1}$ is a perfluoroalkyl group having 1 to 5 carbon atoms; m2 is an integer of 0 to 3; $X^{n1}$ is F or $CF_3$; and $Y^0$ is as defined above;

a compound represented by the general formula ($N^3$):

$$Rf^{n2}(CH_2)_{m3}-(Rf^{n3})_q-Y^0 \qquad (N^3)$$

wherein $Rf^{n2}$ is a partially or fully fluorinated alkyl group having 1 to 13 carbon atoms and optionally containing an ether bond; m3 is an integer of 1 to 3; $Rf^{n3}$ is a linear or branched perfluoroalkylene group having 1 to 3 carbon atoms; q is 0 or 1; and $Y^0$ is as defined above;

a compound represented by the general formula ($N^4$):

$$Rf^{n4}-O-(CY^{n1}Y^{n2})_pCF_2-Y^0 \qquad (N^4)$$

wherein $Rf^{n4}$ is a linear or branched, partially or fully fluorinated alkyl group having 1 to 12 carbon atoms and optionally containing an ether bond and/or a chlorine atom; $Y^{n1}$ and $Y^{n2}$ are the same or different and are each H or F; p is 0 or 1; and $Y^0$ is as defined above; and

a compound represented by the general formula ($N^5$):

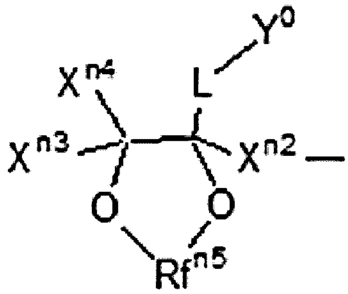

($N^5$)

wherein $X^{n2}$, $X^{n3}$, and $X^{n4}$ may be the same or different and are each H, F, or a linear or branched, partially or fully fluorinated alkyl group having 1 to 6 carbon atoms and optionally containing an ether bond; $Rf^{n5}$ is a linear or branched, partially or fully fluorinated alkylene group having 1 to 3 carbon atoms and optionally containing an ether bond; L is a linking group; and $Y^0$ is as defined above, with the proviso that the total number of carbon atoms in $X^{n2}$, $X^{n3}$, $X^{n4}$, and $Rf^{n5}$ is 18 or less.

More specific examples of the compound represented by the general formula ($N^0$) include a perfluorocarboxylic acid (I) represented by the general formula (I), an ω-H perfluorocarboxylic acid (II) represented by the general formula (II), a perfluoropolyethercarboxylic acid (III) represented by the general formula (III), a perfluoroalkylalkylenecarboxylic acid (IV) represented by the general formula (IV), a perfluoroalkoxyfluorocarboxylic acid (V) represented by the general formula (V), a perfluoroalkylsulfonic acid (VI) represented by the general formula (VI), an ω-H perfluorosulfonic acid (VII)

represented by the general formula (VII), a perfluoroalkylalkylene sulfonic acid (VIII) represented by the general formula (VIII), an alkylalkylene carboxylic acid (IX) represented by the general formula (IX), a fluorocarboxylic acid (X) represented by the general formula (X), an alkoxyfluorosulfonic acid (XI) represented by the general formula (XI), a compound (XII) represented by the general formula (XII), and a compound (XIII) represented by the following general formula (XIII).

The above perfluorocarboxylic acid (I) is represented by the general formula (I):

$F(CF_2)_{n1}COOM$ (I)

wherein n1 is an integer of 3 to 14; and M is H, a metal atom, $NR^7_4$, imidazolium optionally having a substituent, pyridinium optionally having a substituent, or phosphonium optionally having a substituent, and $R^7$ is H or an organic group.

The above ω-H perfluorocarboxylic acid (II) is represented by the general formula (II):

$H(CF_2)_{n2}COOM$ (II)

wherein n2 is an integer of 4 to 15; and M is as defined above.

The above perfluoropolyethercarboxylic acid (III) is represented by the general formula (III):

$Rf^1\text{-}O\text{-}(CF(CF_3)CF_2O)_{n3}CF(CF_3)COOM$ (III)

wherein $Rf^1$ is a perfluoroalkyl group having 1 to 5 carbon atoms; n3 is an integer of 0 to 3; and M is as defined above.

The above perfluoroalkylalkylenecarboxylic acid (IV) is represented by the general formula (IV):

$Rf^2(CH_2)_{n4}Rf^3COOM$ (IV)

wherein $Rf^2$ is a perfluoroalkyl group having 1 to 5 carbon atoms; $Rf^3$ is a linear or branched perfluoroalkylene group having 1 to 3 carbon atoms; n4 is an integer of 1 to 3; and M is as defined above.

The above alkoxyfluorocarboxylic acid (V) is represented by the general formula (V):

$Rf^4\text{-}O\text{-}CY^1Y^2CF_2\text{-}COOM$ (V)

wherein $Rf^4$ is a linear or branched, partially or fully fluorinated alkyl group having 1 to 12 carbon atoms and optionally containing an ether bond and/or a chlorine atom; $Y^1$ and $Y^2$ are the same or different and are each H or F; and M is as defined above.

The above perfluoroalkylsulfonic acid (VI) is represented by the general formula (VI):

$F(CF_2)_{n5}SO_3M$ (VI)

wherein n5 is an integer of 3 to 14; and M is as defined above.

The above ω-H perfluorosulfonic acid (VII) is represented by the general formula (VII):

$H(CF_2)_{n6}SO_3M$ (VII)

wherein n6 is an integer of 4 to 14; and M is as defined above.

The above perfluoroalkylalkylenesulfonic acid (VIII) is represented by the general formula (VIII):

$Rf^5(CH_2)_{n7}SO_3M$ (VIII)

wherein $Rf^5$ is a perfluoroalkyl group having 1 to 13 carbon atoms; n7 is an integer of 1 to 3; and M is as defined above.

The above alkylalkylenecarboxylic acid (IX) is represented by the general formula (IX):

$Rf^6(CH_2)_{n8}COOM$ (IX)

wherein $Rf^6$ is a linear or branched, partially or fully fluorinated alkyl group having 1 to 13 carbon atoms and optionally containing an ether bond; n8 is an integer of 1 to 3; and M is as defined above.

The above fluorocarboxylic acid (X) is represented by the general formula (X):

$Rf^7\text{-}O\text{-}Rf^8\text{-}O\text{-}CF_2\text{-}COOM$ (X)

wherein $Rf^7$ is a linear or branched partially or fully fluorinated alkyl group having 1 to 6 carbon atoms and optionally containing an ether bond and/or a chlorine atom; $Rf^8$ is a linear or branched partially or fully fluorinated alkyl group having 1 to 6 carbon atoms; and M is as defined above.

The above alkoxyfluorosulfonic acid (XI) is represented by the general formula (XI):

$$Rf^9\text{-O-}CY^1Y^2CF_2\text{-}SO_3M \qquad (XI)$$

wherein $Rf^9$ is a linear or branched, partially or fully fluorinated alkyl group having 1 to 12 carbon atoms, optionally containing an ether bond, and optionally containing chlorine; $Y^1$ and $Y^2$ are the same or different and are each H or F; and M is as defined above.

The above compound (XII) is represented by the general formula (XII):

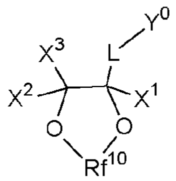

(XII)

wherein $X^1$, $X^2$, and $X^3$ may be the same or different and are each H, F, or a linear or branched, partially or fully fluorinated alkyl group having 1 to 6 carbon atoms and optionally containing an ether bond; $Rf^{10}$ is a perfluoroalkylene group having 1 to 3 carbon atoms; L is a linking group; and $Y^0$ is an anionic group. $Y^0$ may be-COOM, $-SO_2M$, or $-SO_3M$, and may be $-SO_3M$ or COOM, wherein M is as defined above. Examples of L include a single bond, and a partially or fully fluorinated alkylene group having 1 to 10 carbon atoms and optionally containing an ether bond.

The above compound (XIII) is represented by the following general formula (XIII):

$$Rf^{11}\text{-O-}(CF_2CF(CF_3)O)_{n9}(CF_2O)_{n10}CF_2COOM \qquad (XIII)$$

wherein $Rf^{11}$ is a fluoroalkyl group having 1 to 5 carbon atoms containing chlorine; n9 is an integer of 0 to 3; n10 is an integer of 0 to 3; and M is as defined above. Examples of the compound (XIII) include $CF_2ClO(CF_2CF(CF_3)O)_{n9}(CF_2O)_{n10}CF_2COONH_4$ (a mixture having an average molecular weight of 750, in the formula, n9 and n10 are as defined above).

Thus, examples of the above anionic fluorine-containing surfactant include a carboxylic acid-based surfactant and a sulfonic acid-based surfactant.

The fluorine-containing surfactant may be one kind of fluorine-containing surfactant, or may be a mixture containing two or more kinds of fluorine-containing surfactants.

Examples of the fluorine-containing surfactant include compounds represented by the following formulas. The fluorine-containing surfactant may be a mixture of these compounds. In one embodiment of the coating material composition of the present disclosure, it is substantially free from the compounds represented by the following formulas:

$H(CF_2)_7COOM$;

$F(CF_2)_7COOM$;

$F(CF_2)_5COOM$;

$H(CF_2)_6COOM$;

$CF_3O(CF_2)_3OCHFCF_2COOM$;

$C_3F_7OCF(CF_3)CF_2OCF(CF_3)COOM$;

$CF_3CF_2CF_2OCF(CF_3)COOM$;

$CF_3CF_2OCF_2CF_2OCF_2COOM$;

$C_2F_5OCF(CF_3)CF_2OCF(CF_3)COOM$;

$CF_3OCF(CF_3)CF_2OCF(CF_3)COOM$;

$CF_2ClCF_2CF_2OCF(CF_3)CF_2OCF_2COOM$;

$CF_2ClCF_2CF_2OCF_2CF(CF_3)OCF_2COOM$;

$CF_2ClCF(CF_3)OCF (CF_3)CF_2OCF_2COOM$;

and

$CF_2ClCF(CF_3)OCF_2CF(CF_3)OCF_2COOM$,

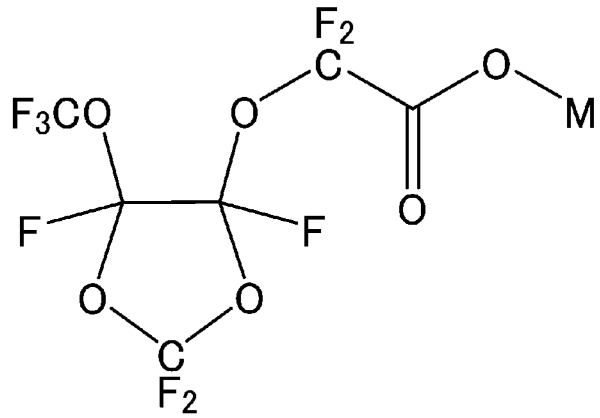

wherein M is H, a metal atom, $NR^7_4$, imidazolium optionally having a substituent, pyridinium optionally having a substituent, or phosphonium optionally having a substituent, and $R^7$ is H or an organic group.

In the present disclosure, the term "substantially free from the compounds represented by the above formulas" means that the content of the compounds represented by the above formulas in the coating material composition is, in total, 10 ppm by mass or less, and it is preferably 1 ppm by mass or less, more preferably 100 ppb by mass or less, still more preferably 10 ppb by mass or less, further preferably 1 ppb by mass or less, and particularly preferably equal to or less than the detection limit as measured by liquid chromatography-mass spectrometry (LC/MS).

<Film forming agent>

In one embodiment of the coating material composition of the present disclosure, it comprises a film forming agent. In the case where the coating material composition comprises a film forming agent, occurrence of cracks in the resulting coating film at the time of drying can be suppressed, and the processing workability is excellent.

Examples of the film forming agent include an acrylic resin such as a depolymerizable acrylic resin, a urethane resin, a polyethylene glycol, and a polypropylene glycol.

When the coating material composition of the present disclosure is applied, dried, and then sintered, the depolymerizable acrylic resin is gradually decomposed while maintaining the binder effect on the fluororesin, thus preventing the occurrence of cracks.

In one embodiment of the composition of the present disclosure, it comprises the depolymerizable acrylic resin along with the PTFE. It is preferable that the depolymerizable acrylic resin be one that remains until the temperature at which the PTFE initiates melting (melting temperature) even if depolymerization begins at or below the melting point of the PTFE, and is decomposed and volatilized at the sintering (processing) temperature. For example, preferred is one that remains by 5% or more, in particular 10% or more, and at least 50%, preferably at least 20%, at the melting temperature of the PTFE (usually 240 to 345°C), and only remains by 10% or less, in particular 5% or less, at the sintering (processing) temperature (usually higher than the melting temperature of the PTFE and up to 415°C, preferably 360 to 400°C) and does not substantially remain when the sintering is completed. From this viewpoint, it is desirable that the depolymerization (decomposition) temperature of the depolymerizable acrylic resin be about 200°C or higher and lower than the sintering (processing) temperature. In particular, regardless of the type of resin, a depolymerizable acrylic resin that remains by about 25 to 50% in the temperature range of 300 to 320°C and remains by about 20 to 10% in the temperature range of 330 to 345°C is suitable from the viewpoint of balance between the action of preventing shrinkage

cracks and the action of preventing coloration, and any depolymerizable acrylic resin that satisfies the above conditions can be used.

As for depolymerizability, in general, the more branches in the polymerized chain, the weaker C-C bonds and C-H bonds become and the easier it is for the polymer to undergo oxidative decomposition and be depolymerized, as described in "Polym. Eng. Soi., Vol. 6, p. 273 (1966)", "Plast. Massy., Vol. 75, p. 48 (1971)", and "Degradation of High Molecular Materials", Corona Publishing Co., Ltd., p. 144 (1958). Examples of the depolymerizable acrylic resin include a methacrylate resin, and specifically, preferred examples thereof include a methacrylate-based homopolymer or copolymer that requires a methacrylate-based monomer represented by the formula (5):

$$CH_2{=}C(CH_3)COOR \qquad (5)$$

wherein R is an alkyl group or hydroxyalkyl group having 1 to 5 carbon atoms. As specific examples of the methacrylate-based monomer, for example, methyl methacrylate, ethyl methacrylate, propyl methacrylate, dimethylpropyl methacrylate, butyl methacrylate, and pentyl methacrylate are preferably employed. Of these, preferred is a depolymerizable acrylic resin using butyl methacrylate as a monomer from the viewpoint of a low glass transition temperature and good depolymerizability (decomposability).

In addition, although there is no problem if a stable emulsion can be formed with a homopolymer, from the viewpoint of stabilizing the emulsion, a monomer having a carboxyl group or a hydroxyl group may be used as a comonomer as appropriate.

As the depolymerizable acrylic resin, for example, fine particles produced by a method such as emulsion polymerization (depolymerizable acrylic resin emulsion) can be used as they are, and it is preferable that their average particle size be 0.1 to 100 μm, and in particular, 0.2 to 1 μm. Fine particles with an average particle size of less than 0.1 μm tend to easily cause mud cracks, while those with an average particle size of greater than 100 μm tend to be more difficult to coat.

In the first coating material composition of the present disclosure, the content of the depolymerizable acrylic resin is preferably 5 to 25 parts, more preferably 7 to 20 parts, and still more preferably 10 to 15 parts based on 100 parts of the fluororesin from the viewpoint of film formability and prevention of coloration of the coating film.

In the second coating material composition and the third coating material composition of the present disclosure, the content of the depolymerizable acrylic resin is preferably 5 to 25 parts, more preferably 7 to 20 parts, and still more preferably 10 to 15 parts based on 100 parts of the PTFE from the viewpoint of film formability and prevention of coloration of the coating film.

It is preferable to mix the depolymerizable acrylic resin with other components in the form of an emulsion.

<Binder resin>

In one embodiment of the coating material composition of the present disclosure, it comprises a binder resin. When the coating material composition comprises a binder resin, it can provide a coating film that is excellent in adhesion to the substrate. The binder resin improves the coating film hardness of the resulting coating film and exerts an effect of improving the gloss.

Examples of the binder resin include a polyamideimide (PAI), a polyimide (PI), a polyethersulfone (PES), a polyarylene sulfide (PAS), a polyetherimide, a polyetheretherketone, and an aromatic polyester. The binder resin may be used alone as one kind, or two or more kinds may be used in combination.

The PAI is a resin composed of a polymer having an amide bond and an imide bond in the molecular structure. Although the PAI is not limited, examples thereof include a resin composed of a high molecular weight polymer obtained by reactions such as: a reaction between an aromatic diamine having an amide bond in the molecule and an aromatic tetravalent carboxylic acid such as pyromellitic acid; a reaction between an aromatic trivalent carboxylic acid such as trimellitic anhydride and a diamine such as 4,4-diaminophenyl ether or a diisocyanate such as diphenylmethane diisocyanate; and a reaction between a dibasic acid having an aromatic imido ring in the molecule and a diamine. It is preferable that the PAI be composed of a polymer having an aromatic ring in the main chain from the viewpoint of excellent heat resistance.

The PI is a resin composed of a polymer having an imide bond in the molecular structure. Although the PI is not limited, examples thereof include a resin composed of a high molecular weight polymer obtained by, for example, a reaction of an aromatic tetravalent carboxylic anhydride such as pyromellitic anhydride. It is preferable that the PI be composed of a polymer having an aromatic ring in the main chain from the viewpoint of excellent heat resistance.

The PES is a resin composed of a polymer having a repeating unit represented by the following general formula:

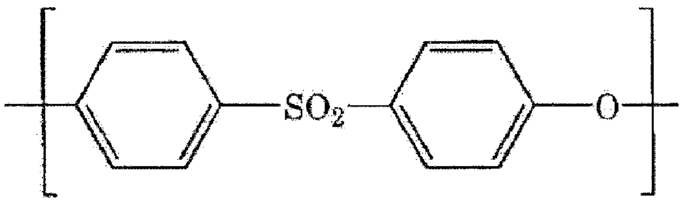

Although the PES is not limited, examples thereof include a resin composed of a polymer obtained by polycondensation of dichlorodiphenyl sulfone and bisphenol.

The PAS is a resin composed of a polymer having a repeating unit represented by the general formula -[Ar-S]-, wherein Ar represents an arylene group. Although the above PAS is not limited, examples thereof include polyphenylene sulfide (PPS).

The binder resin is preferably at least one selected from the group consisting of the PAI, the PI, the PES, and the PPS, and more preferably the PAI, since they can provide a coating film that is further excellent in adhesion to the substrate. Also, from the viewpoint of being able to suppress coloration at the time of sintering and to enhance the degree of freedom of color tone of the coating film, the binder resin is preferably the PES. It is also one suitable embodiment to use a combination of the PAI and the PES as the binder resin.

In the coating material composition of the present disclosure, the content of the binder resin is preferably 5% by mass or more, and more preferably 8% by mass or more, and it is preferably 15% by mass or less, and more preferably 12% by mass or less, based on the coating material composition. When the content of the binder resin is within the above range, it is possible to provide a coating film that is further excellent in adhesion to the substrate.

In the first coating material composition of the present disclosure, the mass ratio of the fluororesin to the binder resin (fluororesin/binder resin) is preferably 90/10 to 50/50, more preferably 85/15 to 60/40, and still more preferably 80/20 to 70/30. When the mass ratio of the fluororesin to the binder resin is within the above range, it is possible to provide a coating film that is further excellent in adhesion to the substrate.

In the second coating material composition and the third coating material composition of the present disclosure, the mass ratio of the PTFE to the binder resin (PTFE/binder resin) is preferably 90/10 to 50/50, more preferably 85/15 to 60/40, and still more preferably 80/20 to 70/30. When the mass ratio of the PTFE to the binder resin is within the above range, it is possible to provide a coating film that is further excellent in adhesion to the substrate.

The coating material composition of the present disclosure may comprise other components. Examples of the other components include a preservative, a water-soluble polymer compound, a pigment, a filler, an antifoaming agent, a drying agent, a thickener, an organic solvent, a leveling agent, a cissing preventive agent, a dispersant, an antifreezing agent, a solid lubricant, an antisettling agent, a moisture absorber, a surface conditioning agent, a thixotropy imparting agent, a viscosity regulating agent, an antigelation agent, an ultraviolet absorber, a HALS (light stabilizer), a matting agent, a plasticizer, an antiflooding agent, an antiskinning agent, an antiscratch agent, a rust preventive agent, an antifungal agent, an antibacterial agent, an antioxidant, a flame retarder, an antisagging agent, an antistatic agent, a silane coupling agent, various strengthening materials, various bulking materials, an electrically conductive filler, and a colloidal silica.

If the coating material composition of the present disclosure comprises a preservative, even when the coating material composition is stored for a long period of time, putrefaction of the coating material composition and growth of bacteria can be suppressed.

Examples of the preservative include an isothiazolone-based preservative, an azole-based preservative, pronopol, chlorothalonil, methylsulfonyltetrachloropyridine, carbendazim, fluoroforbet, sodium diacetate, and diiodomethyl-p-tolylsulfone.

The content of the preservative in the first coating material composition of the present disclosure is preferably 0.01 to 0.5% by mass and more preferably 0.05 to 0.2% by mass based on the fluororesin. The content of the preservative in the second coating material composition and the third coating material composition of the present disclosure is preferably 0.01 to 0.5% by mass and more preferably 0.05 to 0.2% by mass based on the PTFE.

Examples of the water-soluble polymer compound include a methyl cellulose, an alumina sol, a polyvinyl alcohol, a carboxylated vinyl polymer, a polyethylene oxide (dispersion stabilizer), a polyethylene glycol (dispersion stabilizer), a polyvinylpyrrolidone (dispersion stabilizer), a phenolic resin, a urea resin, an epoxy resin, a melamine resin, a polyester resin, a polyether resin, an acrylic silicone resin, a silicone resin, a silicone polyester resin, and a polyurethane resin.

The pigment can be any of various pigments conventionally known, and examples thereof include titanium oxide, carbon black, Bengala, and extender pigment. In the coating material composition of the present disclosure, the content of the pigment is preferably 0.1 to 20.0% by mass and more preferably 1 to 10% by mass based on the coating

material composition.

Examples of the filler include an inorganic filler, diamond, fluorinated diamond, and carbon black.

Examples of the inorganic filler include a pigment, as well as mica particles, pigment-coated mica particles, titanium-coated mica, inorganic nitrides, carbides, borides, and oxides of zirconium, tantalum, titanium, tungsten, silicon, aluminum, or beryllium (specifically, aluminum oxide, silicon carbide, zirconium oxide, zirconium carbide, and others), metal flakes, metal powder, clay, talc, tourmaline, jade, germanium, corundum, silica stone, chrysoberyl, topaz, beryl, garnet, quartz, garnet, barium sulfate, and glass.

The inorganic filler imparts a function of improving abrasion resistance, and is preferably mica from the viewpoint of providing aesthetics. The particle size of mica particles is 10 to 100 μm, and is preferably 15 to 50 μm. A particle size of less than 10 μm tends to decrease abrasion resistance and glitteriness, while a particle size of greater than 100 μm tends to decrease non-stickiness. Pigment-coated mica particles are obtained by, for example, attaching a pigment such as $TiO_2 \cdot Fe_2O_3$ to the mica particles by the sintering deposition method or the like.

Examples of the metal flakes include flakes of titanium, zirconium, aluminum, zinc, antimony, tin, iron, nickel, and others, but titanium and zirconium are preferred from the viewpoint of being difficult to be rusted. Their size can be in the range of sizes usually used for coating materials.

Examples of the metal powder include powder of gold, silver, copper, platinum, stainless steel, and others.

The antifoaming agent can be any of those for aqueous use, and examples thereof include: a lower alcohol such as methanol, ethanol, and butanol; a higher alcohol such as amyl alcohol, polypropylene glycol, and derivatives thereof; an oil and fat such as oleic acid, tall oil, mineral oil, and soap; a surfactant such as sorbitan fatty acid ester, polyethylene glycol fatty acid ester, and pluronic-type nonionic surfactant; and a silicone-based surfactant such as siloxane and silicone resin. They are used alone or in combination. Representative examples of commercially available products of the antifoaming agent include: B-series such as Adekanate B and Adekanate B1068 (manufactured by Asahi Denka Co., Ltd.); SN Deformer series such as Foamaster DL, Nopco NXZ, SN Defoamer 113, 325, 308, and 368; DEHYDRAN 1293, DEHYDRAN 1513 (manufactured by San Nopco Ltd.); FLOWNON SB-110N, SB-210, 510, 551, AQUALEN 800, 805, AQUALEN 1488 (manufactured by Kyoeisha Chemical Co., Ltd.); SURFYNOL 104E, 440 (acetylene-based antifoaming agent manufactured by Air Products and Chemicals, Inc.); KS-607A (manufactured by Shin-Etsu Chemical Co., Ltd.); FS ANTIFOAM (available from Dow Corning Corp.); BYK-020, 031, 073, W (manufactured by BYK Chemie); DEHYDRAN 981 (manufactured by Henkel Hakusui Corporation); EPAN-410, 710, 720 (manufactured by Dai-ichi Kogyo Seiyaku Co., Ltd.); Tego Foamex Series (manufactured by Tego Goldschmidt); and FOAMLEX-747, TY-10, EP series (manufactured by Nicca Chemical Co., Ltd.). The content of the antifoaming agent in the coating material composition is preferably 0.01 to 10% by mass, and more preferably 0.05 to 5% by mass.

Examples of the drying agent include cobalt oxide.

Examples of the thickener include a methyl cellulose, a polyvinyl alcohol, and a carboxylated vinyl polymer. In the coating material composition of the present disclosure, the content of the thickener is preferably 0.1 to 20.0% by mass and more preferably 0.5 to 10% by mass.

Examples of the organic solvent include a high boiling point polyhydric alcohol. The high boiling point polyhydric alcohol can prevent occurrence of mud cracks when applying the coating material composition of the present disclosure and then drying it.

The high boiling point polyhydric alcohol (hereinafter, this is referred to as the polyhydric alcohol) has two or more hydroxy groups and a boiling point of 100°C or higher. Polyhydric alcohols containing a nitrogen atom are not preferred since they cause coloration due to pyrolysis at the time of sintering. The preferred high boiling point polyhydric alcohol has a boiling point at or above the drying temperature of the coating material composition, even at 150°C or higher, and in particular at 200°C or higher. The preferred number of hydroxy groups of the polyhydric alcohol is 2 to 3. Substances with one or zero hydroxy groups and a boiling point of 100°C or higher have poor hydrophilicity, and therefore, uniform mixing is difficult. Many of those with four or more hydroxy groups are solid at room temperature and it is difficult to expect them to be effective in preventing mud cracks.

The polyhydric alcohol must be eventually fully evaporated or fully decomposed and volatilized by heating at the time of sintering, which will be described later. Accordingly, the polyhydric alcohol is preferably one whose boiling point or pyrolysis temperature is at or below the melting temperature of the fluororesin or PTFE that the coating material composition comprises, preferably at or below 340°C.

Suitable examples of the polyhydric alcohol include one kind or two or more kinds among ethylene glycol (boiling point: 198°C), 1,2-propanediol (boiling point: 188°C), 1,3-propanediol (boiling point: 214°C), 1,2-butanediol (boiling point: 190°C), 1,3-butanediol (boiling point: 208°C), 1,4-butanediol (boiling point: 229°C), 1,5-pentanediol (boiling point: 242°C), 2-butene-1,4-diol (boiling point: 235°C), glycerin (boiling point: 290°C), 2-ethyl-2-hydroxymethyl-1,3-propanediol (boiling point: 295°C), and 1,2,6-hexanetriol (boiling point: 178°C/under pressure of 5 mmHg). Of these, glycerin is preferred.

In the first coating material composition of the present disclosure, the content of the polyhydric alcohol is generally 5 to 18% by mass, preferably 7 to 15% by mass, and particularly preferably 7 to 12% by mass, based on the fluororesin. In the second coating material composition and the third coating material composition of the present disclosure, the content of the polyhydric alcohol is generally 5 to 18% by mass, preferably 7 to 15% by mass, and particularly preferably 7 to 12% by mass, based on the PTFE. The content of the polyhydric alcohol being within the above range can prevent occurrence of mud cracks while preventing coloration of the resulting coating film.

In addition, an organic solvent other than the high boiling point polyhydric alcohol may be compounded, if necessary, to the extent that the effects of the present disclosure are not impaired. Examples of such an organic solvent include an aromatic hydrocarbon-based solvent such as toluene and xylene, and an aliphatic hydrocarbon-based solvent having 9 to 11 carbon atoms.

<Method for producing coating material composition>

The first coating material composition of the present disclosure can be suitably produced by, for example, a production method comprising polymerizing a fluoromonomer in an aqueous medium in the presence of a polymer (I) to obtain a polymerization dispersion containing a fluororesin, the polymer (I), and the aqueous medium, and concentrating the polymerization dispersion by phase separation and concentration to obtain a concentrated composition.

As the method for polymerizing a fluoromonomer in an aqueous medium in the presence of a polymer (I), conventionally known methods can be employed, and for example, the methods described in International Publication No. WO 2019/168183 or International Publication No. WO 2020/218620 can be employed.

It is preferable that the polymerization be carried out in the absence of a fluorine-containing surfactant. In the present disclosure, the term "substantially in the absence of a fluorine-containing surfactant" means that the amount of the fluorine-containing surfactant is 10 ppm by mass or less, preferably 1 ppm by mass or less, more preferably 100 ppb by mass or less, still more preferably 10 ppb by mass or less, and further preferably 1 ppb by mass or less, based on the aqueous medium.

After obtaining a polymerization dispersion containing a fluororesin, the polymer (I), and the aqueous medium, the polymerization dispersion is concentrated by phase separation and concentration. By carrying out the phase separation and concentration, the content of the polymer (I) in the coating material composition of the present disclosure can be adjusted to the suitable range described above.

The phase separation and concentration can be carried out by heating the polymerization dispersion containing the fluororesin, the polymer (I), and the aqueous medium to cause phase separation into the fluororesin-free phase (supernatant phase) and the fluororesin-containing phase (condensed phase), removing the fluororesin-free phase, and recovering the fluororesin-containing phase (condensed phase).

A composition comprising the fluororesin, the polymer (I), the nonionic surfactant, and the aqueous medium may be prepared by mixing the polymerization dispersion and the nonionic surfactant before the phase separation and concentration, and the resulting composition may then be subjected to the phase separation and concentration. In this case, the phase separation and concentration can be carried out by heating the composition to a temperature equal to or higher than a temperature lower by 10°C than the cloud point of the nonionic surfactant to phase-separate the composition into the supernatant phase and the condensed phase, and recovering the condensed phase to obtain the concentrated composition. The nonionic surfactant used in this case can be any of those mentioned above, and it is preferably at least one selected from the group consisting of the nonionic surfactant represented by the general formula (i) and the nonionic surfactant represented by the general formula (ii), and more preferably the nonionic surfactant represented by the general formula (i). In addition, a polyoxyethylene alkyl ether is suitable as the nonionic surfactant.

The recovered fluororesin-containing phase (condensed phase) contains the fluororesin and the aqueous medium, and also contains the polymer (I) whose content is lower than that before the concentration.

The phase separation and concentration may be carried out by allowing to stand still at a temperature equal to or higher than a temperature lower by 10°C than the cloud point of the nonionic surfactant. In addition, the phase separation and concentration may be carried out by allowing to stand still at a temperature equal to or lower than a temperature higher by 10°C than the cloud point.

It is also preferable to repeat the phase separation and concentration. The number of repetitions is not limited, but it is preferably 2 or more, and more preferably 3 or more. The upper limit of the number of times is not limited, but it may be 10 times or less, for example. By repeating the phase separation and concentration, the content of the polymer (I) can be further reduced.

In the case where the phase separation and concentration is repeated two or more times, the first phase separation and concentration is preferably performed by heating the composition to a temperature equal to or higher than a temperature lower by 5°C than the cloud point of the nonionic surfactant and then allowing to stand still to separate into the supernatant phase and the condensed phase. The above heating temperature is more preferably a temperature equal to or higher than a temperature lower by 3°C than the cloud point, still more preferably the cloud point or higher, and particularly preferably the heating temperature exceeds the cloud point. Also, the second or subsequent phase separation and concentration is preferably performed by heating the composition to a temperature equal to or higher than a temperature lower by 5°C than the cloud point of the nonionic surfactant and then allowing to stand still to separate

into the supernatant phase and the condensed phase. The above heating temperature is more preferably a temperature equal to or higher than a temperature lower by 3°C than the cloud point, and particularly preferably heating to the cloud point.

After the phase separation and concentration, the concentrated composition may be mixed with an anionic hydrocarbon-based surfactant. By adding an anionic surfactant to the concentrated composition, even in the case where the coating material composition comprises a large amount of the fluororesin, it is possible to appropriately adjust the viscosity of the coating material composition or improve the miscibility of a pigment, filler, or the like.

After the phase separation and concentration, a nonionic surfactant may be further added to the concentrated composition and mixed together. By further adding a nonionic surfactant to the concentrated composition, even in the case where the coating material composition comprises a large amount of the fluororesin, it is possible to appropriately adjust the viscosity of the coating material composition or improve the miscibility of a pigment, filler, or the like. The nonionic surfactant used in this case can be any of those mentioned above, and it is preferably at least one selected from the group consisting of the nonionic surfactant represented by the general formula (i) and the nonionic surfactant represented by the general formula (ii), and more preferably the nonionic surfactant represented by the general formula (i). Also, a polyoxyethylene alkyl ether is suitable as the nonionic surfactant.

A fluorine-containing compound containing a hydrophilic group may be added to the polymerization dispersion or the concentrated composition, but it is preferable not to add it to any of them.

The coating material composition of the present disclosure can be produced by mixing the concentrated composition with various components such as a film forming agent, a binder resin, and other components to be compounded if necessary. Alternatively, two or more aqueous dispersions may be produced by the above method and mixed together. The method for mixing each component is not limited, and a conventionally known method can be used. The order in which each component is mixed is not limited either.

The second coating material composition of the present disclosure can be suitably produced by a production method comprising polymerizing TFE in an aqueous medium in the presence of a polymer (I) to obtain a polymerization dispersion containing a PTFE, the polymer (I), and the aqueous medium, and concentrating the polymerization dispersion by repeating phase separation and concentration two or more times to obtain a concentrated composition. Such a production method can provide the second coating material composition of the present disclosure, which is excellent in the agglomeration suppressing property at the time of stirring.

The step of obtaining the polymerization dispersion can have the configuration described above, except that TFE is used as the fluoromonomer and the PTFE is obtained as the fluororesin in the above-described step of polymerizing the fluoromonomer in the aqueous medium in the presence of the polymer (I) to obtain the polymerization dispersion containing the fluororesin, the polymer (I), and the aqueous medium.

The viscosity of the concentrated composition is adjusted if necessary. Examples of the method for adjusting the viscosity include the above-described method in which the concentrated composition is mixed with an anionic hydrocarbon-based surfactant, and the method in which a nonionic surfactant is further added to the concentrated composition and mixed together.

The third coating material composition of the present disclosure can be suitably produced by, for example, a production method comprising polymerizing TFE in an aqueous medium in the presence of a polymer (I) containing a polymerization unit (I) derived from a monomer represented by the general formula (I) to obtain a polymerization dispersion containing a PTFE, the polymer (I), and the aqueous medium; mixing the polymerization dispersion with a nonionic surfactant to obtain a composition comprising the PTFE, the polymer (I), the nonionic surfactant, and the aqueous medium; concentrating the composition by phase separation and concentration to obtain a concentrated composition; and adding an anionic hydrocarbon-based surfactant to the concentrated composition.

The step of obtaining the polymerization dispersion can have the above-described configuration, except that TFE is used as the fluoromonomer and the PTFE is obtained as the fluororesin in the above-described step of polymerizing the fluoromonomer in the aqueous medium in the presence of the polymer (I) to obtain the polymerization dispersion containing the fluororesin, the polymer (I), and the aqueous medium.

As the anionic hydrocarbon-based surfactant, those described above as the anionic hydrocarbon-based surfactant that the third coating material composition of the present disclosure can comprise can be suitably used.

The mixing ratio of the concentrated composition and the anionic hydrocarbon-based surfactant is not limited, but it is preferable to mix the concentrated composition and the anionic hydrocarbon-based surfactant at a ratio such that a suitable content of the anionic hydrocarbon-based surfactant in the third coating material composition of the present disclosure is obtained.

Upon producing the third coating material composition of the present disclosure, it is preferable to carry out the polymerization in the absence of a fluorine-containing surfactant, and not to add a fluorine-containing compound containing a hydrophilic group to the polymerization dispersion or the concentrated composition.

The coating material composition of the present disclosure can be applied as a covering material for products that requires heat resistance, non-stickiness, lubricity, and other properties on the surface of the substrate. Examples

of the product comprising such a covering material include the coated article, which will be described later.

<Coating film>

By applying the coating material composition of the present disclosure on the substrate, a coating film can be formed. The present disclosure also relates to a coating film obtained by applying the coating material composition of the present disclosure.

Since the coating film of the present disclosure is obtained by applying the coating material composition of the present disclosure, it contains the fluororesin or PTFE.

The coating film of the present disclosure may contain the components described above as the other components in the coating material composition of the present disclosure, such as binder resin, pigment, and inorganic filler, if necessary.

It is preferable that the coating film have a film thickness of 1 to 100 μm. The above film thickness is more preferably 10 μm or more, and it is more preferably 50 μm or less.

The method for obtaining the coating film of the present disclosure is not limited, and examples thereof include a method for applying the coating material composition of the present disclosure on the substrate by spray coating, roll coating, coating with a doctor blade, dip (dipping) coating, impregnation coating, spin-flow coating, curtain-flow coating, and other methods. Of these, spray coating is preferred.

It is preferable that, after applying the coating material composition of the present disclosure on the substrate, the coating material composition be dried and sintered. It is preferable to carry out the drying at a temperature of 80 to 200°C for 5 to 30 minutes. It is also preferable to carry out the sintering at a temperature of 300 to 400°C for 10 to 90 minutes.

Characters, drawings, and the like may be printed on the coating film. The method for printing is not limited, and examples thereof include pat transfer printing. The printing ink used for printing is not limited, and examples thereof include a composition composed of a PES, a TFE homopolymer, and titanium oxide.

<Laminated product>

The present disclosure also relates to a laminated product comprising the coating film of the present disclosure.

It is preferable that the laminated product of the present disclosure further comprise a substrate. The coating film may be provided directly on the substrate or may be provided on the substrate via another layer. In addition, another layer may be provided on the coating film.

It is also preferable that the laminated product comprise two or more layers of the coating film. For example, the laminated product may comprise a substrate, a primer layer formed on the substrate, and a topcoat layer formed on the primer layer. Alternatively, the laminated product may comprise a substrate, a primer layer formed on the substrate, an intermediate layer formed on the primer layer, and a topcoat layer formed on the intermediate layer. The above intermediate layer can also be two or more layers.

In the case where the laminated product comprises two or more layers of the coating film, it is sufficient if any one or more layers among the primer layer, the intermediate layer, and the topcoat layer is the coating film of the present disclosure. In the case where the laminated product comprise two or more layers of the coating film of the present disclosure, the two or more layers of the coating film may have the same compositional features or may have different compositional features.

It is also preferable that the laminated product further comprise layers other than the substrate and the coating film. These layers are usually provided between the substrate and the coating film.

The material of the substrate is not limited, and examples thereof include a metal including a metal simple substance such as iron, aluminum, stainless steel, and copper, and an alloy thereof, as well as a non-metallic inorganic material such as enamel, glass, and ceramic. Examples of the alloy include stainless steel.

The substrate may undergo surface treatment such as degreasing treatment and roughening treatment, if necessary. The roughening method is not limited, and examples thereof include chemical etching with an acid or alkali, anodic oxidation (alumite treatment), and sandblasting. The surface treatment may be selected as appropriate depending on the type of substrate, coating material composition for primer, and other materials, for example, from the viewpoints that the coating material composition for primer for forming the primer layer can be applied uniformly without causing cissing and that the adhesion between the substrate and the primer layer can be improved. It is preferable that the surface treatment be sandblasting.

The substrate may have undergone degreasing treatment, in which impurities such as oil are thermally decomposed and removed by baking at 380°C. It is preferable to use an aluminum substrate that has undergone roughening treatment using an alumina abrasive after surface treatment in order to improve the adhesion between the substrate and the coating film.

In one embodiment of the laminated product of the present disclosure, the primer layer or the intermediate

layer is the coating film of the present disclosure. In the case where the primer layer or the intermediate layer is the coating film of the present disclosure, the topcoat layer may be the coating film of the present disclosure or may be a coating film other than the coating film of the present disclosure.

Alternatively, in another embodiment of the laminated product of the present disclosure, the topcoat layer is the coating film of the present disclosure. In the case where the topcoat layer is the coating film of the present disclosure, the primer layer and the intermediate layer may be the coating film of the present disclosure or may be a coating film other than the coating film of the present disclosure.

It is preferable that the primer layer contain a binder resin. The preferred binder resin is the same as the binder resin that the coating material composition of the present disclosure can comprise.

The content of the binder resin is preferably 10 to 50% by mass of the primer layer, and more preferably 15% by mass or more, and it is more preferably 40% by mass or less, and still more preferably 30% by mass or less.

The primer layer may contain components other than the binder resin. The components other than the binder resin are not limited, and examples thereof include a fluororesin and the various components exemplified as other components. The components other than the binder resin contained in the primer layer are preferably a fluororesin (in particular, PTFE), a pigment, and an inorganic filler.

The primer layer preferably has a thickness of 1 to 40 μm, and more preferably 5 to 35 μm. When the thickness is too thin, the anchoring effect on the primer surface cannot be expected and pinholes easily occur, which may reduce the corrosion resistance of the laminated product. When the thickness is too thick, coating film defects such as cracks or swelling easily occur, and the laminated product may have reduced abrasion resistance, reduced hardness, and reduced corrosion resistance. The further preferred upper limit of the thickness of the primer layer is 30 μm, and the particularly preferred upper limit is 25 μm.

The primer layer is obtained by, for example, applying a composition for primer to the substrate, drying if necessary, and then sintering. The method for applying the composition for primer to be used can be the method described above as the method for applying the coating material composition of the present disclosure onto the substrate. As for the drying and sintering conditions of the composition for primer, the conditions described above as the drying and sintering conditions of the coating material composition of the present disclosure can be employed.

The composition for primer is preferably a composition comprising a binder resin and an aqueous medium, and more preferably a composition comprising a binder resin, a fluororesin (in particular, PTFE), and an aqueous medium.

It is preferable that the intermediate layer contain a fluororesin. Examples of the fluororesin include a PTFE and those described above as the fluororesin other than the PTFE, and the PTFE is suitable.

It is preferable that the content of the fluororesin be 60 to 100% by mass based on the entire mass of the intermediate layer. It is more preferably 65 to 100% by mass, and still more preferably 70 to 100% by mass. The use of the fluororesin in the above range can improve the adhesion between the intermediate layer and the coating film adjacent to the intermediate layer.

The intermediate layer may contain components other than the fluororesin. The components other than the fluororesin to be used are not limited, and can be, for example, the additives exemplified as other components in the coating material composition of the present disclosure. The components other than the fluororesin contained in the intermediate layer are preferably a binder resin, a pigment, and an inorganic filler. The content of the inorganic filler is preferably 0.1 to 30% by mass of the intermediate layer, and it is more preferably 20% by mass or less and more preferably 1% by mass or more.

The intermediate layer preferably has a thickness of 5 to 30 μm, and more preferably 10 to 25 μm.

The intermediate layer is obtained by, for example, applying a composition for intermediate onto the primer layer, drying if necessary, and sintering. In the case where there are two or more intermediate layers, the two or more intermediate layers can be formed by applying a composition for intermediate for forming each intermediate layer successively, drying if necessary, and sintering. The method for applying the composition for intermediate to be used can be the method described above as the method for applying the coating material composition of the present disclosure onto the substrate. As for the drying and sintering conditions of the composition for intermediate, the conditions described above as the drying and sintering conditions of the coating material composition of the present disclosure can be employed.

The composition for intermediate is preferably a composition comprising a fluororesin and an aqueous medium, and more preferably a composition comprising a binder resin, a fluororesin, and an aqueous medium.

The topcoat layer preferably contains a fluororesin, and more preferably contains a PTFE. The fluororesin and PTFE are suitably those described above as the fluororesin and PTFE that the coating material composition of the present disclosure can comprise.

The content of the fluororesin is preferably 70 to 100% by mass, more preferably 75 to 100% by mass, and still more preferably 80 to 100% by mass based on the entire mass of the topcoat layer. The use of the fluororesin in the above range can improve the non-stickiness of the topcoat layer surface.

The topcoat layer may contain components other than the fluororesin. The components other than the fluororesin

to be used are not limited, and can be, for example, the additives exemplified as other components in the coating material composition of the present disclosure, for example. The components other than the fluororesin contained in the topcoat layer are preferably an inorganic filler.

It is preferable that the inorganic filler have an average particle size of 14 μm or more. The average particle size of the inorganic filler is more preferably 16 μm or more, and still more preferably 20 μm or more. The average particle size of the inorganic filler being within the above range can improve the abrasion resistance of the topcoat layer. From the viewpoint of further improving the abrasion resistance of the topcoat layer, it is preferable that the inorganic filler protrude from the topcoat layer. The average particle size of the inorganic filler is calculated from the particle size distribution obtained by measurement with a laser diffraction/scattering particle size and particle size distribution measurement apparatus (Microtrac MT3300II manufactured by Nikkiso Co., Ltd.; medium: pure water; temperature: room temperature).

Although the amount of the inorganic filler compounded can be adjusted depending on the type, hardness, and other properties of the inorganic filler, the abrasion resistance of the topcoat layer can be usually improved by using in the range of 2 to 10% by mass of the fluororesin.

The topcoat layer preferably has a thickness of 10 to 40 μm. When the thickness is too thin, the resulting laminated product may not have sufficient non-stickiness, durability, or corrosion resistance. When the thickness is too thick, coating film defects such as cracks or swelling easily occur. The more preferred lower limit of the thickness of the topcoat layer is 15 μm or more, and the still more preferred lower limit is 18 μm or more. In addition, the more preferred upper limit is 30 μm or less, and the still more preferred upper limit is 25 μm or less.

The topcoat layer is obtained by, for example, applying a composition for topcoat to the primer layer or the intermediate layer, drying if necessary, and then sintering. In the case where the laminated product of the present disclosure comprises an intermediate layer, it is preferable to obtain it by applying a composition for intermediate onto the primer layer, drying if necessary, then applying a composition for topcoat onto it, drying if necessary, and sintering. This is because such a method allows the intermediate layer and topcoat layer to be sintered at the same time, resulting in excellent production efficiency. The method for applying the composition for topcoat to be used can be the method described above as the method for applying the coating material composition of the present disclosure onto the substrate. As for the drying and sintering conditions of the composition for topcoat, the conditions described above as the drying and sintering conditions of the coating material composition of the present disclosure can be employed.

In the case where the laminated product of the present disclosure comprises a topcoat layer, characters, drawings, and the like may be printed on the top surface of the topcoat layer.

<Coated article>

The coating film of the present disclosure or the laminated product of the present disclosure can also constitute a coated article. The present disclosure also relates to a coated article comprising the coating film of the present disclosure or the laminated product of the present disclosure.

Examples of the coated article include: cooking utensils such as a frying pan, a grill pot, a pressure cooker, various other pots, a rice cooker, a rice cake maker, an oven, a hot plate, a bread baking machine, a kitchen knife, and a gas range; containers for foods and beverages such as an electric pot, and an ice tray; parts for the food industry such as a kneading roll, a rolling roll, a conveyor, and a hopper; industrial products such as a roll for office automation equipment [OA], a belt for OA, a separation jaw for OA, a paper making roll, and a calender roll for film production; metal molds and releases for molding such as a metal mold for molding styrene foam, a mold, and a release plate for producing plywood and decorative boards; kitchenware such as a range hood; frozen food production apparatuses such as a conveyor belt; tools such as a saw, a file, a die, and a gimlet; and household goods such as an iron, scissors, and a knife; metal foils and electric wires; sliding bearings for food processing machines, packaging machines, spinning and weaving machines, and the like; sliding components for cameras and watches; and automobile components such as a pipe, a valve, and a bearing, snow shovels, plows, chutes, ship bottoms, boilers, and industrial containers (in particular, for the semiconductor industry).

Although the embodiments have been described above, it will be understood that a wide variety of modifications can be made in the form and details without departing from the spirit and scope of the claims.

EXAMPLES

Next, embodiments of the present disclosure will be described with reference to Examples, but the present disclosure is not intended to be limited by such Examples.

The numerical values in Examples were measured by the following methods.

<Viscosity>

A B-type viscometer (TVB-10 viscometer manufactured by Toki Sangyo Co., Ltd.) was used, and after setting the liquid temperature of a coating material composition (topcoat coating material composition or primer coating material composition, hereinafter the same) to 25°C, the viscosity thereof was measured at 60 rpm using the rotor No. 2. The average value of two measurements was calculated and used as the measurement value.

<Solid concentration of coating material composition>

In an air dryer, 2 g of a coating material composition was dried under conditions of 100°C for 60 minutes and further sintered under conditions of 380°C for 45 minutes. The proportion of the mass of the heating residue relative to the mass of the coating material composition (2 g), expressed as a percentage, was employed.

<Stability retention time>

A plastic cup with a diameter of 67 mm and an internal volume of 300 ml was filled with 90 g of a sample, immersed in a water bath at 60°C, and a stirring blade with a diameter of 50 mm (Figure 1) was set so that the height from the bottom of the plastic cup to the center of the stirring blade (in the axial direction of Figure 1(b), 6 mm from the lower end of the stirring blade) was 20 mm, and rotated at 3,000 rpm, and the time until the sample was aggregated or solidified and scattered was measured as the stability retention time.

<Content of nonionic surfactant in aqueous dispersion>

The content (N% by mass) of the nonionic surfactant in an aqueous dispersion (any of PTFE aqueous dispersions 1 to 3, A, and B, FEP aqueous dispersions A and B, and PFA aqueous dispersions A and B, hereinafter the same) was calculated according to the expression: $N = [(Y - Z)/Z] \times 100$ (% by mass) from the heating residue (Y g) obtained by heating about 1 g (X g) of a sample in an aluminum cup having a diameter of 5 cm at 110°C for 30 minutes and the heating residue (Z g) obtained by heating the obtained heating residue (Y g) at 300°C for 30 minutes.

<Solid concentration of aqueous dispersion>

The solid concentration (P% by mass) of an aqueous dispersion was calculated according to the expression: $P = [Z/X] \times 100$ (% by mass) from the heating residue (Y g) obtained by heating about 1 g (X g) of an aqueous dispersion in an aluminum cup having a diameter of 5 cm at 110°C for 30 minutes and the heating residue (Z g) obtained by heating the obtained heating residue (Y g) at 300°C for 30 minutes.

<Content of polymer A in aqueous dispersion>

The content of a polymer A in an aqueous dispersion ($T_A$% by mass) based on a fluororesin (PTFE, FEP, or PFA) was calculated from the mass of water and the polymer A added into the reactor in Preparation Examples, and the solid concentration of the obtained aqueous dispersion, using the following expression:

$$T_A = W_D/[(W_W \times P_A/100)/(1 - P_A/100)] \times 100 \text{ (\% by mass)}$$

$W_W$: mass of water added into reactor
$W_D$: mass of polymer A added into reactor
$P_A$: solid concentration of aqueous dispersion.

<Content of polymer A in supernatant phase>

A predetermined amount of sodium trifluoroacetate was added to the supernatant phase, and $^{19}F$ NMR measurement was carried out. From the peak area values of sodium trifluoroacetate and a polymer A, the content of the polymer A in the supernatant phase ($T_S$% by mass) was determined.

<Content of polymer A in aqueous dispersion>

The content of a polymer A in an aqueous dispersion ($T_D$% by mass) based on a fluororesin (PTFE, FEP, or

PFA) was determined according to the following expression:

$$T_D = T_A - W_S \times T_2 / W_A$$

$T_A$ (% by mass): content of polymer A in aqueous dispersion based on fluororesin
$T_S$ (% by mass): content of polymer A in supernatant phase
$W_S$ (g): mass of supernatant phase
$W_A$ (g): mass of fluororesin in aqueous dispersion before concentration

(that is, mass of fluororesin in condensed phase).

<Average primary particle size>

A PTFE aqueous dispersion A was diluted with water to a solid concentration of 0.15% by mass. The transmittance of projected light at 550 nm relative to the unit length of the obtained diluted latex was measured, and the number-reference length average primary particle size was determined by measuring the directional diameter with a transmission electron microscope image. Based on these values, a calibration curve was drawn. Using this calibration curve, the average primary particle size was determined from the measured transmittance of the projected light at 550 nm for each sample.

<Standard specific gravity (SSG)>

Using a sample formed in conformity with ASTM D 4895-89, the SSG was determined by the water replacement method in conformity with ASTM D 792.

<Content of fluorine-containing surfactant>

An aqueous dispersion was weighed into a 100 mL screw tube in an amount equivalent to 1.5 g of fluororesin solids in the aqueous dispersion. Thereafter, water and methanol were added so that, combined with the water contained in the aqueous dispersion, the extraction solvent became 37 g of water/methanol = 10/90% by mass, and the screw tube was shaken well until coagulation occurred. The liquid phase was drawn out and centrifuged at 4,000 rpm for 1 hour, and the supernatant liquid was extracted. For the fluorine-containing surfactant in the extract, measurement was carried out using a liquid chromatograph mass spectrometer (Waters, LC-MS ACQUITY UPLC/TQD). The measurement equipment configuration and LC-MS measurement conditions are shown in Table 1.

[Table 1]

Table 1

| LC unit | | | |
|---|---|---|---|
| Apparatus | Acquity UPLC manufactured by Water | | |
| Column | Acquity UPLC BEH C18 1.7 mm (2.1 × 50 mm) manufactured by Water | | |
| Mobile phase | A $CH_3CN$ | | |
| | B 20mM $CH_3COONH_4/H_2O$ | | |
| | | 0 → 1.5 min | A:B = 10:90 |
| | | 1.5 → 8.5 mm | A:B = 10:90 → A:B = 90:10 Linear gradient |
| | | 8.5 → 0 min | A:B = 90:10 |
| Flow rate | | 0.4 mL/min | |
| Column temperature | 40°C | | |
| Sample injection volume | 5 μL | | |

(continued)

| MS unit | |
|---|---|
| Apparatus | TQ Detecter |
| Measurement method | MRM (Multiple Reaction Monitoring) |
| | Electrospray ionization |
| Ionization method | Negative mode |

The calibration curve used to calculate the fluorine-containing surfactant concentration was determined under the following conditions.

Methanol standard solutions of the fluorine-containing surfactant with five known concentration levels of 1 ng/mL to 100 ng/mL were prepared, and measurement was carried out using a liquid chromatograph mass spectrometer (Waters, LC-MS ACQUITY UPLC/TQD). Using their respective sample concentrations and peak integral values, a and b were determined from the following relational expression (3) using a first-order approximation:

$$A = a \times X + b \quad (3)$$

A: peak area of fluorine-containing surfactant
X: concentration of fluorine-containing surfactant (ng/mL).

The lower limit of quantification is 100 ppb.

The surfactant used in Preparation Examples is as follows.
Surfactant (a): polyoxyethylene alkyl ether ($C_{13}H_{27}$-$(C_2H_4O)_n$-H) (cloud point 60°C)

<Polymer A>

A homopolymer of a monomer A represented by the formula: $CH_2$=CF($CF_2OCFCF_3COONH_4$) (number average molecular weight 140,000, weight average molecular weight 180,000) (hereinafter, this is referred to as the polymer A) was used.

The number average molecular weight and the weight average molecular weight were determined by performing measurement by gel permeation chromatography (GPC) using GPC HLC-8020 manufactured by Tosoh Corporation, using Shodex columns manufactured by SHOWA DENKO K.K. (one GPC KF-801, one GPC KF-802, and two GPC KF-806M connected in series), and allowing tetrahydrofuran (THF) to flow at a flow rate of 1 ml/min as the solvent, and by calculating the molecular weights using monodisperse polystyrene as the standard.

Preparation Example 1 (Preparation of PTFE aqueous dispersion A)

To a reactor made of SUS with an internal volume of 6 L and equipped with a stirrer, 3,448 g of deionized water, 180 g of paraffin wax, and 103 g of a 5.0 mass% aqueous solution of the polymer A were added. Aqueous ammonia was added to adjust the pH to 8.7. Next, the contents of the reactor were suctioned while being heated to 70°C, and, at the same time, the reactor was purged with TFE to remove oxygen in the reactor, and the contents were stirred. After adding 2.4 g of HFP into the reactor and placing 0.01 g of isopropyl alcohol, TFE was added until the pressure reached 0.73 MPaG. 25.1 mg of ammonium persulfate (APS) dissolved in 20 g of deionized water and 537 mg of disuccinic acid peroxide (DSP) were added, and the pressure in the reactor was adjusted to 0.83 MPaG. The total amount of water added into the reactor is 3,580 g. A drop in pressure occurred after injection of the initiator, and the initiation of polymerization was observed. TFE was added to the reactor to keep the pressure constant at 0.78 MPaG. When TFE consumed in the reaction reached about 180 g, the supply of TFE and stirring were stopped. Subsequently, the gas in the reactor was slowly released until the pressure in the reactor reached 0.02 MPaG. Thereafter, TFE was supplied until the pressure in the reactor was 0.78 MPaG, and stirring was started again to continue the reaction. When TFE consumed in the reaction reached about 1,470 g, the supply of TFE was stopped, stirring was stopped, and the reaction was terminated. Thereafter, the reactor was evacuated until the pressure in the reactor reached normal pressure, and the contents were taken out from the reactor and cooled. The supernatant paraffin wax was removed to obtain a PTFE aqueous dispersion 1.

The solid concentration in the PTFE aqueous dispersion 1 was 29.1% by mass, and the average primary particle size thereof was 250 nm. The concentration of the polymer A in the PTFE aqueous dispersion 1 based on the PTFE is 0.35% by mass.

The PTFE aqueous dispersion 1 was diluted with deionized water to have a solid concentration of about 10%

by mass and coagulated under a high-speed stirring condition. The obtained wet powder was dried at 210°C for 18 hours. The SSG of the obtained PTFE powder was 2.201.

After adding 15 parts by mass of the surfactant (a) to the PTFE aqueous dispersion 1 based on 100 parts by mass of the PTFE, water was further added such that the solid concentration became 25%, and the mixture was heated in a thermostatic water bath at 62°C. After confirming that the contents had reached 62°C and allowing them to stand still to initiate concentration, phase separation began to occur (separation into the supernatant phase and the condensed phase). Heating was terminated 360 minutes after the initiation of concentration, and the supernatant phase and the condensed phase were recovered to obtain a supernatant phase 1 and a PTFE aqueous dispersion 2, respectively. In the obtained PTFE aqueous dispersion 2, the solid concentration was 62%, and the content of the surfactant (a) was 3.5% by mass based on the PTFE. In addition, the content of the polymer A in the obtained supernatant phase 1 was 0.10% by mass based on the supernatant phase.

The surfactant (a) was added to the obtained PTFE aqueous dispersion 2 in an amount of 5.5% by mass based on the PTFE, ammonium lauryl sulfate was further added in an amount of 2,000 ppm based on the PTFE, and deionized water and aqueous ammonia were further added to obtain a PTFE aqueous dispersion A.

In the obtained PTFE aqueous dispersion A, the solid concentration was 60.0% by mass, and the content of the surfactant (a) was 5.5% by mass based on the PTFE. The content of the polymer A in the obtained PTFE aqueous dispersion A was 0.12% by mass based on the PTFE and 0.072% by mass based on the PTFE aqueous dispersion.

A sample of the PTFE aqueous dispersion A was weighed at about 5 g, 10 ml of methanol was added, the sample was flowed into a cylindrical filter paper, and Soxhlet extraction was carried out so that the total amount of methanol as an extraction solvent was 100 ml. The obtained extract was concentrated under nitrogen purge as appropriate to obtain an extract. The obtained extract was subjected to LC/MS measurement. Note that the detection limit in the measurement was 5 ppb by mass. Fluorine-containing compounds having a hydrophilic group, including all compounds represented by the following formulas, were not detected:

$F(CF_2)_7COOM$;

$F(CF_2)_5COOM$;

$H(CF_2)_6COOM$;

$H(CF_2)_7COOM$;

$CF_3O(CF_2)_3OCHFCF_2COOM$;

$C_3F_7OCF(CF_3)CF_2OCF(CF_3)COOM$;

$CF_3CF_2CF_2OCF(CF_3)COOM$;

$CF_3CF_2OCF_2CF_2OCF_2COOM$;

$C_2F_5OCF(CF_3)CF_2OCF(CF_3)COOM$;

$CF_3OCF(CF_3)CF_2OCF(CF_3)COOM$;

$CF_2ClCF_2CF_2OCF(CF_3)CF_2OCF_2COOM$;

$CF_2ClCF_2CF_2OCF_2CF(CF_3)OCF_2COOM$;

$CF_2ClCF(CF_3)OCF(CF_3)CF_2OCF_2COOM$;

and

$CF_2ClCF(CF_3)OCF_2CF(CF_3)OCF_2COOM$,

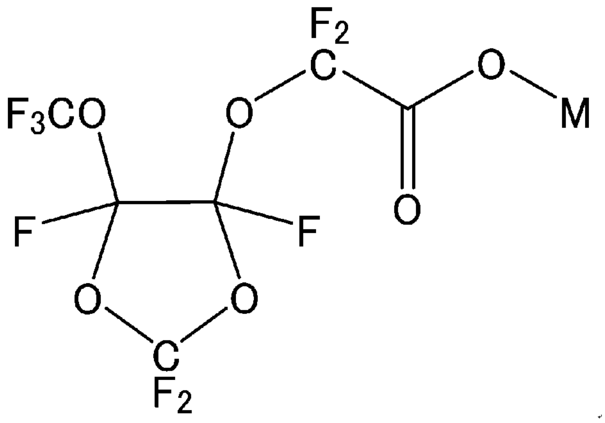

wherein M is H, a metal atom, $NR^7_4$, imidazolium optionally having a substituent, pyridinium optionally having a substituent, or phosphonium optionally having a substituent, and $R^7$ is H or an organic group.

Preparation Example 2 (Preparation of FEP aqueous dispersion A)

An FEP aqueous dispersion was obtained in conformity with Example 24 of International Publication No. WO 2019/168183. Phase separation and concentration was carried out in the same manner as in Preparation Example 1 to obtain an FEP aqueous dispersion A. The obtained FEP aqueous dispersion A had a solid concentration of 54% by mass.

Preparation Example 3 (Preparation of PFA aqueous dispersion A)

A PFA aqueous dispersion was obtained in conformity with Example 22 of International Publication No. WO 2019/168183. Phase separation and concentration was carried out in the same manner as in Preparation Example 1 to obtain a PFA aqueous dispersion A. The obtained PFA aqueous dispersion A had a solid concentration of 50% by mass.

Synthetic Example 1

After purging a 1 L autoclave with nitrogen, 16.5 g of dehydrated tetramethylurea and 220 g of diethylene glycol dimethyl ether were charged and cooled. 38.5 g of carbonyl fluoride was charged, followed by introduction of 100 g of hexafluoropropylene oxide and stirring. Thereafter, 38.5 g of carbonyl fluoride and 100 g of hexafluoropropylene oxide were additionally charged. Thereafter, further charging of carbonyl fluoride and hexafluoropropylene oxide in the same amounts was carried out. After completion of the reaction, the reaction mixture was taken out and separated to obtain the reaction product in the lower layer.

In a 6 L autoclave, 1,000 ml of tetraglyme and CsF (75 g) were placed, and the autoclave was purged with nitrogen. Thereafter, the autoclave was cooled, 2,100 g of the reaction product obtained as described above was charged, and hexafluoropropylene oxide was introduced into the autoclave to initiate the reaction. Finally, 1,510 g of hexafluoropropylene oxide was charged. Thereafter, the contents were drawn out, and separated into the upper layer and the lower layer with a separating funnel. The upper layer was 1,320 g and the lower layer was 3,290 g. The lower layer was rectified and isolated.

Next, to 1,000 g of the isolated target product was hydrolyzed by adding 1,000 g of pure water. Thereafter, separation with a separating funnel was performed to recover the organic layer (lower layer). The recovered solution was washed with aqueous sulfuric acid. The obtained solution was further purified by monodistillation. After the purification, 500 g of the monodistilled product obtained as described above was added dropwise to an aqueous solution formed by mixing the obtained compound, 76 g of a 28 wt% aqueous ammonia solution, and 600 g of pure water. After completion of the dropping, a 28 wt% aqueous ammonia solution was added to adjust the pH to 7. This was freeze-dried to obtain an ammonium salt of a perfluoroethercarboxylic acid A.

Preparation Example 4 (Preparation of PTFE aqueous dispersion B)

Using the ammonium salt of the perfluoroethercarboxylic acid A, a PTFE aqueous dispersion B was obtained by a known emulsion polymerization method, a known ion exchange treatment method, and a known phase separation and concentration method. The obtained PTFE aqueous dispersion had a solid concentration of 60% by mass and a standard specific gravity of 2.200. The content of the fluorine-containing surfactant (perfluoroethercarboxylic acid A) in

the PTFE aqueous dispersion B was 650 ppb.

Preparation Example 5 (Preparation of FEP aqueous dispersion B)

Using the ammonium salt of the perfluoroethercarboxylic acid A, an FEP aqueous dispersion B was obtained by a known emulsion polymerization method, a known ion exchange treatment method, and a known phase separation and concentration method. The obtained FEP aqueous dispersion had a solid concentration of 54% by mass and an MFR of 5 g/10 min.

Preparation Example 6 (Preparation of PFA aqueous dispersion B)

Using the ammonium salt of the perfluoroethercarboxylic acid A, a PFA aqueous dispersion B was obtained by a known emulsion polymerization method, a known ion exchange treatment method, and a known phase separation and concentration method. The obtained PFA aqueous dispersion had a solid concentration of 50% by mass and an MFR of 29 g/10 min.
In addition, various materials listed below were used in each of Examples and Comparative Examples:

depolymerizable acrylic resin emulsion: butyl methacrylate resin, average particle size 0.3 μm, content of butyl methacrylate resin 40% by mass;
50 mass% aqueous solution of nonionic surfactant: 50 mass% aqueous solution of polyoxyethylene alkyl ether;
hydrocarbon-based solvent: mixture of C10-12 aliphatic saturated hydrocarbons
polyimide-amide resin aqueous dispersion: aqueous dispersion of polyamide-imide resin varnish prepared in conformity with Examples described in Japanese Patent Laid-Open No. 2015-127142;
carbon black pigment millbase (solid concentration 20% by mass): aqueous black pigment paste made by grinding commercially available carbon black pigment (average particle size 100 nm or less) with nonionic surfactant and water using sand mill and glass beads as dispersive medium;
thickener: methyl cellulose; and
leveling agent: acetylene glycol.

Example 1

The following components were stirred and mixed, thereby obtaining a topcoat coating material composition:

PTFE aqueous dispersion A (solid concentration 60% by mass) 70.0 parts;
depolymerizable acrylic resin emulsion 12.6 parts;
50 mass% aqueous solution of nonionic surfactant 7.9 parts;
glycerin 3.1 parts;
hydrocarbon-based solvent 1.3 parts; and
water 5.1 parts.

The contents of the polymer (I), fluororesin, nonionic surfactant, and ammonium lauryl sulfate in the obtained topcoat coating material composition were calculated from the amounts of the various materials compounded. In addition, the viscosity, solid concentration, and stability retention time were measured for the obtained topcoat coating material composition. The results are shown in Table 2. The content of the polymer A was 504 ppm by mass.

Example 2

The following components were stirred and mixed, thereby obtaining a topcoat coating material composition:

PTFE aqueous dispersion A (solid concentration 60% by mass) 67.0 parts;
FEP aqueous dispersion A (solid concentration 54% by mass) 3.0 parts;
depolymerizable acrylic resin emulsion 12.6 parts;
50 mass% aqueous solution of nonionic surfactant 7.9 parts;
glycerin 3.1 parts;
hydrocarbon-based solvent 1.3 parts; and
water 5.1 parts.

Calculation and measurement were carried out in the same manner as in Example 1 for the obtained topcoat

coating material composition. The results are shown in Table 2.

Example 3

The following components were stirred and mixed, thereby obtaining a topcoat coating material composition:

PTFE aqueous dispersion A (solid concentration 60% by mass) 67.0 parts;
PFA aqueous dispersion A (solid concentration 50% by mass) 3.0 parts;
depolymerizable acrylic resin emulsion 12.6 parts;
50 mass% aqueous solution of nonionic surfactant 7.9 parts;
glycerin 3.1 parts;
hydrocarbon-based solvent 1.3 parts; and
water 5.1 parts.

Calculation and measurement were carried out in the same manner as in Example 1 for the obtained topcoat coating material composition. The results are shown in Table 2.

Example 4

The following components were stirred and mixed, thereby obtaining a topcoat coating material composition:

FEP aqueous dispersion A (solid concentration 54% by mass) 78.0 parts;
50 mass% aqueous solution of nonionic surfactant 7.9 parts;
glycerin 3.1 parts;
hydrocarbon-based solvent 1.3 parts; and
water 9.7 parts.

Calculation and measurement were carried out in the same manner as in Example 1 for the obtained topcoat coating material composition. The results are shown in Table 2.

Example 5

The following components were stirred and mixed, thereby obtaining a topcoat coating material composition:

PFA aqueous dispersion A (solid concentration 50% by mass) 84.0 parts;
50 mass% aqueous solution of nonionic surfactant 7.9 parts;
glycerin 3.1 parts;
hydrocarbon-based solvent 1.3 parts; and
water 3.7 parts.

Calculation and measurement were carried out in the same manner as in Example 1 for the obtained topcoat coating material composition. The results are shown in Table 2.

Comparative Example 1

A topcoat coating material composition was obtained in the same manner as in Example 1, except that 70.0 parts of the PTFE aqueous dispersion B was used instead of 70.0 parts of the PTFE aqueous dispersion A. Calculation and measurement were carried out in the same manner as in Example 1 for the obtained topcoat coating material composition. The results are shown in Table 2. The content of the perfluoroethercarboxylic acid A in the obtained topcoat coating material composition was 455 ppb.

Comparative Example 2

A topcoat coating material composition was obtained in the same manner as in Comparative Example 1, except that the amount of the PTFE aqueous dispersion B added was changed from 70.0 parts to 67.0 parts and that 3.0 parts of the FEP aqueous dispersion B was further added. Calculation and measurement were carried out in the same manner as in Example 1 for the obtained topcoat coating material composition. The results are shown in Table 2.

Comparative Example 3

A topcoat coating material composition was obtained in the same manner as in Comparative Example 1, except that the amount of the PTFE aqueous dispersion B added was changed from 70.0 parts to 67.0 parts and that 3.0 parts of the PFA aqueous dispersion B was further added. Calculation and measurement were carried out in the same manner as in Example 1 for the obtained topcoat coating material composition. The results are shown in Table 2.

[Table 2]

Table 2

| | Unit | Example 1 | Example 2 | Example 3 | Example 4 | Example 5 | Comparative Example 1 | Comparative Example 2 | Comparative Example 3 |
|---|---|---|---|---|---|---|---|---|---|
| Formulation of topcoat coaling material composition | | | | | | | | | |
| PTFE aqueous dispersion A | % by mass | 70.0 | 67.0 | 67.0 | | | | | |
| PTFE aqueous dispersion B | % by mass | | | | | | 70.0 | 67.0 | 67.0 |
| FEP aqueous dispersion A | % by mass | | 3.0 | | 78.0 | | | | |
| FEP aqueous dispersion B | % by mass | | | | | | | 3.0 | |
| PFA aqueous dispersion A | % by mass | | | 3.0 | | 84.0 | | | |
| PFA aqueous dispersion B | % by mass | | | | | | | | 3.0 |
| Depolymerizable acrylic resin emulsion | % by mass | 12.6 | 12.6 | 12.6 | | | 12.6 | 12.6 | 12.8 |
| 50 mess% aqueous solution of nonionic surfactant | % by mass | 7.9 | 7.9 | 7.9 | 7.9 | 7.9 | 7.9 | 7.9 | 7.9 |
| Glycerin | % by mass | 3.1 | 3.1 | 3.1 | 3.1 | 3.1 | 3.1 | 3.1 | 3.1 |
| Hydrocarbon-based solvent | % by mass | 1.3 | 1.3 | 1.3 | 1.3 | 1.3 | 1.3 | 1.3 | 1.3 |
| Water | % by mass | 5.1 | 5.1 | 5.1 | 9.7 | 3.7 | 5.1 | 5.1 | 5.1 |
| Total | % by mass | 100.0 | 100.0 | 100.0 | 100.0 | 100.0 | 100.0 | 100.0 | 100.0 |

(continued)

| Content in topcoat coating material composition | | | | | | | | | | |
|---|---|---|---|---|---|---|---|---|---|---|
| Fluororesin | | % by mass | 42.0 | 41.8 | 41.7 | 42.1 | 42.0 | 42.0 | 41.8 | 41.7 |
| | PTFE | % by mass | 42.0 | 40.2 | 40.2 | | | 42.0 | 40.2 | 40.2 |
| | FEP | % by mass | | 1.8 | | 42.1 | | | 1.6 | |
| | PFA | % by mass | | | 1.5 | | 42.0 | | | 1.5 |
| Nonionic surfactant | | % by mass | 6.3 | 6.3 | 8.3 | 6.3 | 8.3 | 6.3 | 6.3 | 8.3 |
| Ammonium lauryl sulfate | | ppm by mass | 210 | 200 | 200 | 200 | 200 | 210 | 200 | 200 |
| Evaluation | | | | | | | | | | |
| Viscosity | | mPa·s | 290 | 298 | 283 | 368 | 205 | 280 | | 270 |
| Solid concentration | | % by mass | 42.0 | 41.8 | 41.7 | 42.1 | 42.0 | 42.0 8 | 282 41.8 | 41.7 |
| Stability retention time | | | 18 | 21 | 19 | > 30 | > 30 | | 8 | 7 |

Example 6

The following components were stirred and mixed, thereby obtaining a primer coating material composition:

PTFE aqueous dispersion A (solid concentration 60% by mass) 40.0 parts;
polyamide-imide resin aqueous dispersion 39.0 parts;
50 mass% aqueous solution of nonionic surfactant 8.0 parts;
carbon black pigment millbase (solid concentration 20% by mass) 3.6 parts;
thickener 7.0 parts;
leveling agent 1.0 parts; and
water 1.4 parts.

Calculation and measurement were carried out in the same manner as in Example 1 for the obtained primer coating material composition. The results are shown in Table 3. The content of the polymer A was 288 ppm by mass.

Example 7

The following components were stirred and mixed, thereby obtaining a primer coating material composition:

PTFE aqueous dispersion A (solid concentration 60% by mass) 36.0 parts;
FEP aqueous dispersion A (solid concentration 54% by mass) 4.0 parts;
polyamide-imide resin aqueous dispersion 39.0 parts;
50 mass% aqueous solution of nonionic surfactant 8.0 parts;
carbon black pigment millbase (solid concentration 20% by mass) 3.6 parts;
thickener 7.0 parts;
leveling agent 1.0 parts; and
water 1.4 parts.

Calculation and measurement were carried out in the same manner as in Example 1 for the obtained primer coating material composition. The results are shown in Table 3.

Example 8

The following components were stirred and mixed, thereby obtaining a primer coating material composition:

PTFE aqueous dispersion A (solid concentration 60% by mass) 27.0 parts;
FEP aqueous dispersion A (solid concentration 54% by mass) 13.0 parts;
polyamide-imide resin aqueous dispersion 39.0 parts;
50 mass% aqueous solution of nonionic surfactant 8.0 parts;
carbon black pigment millbase (solid concentration 20% by mass) 3.6 parts;
thickener 7.0 parts;
leveling agent 1.0 parts; and
water 1.4 parts.

Calculation and measurement were carried out in the same manner as in Example 1 for the obtained primer coating material composition. The results are shown in Table 3.

Comparative Example 4

A primer coating material composition was obtained in the same manner as in Example 6, except that 40.0 parts of the PTFE aqueous dispersion B was used instead of 40.0 parts of the PTFE aqueous dispersion A. Calculation and measurement were carried out in the same manner as in Example 1 for the obtained primer coating material composition. The results are shown in Table 3. The content of the perfluoroethercarboxylic acid A in the obtained primer coating material composition was 260 ppb.

Comparative Example 5

A primer coating material composition was obtained in the same manner as in Comparative Example 4, except

that the amount of the PTFE aqueous dispersion B added was changed from 40.0 parts to 36.0 parts and that 4.0 parts of the FEP aqueous dispersion B was further added. Calculation and measurement were carried out in the same manner as in Example 1 for the obtained primer coating material composition. The results are shown in Table 3.

Comparative Example 6

A primer coating material composition was obtained in the same manner as in Comparative Example 4, except that the amount of the PTFE aqueous dispersion B added was changed from 40.0 parts to 27.0 parts and that 13.0 parts of the FEP aqueous dispersion B was further added. Calculation and measurement were carried out in the same manner as in Example 1 for the obtained primer coating material composition. The results are shown in Table 3.

[Table 3]

Table 3

| | Unit | Example 8 | Example 7 | Example 8 | Comparative Example 4 | Comparative Example 5 | Comparative Example 6 |
|---|---|---|---|---|---|---|---|
| Formulation of primer coating material composition | | | | | | | |
| PTFE aqueous dispersion A | % by mass | 40.0 | 36.0 | 27.0 | | | |
| PTFE aqueous dispersion B | % by mass | | | | 40.0 | 36.0 | 27.0 |
| FEP aqueous dispersion A | % by mass | | 4.0 | 13.0 | | | |
| FEP aqueous dispersion B | % by mass | | | | | 4.0 | 13.0 |
| Polyamide-imide resin aqueous dispersion | % by mass | 39.0 | 39.0 | 39.0 | 39.0 | 39.0 | 39.0 |
| 50 mass% aqueous solution of nonionic surfactant | % by mass | 8.0 | 8.0 | 8.0 | 8.0 | 8.0 | 8.0 |
| Carbon black pigment millbase | % by mass | 3.6 | 3.6 | 3.6 | 3.6 | 3.6 | 3.6 |
| Thickener | % by mass | 7.0 | 7.0 | 7.0 | 7.0 | 7.0 | 7.0 |
| Leveling agent | % by mass | 1.0 | 1.0 | 1.0 | 1.0 | 1.0 | 1.0 |
| Water | % by mass | 1.4 | 1.4 | 1.4 | 1.4 | 14 | 14 |
| Total | % by mass | 100.0 | 100.0 | 100.0 | 100.0 | 100.0 | 100.0 |

(continued)

| | | | | | | | | | |
|---|---|---|---|---|---|---|---|---|---|
| Content in primer coating material composition | | | | | | | | | |
| | Fluororesin | | % by mass | 24.0 | 23.8 | 232 | 24.0 | 23.8 | 23.2 |
| | | PTFE FEP | % by mass | 24.0 | 21.6 | 16.2 | 24.0 | 21.6 | 162 |
| | | | % by mass | | 22 | 7.0 | | 22 | 7.0 |
| | Nonionic surfactant | | % by mass | 5.3 | 5.4 | 5.4 | 5.3 | 54 | 5.4 |
| | Ammonium lauryl sulfate | | ppm by mass | 120 | 108 | 81 | 120 | 108 | 81 |
| Evaluation | | | | | | | | | |
| | | | mPa·s | 160 | 160 | 158 | 165 | 161 | 154 |
| | solid concentration | | % by mass | 32.7 | 32.5 | 31.9 | 32.7 | 32.5 | 31.9 |
| | Stability retention time | | minutes | 12 | 13 | 12 | 7 | 6 | 6 |

## Claims

1. A coating material composition comprising a fluororesin, a polymer (I) containing a polymerization unit (I) derived from a monomer represented by general formula (I) below, and an aqueous medium,
wherein a content of the polymer (I) is 2,000 ppm by mass or less based on the coating material composition:

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

2. The coating material composition according to claim 1, having a viscosity of 100 mPa·s or more and 1,000 mPa·s or less.

3. The coating material composition according to claim 1 or 2, wherein a content of the fluororesin is 15.0% by mass or more and 52.0% by mass or less based on the coating material composition.

4. The coating material composition according to any one of claims 1 to 3, wherein the fluororesin is at least one selected from the group consisting of a polytetrafluoroethylene, a tetrafluoroethylene/hexafluoropropylene copolymer, a tetrafluoroethylene/perfluoro(alkyl vinyl ether) copolymer, an ethylene/tetrafluoroethylene copolymer, and an ethylene/chlorotrifluoroethylene copolymer.

5. The coating material composition according to any one of claims 1 to 4, having a stability retention time as measured by a stirring test of 10 minutes or longer.

6. The coating material composition according to any one of claims 1 to 5, wherein a content of the polymer (I) is 0.1 ppm by mass or more based on the coating material composition.

7. The coating material composition according to any one of claims 1 to 6, further comprising a nonionic surfactant.

8. A coating material composition comprising a fluororesin and an aqueous medium, and having

   a stability retention time as measured by a stirring test of 10 minutes or longer and
   a viscosity of 50 mPa·s or more and 1,000 mPa·s or less.

9. The coating material composition according to claim 8, wherein a content of the fluororesin is 15.0% by mass or more and 52.0% by mass or less based on the coating material composition.

10. The coating material composition according to claim 8 or 9, comprising, as the fluororesin, at least one selected from the group consisting of a polytetrafluoroethylene, a tetrafluoroethylene/hexafluoropropylene copolymer, and a tetrafluoroethylene/perfluoro(alkyl vinyl ether) copolymer.

11. The coating material composition according to claim 8 or 9, comprising, as the fluororesin, at least a polytetrafluoroethylene.

12. The coating material composition according to claim 11, wherein a content of the polytetrafluoroethylene in the coating material composition is 60% by mass or more based on the fluororesin.

13. The coating material composition according to claim 8 or 9, wherein the coating material composition comprises, as the fluororesin, only a tetrafluoroethylene/hexafluoropropylene copolymer, and a content of the fluororesin is 30.0% by mass or more and 50.0% by mass or less based on the coating material composition.

14. The coating material composition according to claim 8 or 9, wherein the coating material composition comprises, as the fluororesin, only a tetrafluoroethylene/perfluoro(alkyl vinyl ether) copolymer, and a content of the fluororesin is 30.0% by mass or more and 50.0% by mass or less based on the coating material composition.

15. A coating material composition comprising a fluororesin, a nonionic surfactant, an anionic hydrocarbon-based surfactant, and an aqueous medium, and
being substantially free from a fluorine-containing compound containing a hydrophilic group.

**16.** The coating material composition according to claim 15, wherein the fluorine-containing compound containing a hydrophilic group is an anionic fluorine-containing surfactant containing fluorine in which an anionic moiety has a molecular weight of 800 or less.

**17.** The coating material composition according to claim 15 or 16, wherein a content of the fluorine-containing compound containing a hydrophilic group is 100 ppb by mass or less.

**18.** The coating material composition according to any one of claims 15 to 17, wherein the fluorine-containing compound containing a hydrophilic group is a compound represented by any of the following formulas:

$H(CF_2)_7COOM$;

$F(CF_2)_7COOM$;

$F(CF_2)_5COOM$;

$H(CF_2)_6COOM$;

$CF_3O(CF_2)_3OCHFCF_2COOM$;

$C_3F_7OCF(CF_3)CF_2OCF(CF_3)COOM$;

$CF_3CF_2CF_2OCF(CF_3)COOM$;

$CF_3CF_2OCF_2CF_2OCF_2COOM$;

$C_2F_5OCF(CF_3)CF_2OCF(CF_3)COOM$;

$CF_3OCF(CF_3)CF_2OCF(CF_3)COOM$;

$CF_2ClCF_2CF_2OCF(CF_3)CF_2OCF_2COOM$;

$CF_2ClCF_2CF_2OCF_2CF(CF_3)OCF_2COOM$;

$CF_2ClCF(CF_3)OCF(CF_3)CF_2OCF_2COOM$;

$CF_2ClCF(CF_3)OCF_2CF(CF_3)OCF_2COOM$;

and

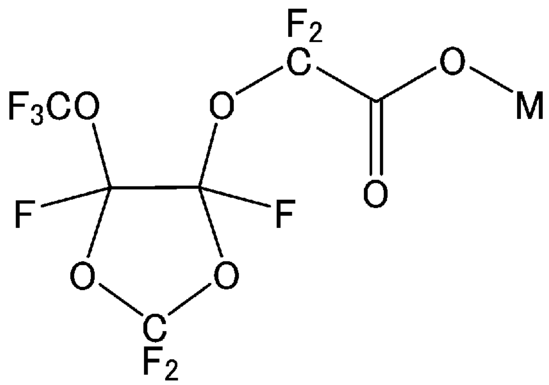

wherein M is H, a metal atom, $NR^7_4$, imidazolium optionally having a substituent, pyridinium optionally having a

substituent, or phosphonium optionally having a substituent.

**19.** The coating material composition according to any one of claims 15 to 18, wherein a content of the fluororesin is 15.0% by mass or more and 52.0% by mass or less based on the coating material composition.

**20.** The coating material composition according to any one of claims 15 to 19, comprising, as the fluororesin, at least one selected from the group consisting of a polytetrafluoroethylene, a tetrafluoroethylene/hexafluoropropylene copolymer, and a tetrafluoroethylene/perfluoro(alkyl vinyl ether) copolymer.

**21.** The coating material composition according to any one of claims 15 to 19, comprising, as the fluororesin, at least a polytetrafluoroethylene.

**22.** The coating material composition according to claim 21, wherein a content of the polytetrafluoroethylene in the coating material composition is 60% by mass or more based on the fluororesin.

**23.** The coating material composition according to any one of claims 1 to 22, further comprising a film forming agent.

**24.** The coating material composition according to any one of claims 1 to 23, further comprising a binder resin, wherein the binder resin is at least one selected from the group consisting of polyamide-imide, polyimide, polyethersulfone, and polyphenylene sulfide.

**25.** A coating film obtained by applying the coating material composition according to any one of claims 1 to 24.

**26.** A laminated product comprising the coating film according to claim 25.

**27.** A coated article comprising the coating film according to claim 25 or the laminated product according to claim 26.

Figure 1

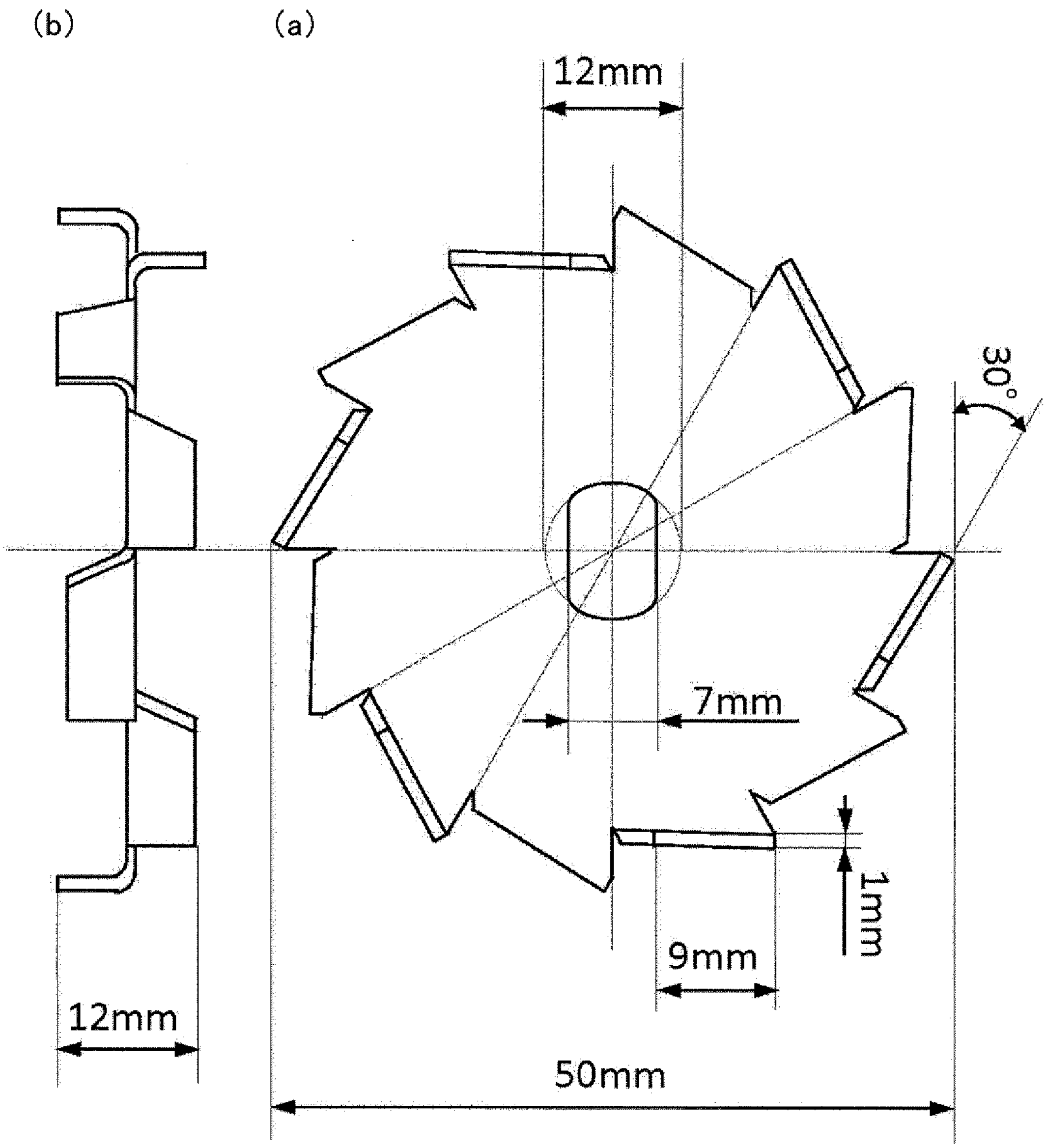

## INTERNATIONAL SEARCH REPORT

International application No.
**PCT/JP2022/010512**

**A. CLASSIFICATION OF SUBJECT MATTER**

***C08F 14/18***(2006.01)i; ***C08F 259/08***(2006.01)i; ***C08F 214/18***(2006.01)i; ***C08L 27/12***(2006.01)i; ***C08L 81/02***(2006.01)i; ***C08L 81/06***(2006.01)i; ***C09D 127/12***(2006.01)i; ***C08L 79/08***(2006.01)i; ***C09D 7/63***(2018.01)i; ***C09D 7/65***(2018.01)i
FI: C09D127/12; C09D7/63; C09D7/65; C08L27/12; C08L79/08; C08L81/06; C08L81/02; C08F259/08; C08F14/18; C08F214/18

According to International Patent Classification (IPC) or to both national classification and IPC

**B. FIELDS SEARCHED**

Minimum documentation searched (classification system followed by classification symbols)

C08F14/18; C08F259/08; C08F214/18; C08L27/12; C08L81/02; C08L81/06; C09D127/12; C08L79/08; C09D7/63; C09D7/65

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2019/168183 A1 (DAIKIN IND LTD) 06 September 2019 (2019-09-06) claims, paragraphs [0296], [0465]-[0467], [0480], [0501]-[0549], etc. | 1-27 |
| X | WO 2020/105651 A1 (DAIKIN IND LTD) 28 May 2020 (2020-05-28) claims, paragraphs [0444]-[0448], [0486]-[0543], etc. | 1-27 |
| X | WO 2017/094798 A1 (ASAHI GLASS CO LTD) 08 June 2017 (2017-06-08) claims, paragraphs [0004], [0010]-[0015], [0019]-[0027], [0036], [0039]-[0051], etc. | 1-27 |
| A | JP 2008-545873 A (3M INNOVATIVE PROPERTIES COMPANY) 18 December 2008 (2008-12-18) claims, examples, etc. | 1-27 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 April 2022** | **17 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/010512**

| Patent document cited in search report | Publication date (day/month/year) | Patent family member(s) | Publication date (day/month/year) |
|---|---|---|---|
| WO 2019/168183 A1 | 06 September 2019 | US 2020/0392266 A1<br>claims, paragraphs [0553], [0725], [0881]-[0977], etc.<br>EP 3760649 A1<br>CN 111836835 A | |
| WO 2020/105651 A1 | 28 May 2020 | CN 113039213 A | |
| WO 2017/094798 A1 | 08 June 2017 | US 2018/0298160 A1<br>claims, paragraphs [0004], [0018]-[0026], [0039]-[0046], [0082]-[0087], [0097]-[0118], etc.<br>EP 3385326 A1 | |
| JP 2008-545873 A | 18 December 2008 | WO 2006/135825 A1<br>claims, examples<br>US 2007/0004848 A1<br>CN 101193923 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4853081 B
- JP 2015127142 A
- WO 2019168183 A
- WO 2020218620 A
- JP 2005527652 A
- WO 2014099453 A
- WO 2010075497 A
- WO 2010075496 A
- WO 2011008381 A
- WO 2009055521 A
- WO 1987007619 A
- JP 61293476 A
- WO 2010075494 A
- WO 2010075359 A
- WO 2012082454 A
- WO 2006119224 A
- WO 2013085864 A
- WO 2012082707 A
- WO 2012082703 A
- WO 2012082451 A
- WO 2006135825 A
- WO 2004067588 A
- WO 2009068528 A
- JP 2004075978 A
- JP 2001226436 A
- WO 1992017635 A
- WO 2014069165 A
- JP 11181009 A
- WO 2011014715 A
- US 6841616 B
- WO 2013146950 A
- WO 2013146947 A
- US 20070015864
- US 20070015865
- US 20070015866
- US 20070276103
- US 20070117914
- US 2007142541
- US 20080015319
- US 3250808 A
- US 3271341 A
- JP 2003119204 A
- WO 2005042593 A
- WO 2008060461 A
- WO 2007046377 A
- WO 2007119526 A
- WO 2007046482 A
- WO 2007046345 A
- US 20140228531
- WO 2013189824 A
- WO 2013189826 A


### Non-patent literature cited in the description


- **ROMPP.** Lexikon Chemie. Georg Thieme Verlag, 1999
- **R. M. HILL.** Silicone Surfactants. Marcel Dekker, Inc,
- *Polym. Eng. Soi.,* 1966, vol. 6, 273
- *Plast. Massy.,* 1971, vol. 75, 48
- Degradation of High Molecular Materials. Corona Publishing Co., Ltd, 1958, 144